# EUROPEAN PATENT SPECIFICATION

(11) **EP 1 542 125 B1**
(45) Date of publication and mention of the grant of the patent: **09.07.2008**
(21) Application number: 04029264.1
(22) Date of filing: 09.12.2004
(51) Int. Cl.: G06F 9/445

(54) **Information processing apparatus, program recovery method, and recording medium storing a program for program recovery**
Informationsverarbeitungsvorrichtung, Verfahren zur Programm-Recovery, und ein Aufzeichnungsmedium für ein Programm zur Programm-Recovery
Dispositif de traitement d'information, procédé de récupération des logiciels, et un support d'enregistrement pour programme de récupération des logiciels

(30) Priority: 10.12.2003 JP 2003411679; 07.12.2004 JP 2004354412
(43) Date of publication of application: 15.06.2005
(73) Proprietor: Ricoh Company, Ltd., Tokyo 143-8555 (JP)
(72) Inventor: Kawaura, Hisanori, Yokohama-shi Kanagawa (JP); Yoshida, Fumiyuki, Yokohama-shi Kanagawa (JP)
(74) Representative: Schwabe - Sandmair - Marx

(56) References cited:
- EP-A- 1 292 102
- US-A1- 2003 044 185
- US-A1- 2003 188 303
- US-B1- 6 205 513

## Description

### BACKGROUND OF THE INVENTION

### 1. Field of the Invention

The present invention relates to an information processing apparatus, a program recovery method, and a recording medium storing a program for program recovery.

### 2. Description of the Related Art

Conventionally, apparatuses such as a printer, a copier, a facsimile machine, and a scanner are provided generally as separate housings. However in recent years, image forming apparatuses that contain the functions of these apparatuses in a single housing have been known. According to these image forming apparatuses, a display part, a printing part, and an image capturing part are provided in a single housing, and four types of software corresponding to a printer, a copier, a scanner, and a facsimile machine are provided. By switching the software, the image forming apparatuses operate as a printer, a copier, a scanner, and a facsimile machine

In these conventional image forming apparatuses, a controller board including a non-rewritable ROM (Read Only Memory) storing software corresponding to printer, copier, scanner, and facsimile functions is provided, so that multiple functions are realized.

Accordingly, in the case of changing or adding a function, the conventional image forming apparatuses require the hardware operations of preparing a new ROM storing a program reflecting the function change or addition, and replacing the current ROM with the new one, thus requiring excessive efforts in updating.

Accordingly, in recent image forming apparatuses, a program including printer, copier, scanner, and facsimile functions is stored in an electrically rewritable ROM such as a flash memory, so that multiple functions are realized as complex services.

According to these image forming apparatuses, in the case of changing or adding a function, a program subjected to the function change or addition is recorded on a flash card as updating data, and the image forming apparatuses are rebooted with the flash card being inserted into their flash card interfaces.

At this point, the image forming apparatuses read out the updating data from the flash card by the updating program, so that the program recorded on the flash memory is updated with the read-out updating data. Thus, the recent image forming apparatuses update a ROM in terms of software using the electrical rewritability of a flash memory.

For instance, Japanese Laid-Open Patent Application No. 2001-268306 discloses a technology whose object is to respond flexibly to the change or addition of software.

Japanese Laid-Open Patent Application No. 2002-082806 discloses an image forming apparatus that includes hardware resources used in image formation processing, such as a display part, a printing part, and an image capturing part; multiple applications performing corresponding operations characteristic of respective printer, copier, scanner, and facsimile user services; and a platform composed of control services'provided between the applications and the hardware resources, the control services managing hardware resources required commonly by at least two of the applications, controlling their operations, and performing image formation processing.

The user services refer to image formation-related services to be provided to users. The control services refer to services that provide image formation-related hardware resources to applications.

This image forming apparatus includes a platform composed of control services provided between the applications and the hardware resources, the control services managing hardware resources required commonly by at least two of the applications controlling their operations, and performing image formation processing. Accordingly, compared with a normal image forming apparatus, this image forming apparatus makes it easy to perform software development such as future addition of applications or control services, and enjoys high extensibility. Therefore, the necessity of updating a program by adding or changing a function is extremely high in this image forming apparatus compared with the conventional image forming apparatus.

For instance, an image forming apparatus may be introduced and operated based on a contract that allows use of only printer, copier, and scanner functions. In this case, the image forming apparatus may be used by adding a facsimile function thereto by changing the contract. This addition of the facsimile function requires addition of an application for facsimile and accordingly, addition or change of the platform.

In many of such image forming apparatuses having multiple applications and a platform performing common processing, particularly, such a request to change or add a function may be made irregularly and frequently. Therefore, the conventional program updating method that obtains a flash card every time a program is updated, and updates the.program stored in a ROM by reading updating data from the flash card cannot respond quickly to a need for program updating that arises irregularly and frequently. Further, according to the program updating method using a flash card, an update operation is very complicated, so that there is the problem of poor operational efficiency.

With a view to solving this problem, an image forming apparatus and a program updating method that receive program updating data via a network and update a program using the received updating data has been proposed (Japanese Laid-Open Patent Application 2003-182191).

However, in the case of the above-described image forming apparatus that receives program updating data via a network and updates a program using the received updating data, for instance, there is a problem in that if an electric power failure, unplugging, or a human-induced power-off occurs during the updating of the program, some or all of the functions of the image forming apparatus become disabled when the image forming apparatus is turned on next time.

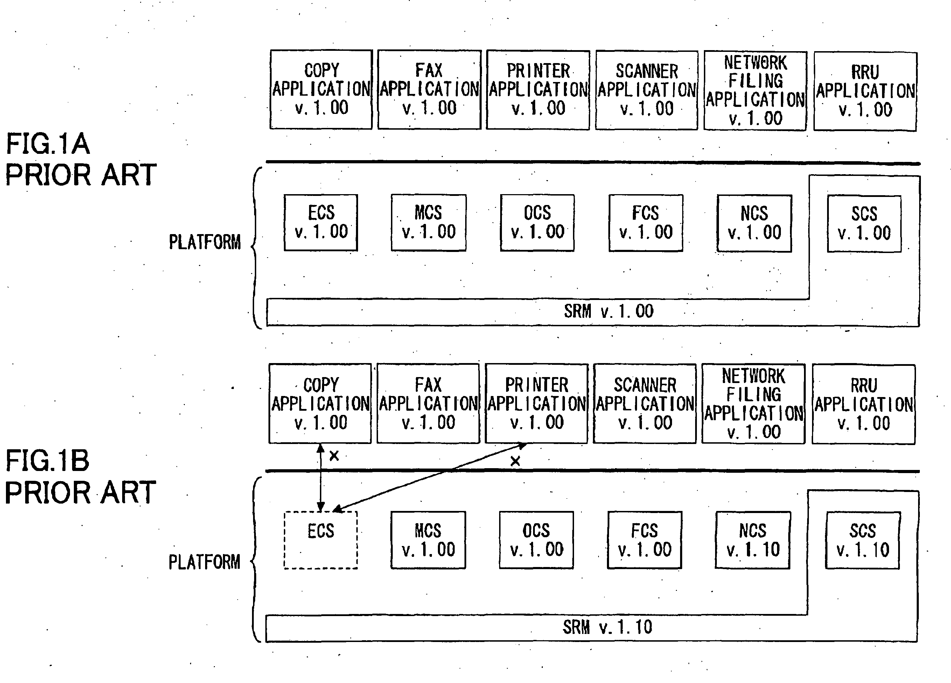

A description is given below, with reference to FIGS. 1A and 1B, of a case where some of the functions of an image forming apparatus have been disabled after interruption of the updating of a program.

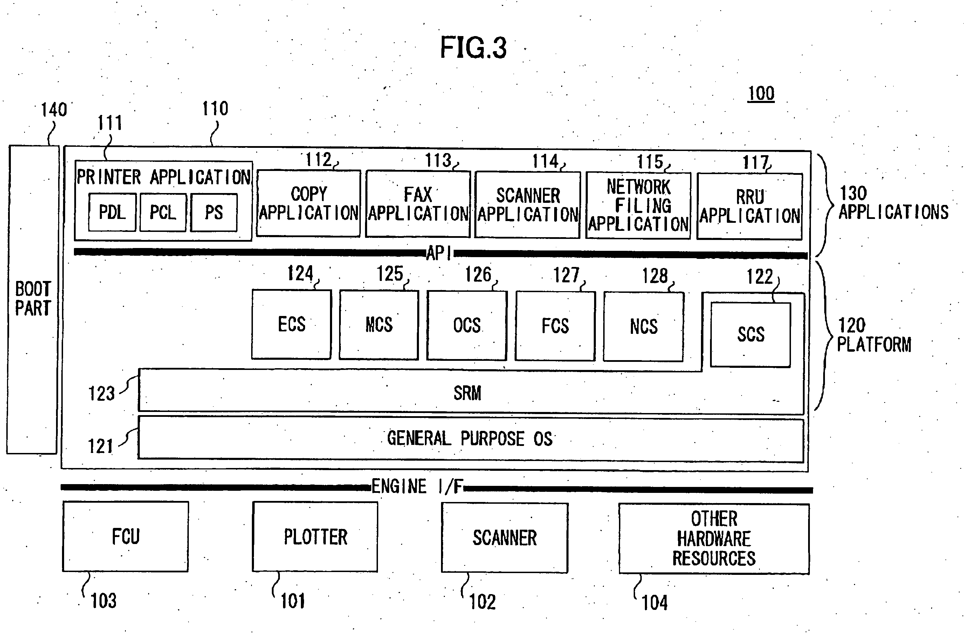

A detailed description of the configuration of the image forming apparatus is given below with reference to FIG. 3, etc.

FIG. 1A shows a state of the image forming apparatus before the updating of a platform. FIG. 1B shows a state of the image forming apparatus after being rebooted after, for instance, a human-induced power-off during the updating of the platform.

Compared with FIG. 1A, in FIG. 1B, programs have been updated from v.1.00 to v.1.10 in an SRM, an SCS, and an NCS. However, the image forming apparatus has been turned off during the updating of, for instance, a program relating.to an ECS, which is one of the processes forming the platform. Therefore in FIG. 1B, the ECS has not been started, so that copy and printer applications have been disabled.

Further, in the above-described image forming apparatus that receives program updating data via a network and updates a program using the received updating data, there is also a problem in that the image forming apparatus cannot be restored easily when some or all of the functions of the image forming apparatus subjected to program updating have been disabled or the operation-thereof has been destabilized because of the combination of the updated programs and those that have not been updated

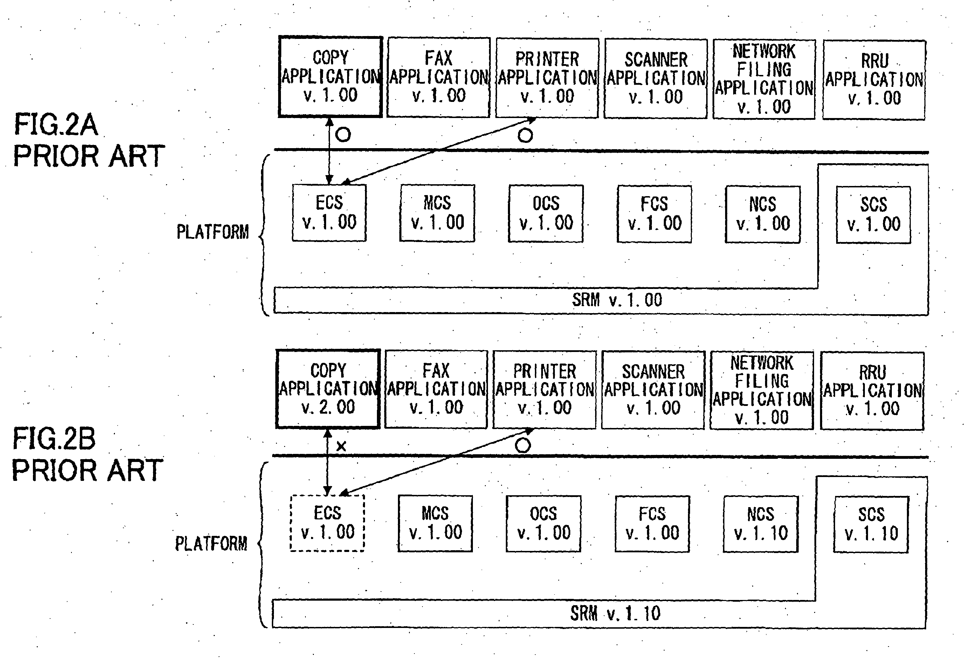

A description is given, with reference to FIGS. 2A and 2B, of a case where some of the functions of the image forming apparatus have een disabled because of version mismatching.

FIG. 2A shows a state of the image forming apparatus before the updating of the copy application FIG. 2B shows a state of the image forming apparatus where the copy application is prevented from operating normally because of the combination of a version v.2.00 of the copy application and a version v.1.00 of the ECS.

EP 1 292 102 A2 discloses an image forming apparatus which stores programs for carrying out processes. A start information acquiring section acquires starting information of each of the programs. A module identification information acquiring section acquires module identification information of at least one program arbitrary program from a recording medium which is recorded with updating data for a plurality of programs. An updating data selection section selects the updating data corresponding to the at least one arbitrary program from the recording medium. A platform manages controls services and includes a system resource manager which carries out arbitration of the acquisition requests from the control services and a general purpose operating system. A ROM monitoring section starts the general purpose operating system.

US2003/0188303 A1 disclosed a method apparatus for reprogramming engine controllers. The methods comprises determining the version of the current software in the engine controller, identifying one or more data blocks of upgraded software associated with the current software and replacing portions of the current software with the data blocks of upgraded software. The apparatus maintains state information about its current operation. The state information is used to cause a disrupted operation to be automatically resumed the next time the apparatus is used. In case of interruption, the interrupted operation is repeated or continued. A restoring of stock engine control software may be instructed by a user.

US 2003/0044185 A1 pertains to an image forming apparatus and a program updating method that receive program updating data via a network and update a program using the received updating data.

It is an object of the present invention to improve updating of an image processing apparatus with received updating data and to reduce the risk of system failures during updating.

This object is achieved by the apparatus of claim 1 and the method of claim 15. Preferred embodiments of the present invention are determined in the dependent claims.

### SUMMARY OF THE INVENTION

An object of the present invention is to provide an information processing apparatus and a program recovery method that can solve a problem related to program updating and restore the apparatus and/or a program with ease, and a recording medium storing a program for such program recovery.

The afore mentioned object is sold by the subject matter of independent claims 1, 6, 16, 19 and 23. The dependent claims are directed to embodiments of advantage.

Advantageously, an image processing apparatus includes a program storage part configured to store a program; an updating data reception part configured to receive updating data related to the program stored in the program storage part; a program updating part configured to update the program stored in the program storage part based on the received updating data; an updating interruption determination part configured to determine presence or absence of interruption of the updating of the program by the program updating part in a previous operation of the information processing apparatus; an operating system starting part configured to start a corresponding operating system based on a result of the determination by the updating interruption determination part; and a program restoration part configured to restore the program stored in the program storage part.

Advantageously, an image processing apparatus includes a program storage part configured to store one or a plurality of programs; an updating data reception part configured to receive updating data related to a corresponding one or more of the programs stored in the program storage part; a program updating part configured to update the corresponding one or more of the programs stored in the program storage part based on the received updating data; a reboot determination part configured to determine presence or absence of rebooting of the information processing apparatus for restoring the programs stored in the program storage part in a previous operation of the information processing apparatus; an operating system starting part configured to start a corresponding operating system based on a result of the determination by the reboot determination part; and a program restoration part configured to restore the programs stored in the program storage part.

Advantageously, a program restoration method in an image processing apparatus includes an updating data reception part receiving updating data related to a program stored in a program storage part; and a program updating part updating the program stored in the program storage part based on the received updating data, the program restoration method including the steps of (a) determining presence or absence of interruption of the updating of the program by the program updating part in a previous operation of the information processing appararus; (b) starting a corresponding operating system based on a result of the determination by said step (a); and (c) restoring the program stored in the program storage part.

Advantageouly, a program restoration method in an image processing apparatus includes an updating data reception part receiving updating data related to a corresponding one or more of programs stored in a program storage part; and a program updating part updating the corresponding one or more of the programs stored in the program storage part based on the received updating data, the program restoration method including the steps of (a) determining presence or absence of rebooting of the information processing apparatus for restoring the programs stored in the program storage part in a previous operation of the information processing apparatus; (b) starting a corresponding.operating system based on a result of the determination by said step (a); and (c) restoring the programs stored in the program storage part.

Advantageously, a computer-readable recording medium stores a program for causing a computer to execute a program restoration method in an image processing apparatus including an updating data reception part receiving updating data related to a program stored in a program storage part; and a program updating part updating the program stored in the program storage part based on the received updating data, the program restoration method including the steps of (a) determining presence or absence of interruption of the updating of the program by the program updating part in a previous operation of the information processing apparatus; (b) starting a corresponding operating system based on a result of the determination by said step (a); and (c) restoring the program stored in the program storage part.

Advantageously, a computer-readable recording medium stores a program for causing a computer to execute a program restoration method in an image processing apparatus including an updating data reception part receiving updating data related to a corresponding one or more of programs stored in a program storage part; and a program updating part updating the corresponding one or more of the programs stored in the program storage part based on the received updating data, the program restoration method including the steps of (a) determining presence or absence of rebooting of the information processing apparatus for restoring the programs stored in the program storage part in a previous operation of the information processing apparatus; (b) starting a corresponding operating system based on a result of the determination by said step (a); and (c) restoring the programs stored in the program storage part.

According to the above-described inventions, a problem that occurs in relation to the updating of a program can be solved easily, so that an apparatus and/or the program can be restored.

### BRIEF DESCRIPTION OF THE DRAWINGS

Other objects, features and advantages of the present invention will become more apparent from the following detailed description when read in conjunction with the accompanying drawings, in which:
FIGS. 1A and 1B are diagrams for illustrating a case where part of the functions of an image forming apparatus is disabled after interruption of the updating of a program;
FIGS. 2A and 2B are diagrams for illustrating a case where part of the functions of the image forming apparatus is disabled because of version mismatching;
FIG. 3 is a block diagram showing a configuration of an image forming apparatus according to a first embodiment of the present invention;
FIG. 4 is a block diagram showing a hardware configuration of the multi-function apparatus according to the first embodiment of the present invention;
FIG. 5 is a diagram for illustrating an overall remote ROM updating operation according to the first embodiment of the present invention;
FIG. 6 is another diagram for illustrating the overall remote ROM updating operation according to the first embodiment of the present invention;
FIG. 7 is a diagram showing a data structure of a loaded (expanded) updating data packet received by the multi-function apparatus according to the first embodiment of the present invention;
FIG. 8 is a block diagram showing a configuration of a boot part of the multi-function apparatus according to the first embodiment of the present invention;
FIG. 9 is a block diagram showing a configuration of a ROM updating part of the multi-function apparatus according to the first embodiment of the present invention;
FIG. 10 is a block diagram showing another configuration of the multi-function apparatus according to the first embodiment of the present invention;
FIG. 11 is a flowchart for illustrating an OS switching operation at the time of booting according to the first embodiment of the present invention;
FIG. 12 is a flowchart for illustrating an updating data selection operation performed in the ROM updating mode thread of an SCS of the image forming apparatus according to the first embodiment of the present invention;
FIG. 13 is a flowchart for illustrating a ROM updating operation by a ROM updating part of the SCS according to the first embodiment of the present invention;
FIG. 14 is a flowchart for illustrating an updating data selection operation performed in the rescue mode thread of the SCS according to the first embodiment of the present invention;
FIG. 15 is a diagram for illustrating a memory structure according to the first embodiment of the present invention;
FIG. 16 is a diagram for illustrating a layout of updating interruption information in the case of storing the updating interruption information in an NVRAM space according to the first embodiment of the present invention;
FIG. 17 is a diagram for illustrating a directory and file configuration of an HDD of the multi-function apparatus according to the first embodiment of the present invention;
FIG. 18 is a diagram for illustrating another directory and file configuration of the HDD according to the first embodiment of the present invention;
FIG. 19 is a diagram showing a configuration of the contents of an updating interruption information file according to the first embodiment of the present invention;
FIG. 20 is a block diagram showing a configuration of the multi-function apparatus according to a second embodiment of the present invention;
FIG. 21 is a flowchart for illustrating an OS switching operation at the time of booting according to the second embodiment of the present invention;
FIG. 22 is a diagram showing a boot time screen according to the second embodiment of the present invention;
FIG. 23 is a flowchart for illustrating a ROM updating operation by the ROM updating part of the SCS according to the second embodiment of the present invention;
FIG. 24 is a diagram showing a restoration screen according to.the second embodiment of the present invention;
FIG. 25 is a diagram showing an error screen according to the second embodiment of the present invention;
FIG. 26 is a block diagram showing a configuration of the multi-function apparatus according to a third embodiment of the present invention;
FIG. 27 is a flowchart for illustrating an OS switching operation at the time of booting according to the third embodiment of the present invention;
FIGS. 28A through 28C are diagrams showing restoration menu screens according to the third embodiment of the present invention;
FIG. 29 is a flowchart for illustrating a maintenance contents flag check operation by the SCS according to the third embodiment of the present invention;
FIG. 30 is a diagram showing a reception standby screen according to the third embodiment of the present invention;
FIG. 31 is a flowchart for illustrating an updating data selection operation performed in the rescue mode thread of the SCS according to the third embodiment of the present invention;
FIG. 32 is a flowchart for illustrating an updating data selection operation performed in the ROM updating mode thread of the SCS according to the third embodiment of the present invention;
FIG. 33 is a flowchart for illustrating a ROM updating operation by the ROM updating part of the SCS according to the third embodiment of the present invention;
FIG. 34 is a flowchart for illustrating the operation of entering a rescue mode after normal booting according to the third embodiment of the present invention;
FIG. 35 is a diagram showing a screen after the normal booting according to the third embodiment of the present invention;
FIG. 36 is a diagram showing a screen for confirming whether to enter the rescue mode according to the third embodiment of the present invention;
FIG. 37 is a diagram for illustrating a layout of the updating interruption information in the case of storing the updating interruption information in the NVRAM space according to the third embodiment of the present invention;
FIG. 38 is a diagram for illustrating a directory and file configuration of the HDD according to the third embodiment of the present invention;
FIG. 39 is a diagram for illustrating the contents of the module information file of a normally operating factory default printer application according to the third embodiment of the present invention;
FIG. 40 is a flowchart for illustrating a ROM updating operation by the ROM updating part of the SCS according to a fourth embodiment of the present invention;
FIG. 41 is a flowchart for illustrating a maintenance contents flag check operation by the SCS according to a fifth embodiment of the present invention;
FIG. 42 is a diagram showing a forced restoration entry screen according to the fifth embodiment of the present invention;
FIG. 43 is a flowchart for illustrating the operation of entering a rescue mode after normal booting according to a sixth embodiment of the present invention;
FIG. 44 is a diagram showing a maintenance module list screen according to the sixth embodiment of the present invention;
FIG. 45 is a diagram showing a selected module confirmation screen according to the sixth embodiment of the present invention;
FIG. 46 is a flowchart for illustrating an updating data selection operation performed in the rescue mode thread of the SCS according to the sixth embodiment of the present invention;
FIG. 47 is a diagram for illustrating a layout of the updating interruption information in the case of storing the updating interruption information in the NVRAM space according to the sixth embodiment of the present invention;
FIG. 48 is a flowchart for illustrating a ROM updating operation by the ROM updating part of the SCS according to a seventh embodiment of.the present invention;
FIG. 49 is a diagram for illustrating a layout of the updating interruption information in the case of storing the updating interruption information in the NVRAM space according to the seventh embodiment of the present invention;
FIG. 50 is a diagram for illustrating a directory and file configuration of the HDD according to the seventh embodiment of the present invention;
FIG. 51 is a diagram for illustrating the contents of a log information file according to the seventh embodiment of the present invention;
FIGS. 52A through 52G are diagrams showing restoration menu screens according to the seventh embodiment of the present invention; and
FIG. 53 is a flowchart for illustrating an updating data selection operation performed in the rescue mode thread of the SCS according to the seventh embodiment of the present invention.

### DETAILED DESCRIPTION OF THE PREFERRED EMBODIMENTS

A description is given, with reference to the accompanying drawings, of embodiments of the present invention.

### [First Embodiment]

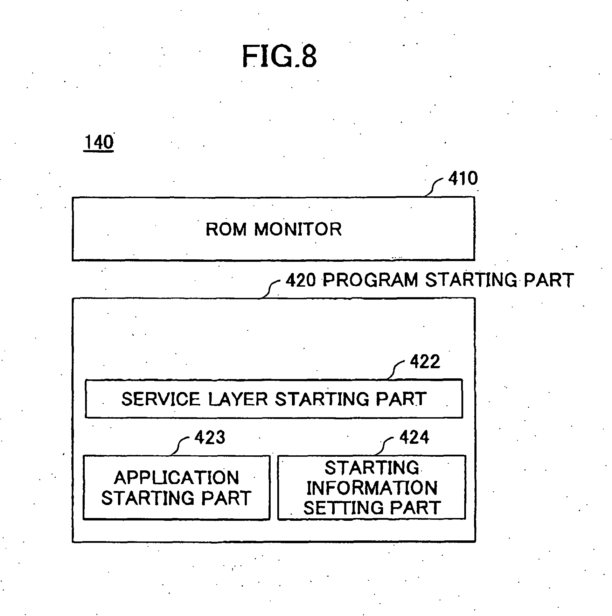

FIG. 3 is a block diagram showing a configuration of an image forming apparatus (hereinafter referred to as "multi-function apparatus") 100 (an information processing apparatus) according to a first embodiment of the present invention. FIG. 3 shows a case where a general purpose OS (Operating System) 121 is started by a ROM monitor 410 (FIG. 8).

Referring to FIG. 3, the multi-function apparatus 100 includes a plotter 101, a scanner 102, an FCU (Facsimile [FAX] Control Unit) 103, and other hardware resources 104. The multi-function apparatus 100 further includes a software group 110 and a multi-function apparatus boot part 140, which is started when power is turned on. The software group 110 includes the general purpose OS 121, a platform 120, and applications 130.

The boot part 140 is first started when the multi-function apparatus 100 is turned on. When no updating information is stored in below-described updating interruption information and/or when no maintenance flag is stored in the updating interruption information, the boot part 140 starts the general purpose OS 121, the platform 120, and the applications 130 shown in FIG. 3.

The platform 120 includes control services and a system resource manager (SRM) 123. The control services interpret a processing request from the applications 130 and generate a request to obtain a hardware resource (an obtaining request). The SRM 123 manages one or more hardware resources and arbitrates between obtaining requests from the control services.

The control services include multiple modules including an SCS (System Control Service) 122 an ECS (Engine Control Service) 124, an MCS (Memory Control Service) 125, an OCS (Operations Panel Control Service) 126, a FCS (Fax Control Service) 127 and an NCS (Network Control Service) 128. The platform 120 includes an application program interface (API) that makes a processing request from the applications 130 receivable with a predefined function.

The general purpose OS 121, which may be UNIX®, executes the platform 120 and the software programs of the applications 130 in parallel as processes. When a normal mode thread and a ROM updating mode thread exit in processes, the general purpose OS 121 shown in FIG. 3 first executes the normal mode thread of each process.

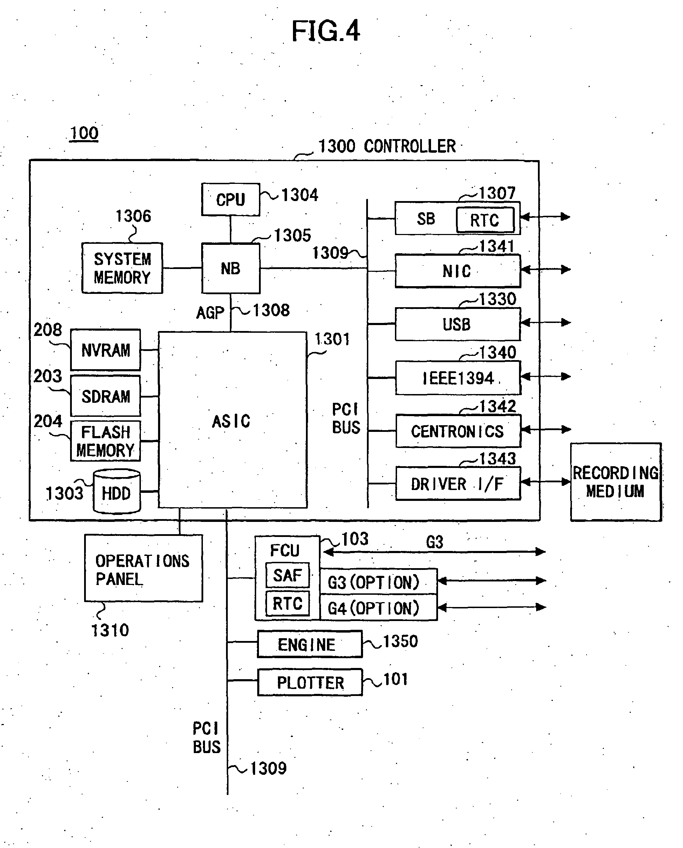

The MCS 125 is started as a process that performs memory control. The process of the MCS 125 includes a normal mode thread that provides the combined services of a copier, a printer, a facsimile machine, and a scanner, such as the obtaining and freeing of image memory, usage of a hard disk drive (HDD); and compression and decompression of image data; and a ROM updating mode thread that performs processing such as reservation of an updating data area for storing updating data in, for instance, an SDRAM 203 (FIG. 4), the updating data being expanded from an updating data packet by a below-described. remote ROM updating (RRU) application 117.

The process of the OCS 126 includes a normal mode thread that controls an operations panel 1310 (FIG. 4) serving as information transmission means between an operator and main body control; and a ROM updating mode thread that performs processing such as display of ROM updating-related information on the operations panel 1310.

The process of the FCS 127 includes a normal mode thread that performs processing such as facsimile transmission from and reception to each application of the system controller using a PSTN/ISDN network, entry and citation of various facsimile data items managed in a BKM (Backup SRAM), facsimile reading, facsimile reception and printing, and provision of the API for performing combined transmission and reception; and a ROM updating mode thread that is merely started without performing such functions.

The NCS 128 is a process for providing a service that can be used in common by applications requiring a network I/O. The NCS 128 includes a normal mode thread that performs processing such as distribution of data received from the network by each protocol among the applications and arbitration in the case of transmitting data from the applications to the network. Further, in the normal mode thread of the NCS 128, a ROM updating data packet for a flash memory (hereinafter referred to as "flash ROM") 204 (FIG. 4) is received from a remote host such as the host computer of the manufacturer of the multi-function apparatus 100 or a third vendor that is an application developer.

The process of the NCS 128 also includes a ROM updating mode thread that performs processing such as passing of updating data included in the ROM updating data packet of the flash ROM 204 to the RRU application 117

The process of the SRM 123 performs system control and resource management in conjunction with the SCS 122. The process of the SRM 123 includes a normal mode thread that performs arbitration and execution control in accordance with requests from an upper layer that uses hardware resources such as the engines of, for instance, a scanner part and a printer part, a memory, an HDD file, and host I/Os (a Centronics I/F, an IEEE 1394 I/F, a USE I/F, an NIC I/F, etc.); and a ROM updating mode thread that is merely started without performing such resource management. Specifically, the normal mode thread of the SRM 123 determines whether a requested hardware resource is available (not being used by another request). If the requested hardware resource is available, the normal mode thread of the SRM 123 notifies the upper layer of the availability of the requested hardware resource. Further, the normal mode thread of the SRM 123 performs scheduling on use of hardware resources in response to requests from the upper layer, and directly implements the contents of the requests (for instance, paper conveyance and image formation by a printer engine, memory reservation, and file creation).

The process of the SCS 122 includes a normal mode thread that performs processing such as application management, operations panel control, system screen display, LED display, resource management, and interruption application control.

Further, the process of the SCS 122 transmits a request to start a ROM updating mode thread to a printer application 111, a copy application 112, a facsimile (fax) application 113, a scanner application 114, a network filing application 115, the ECS 124, the MCS 125, the OCS 126, the FCS 127, and the NCS 128 based on a request from the RRU application 117.

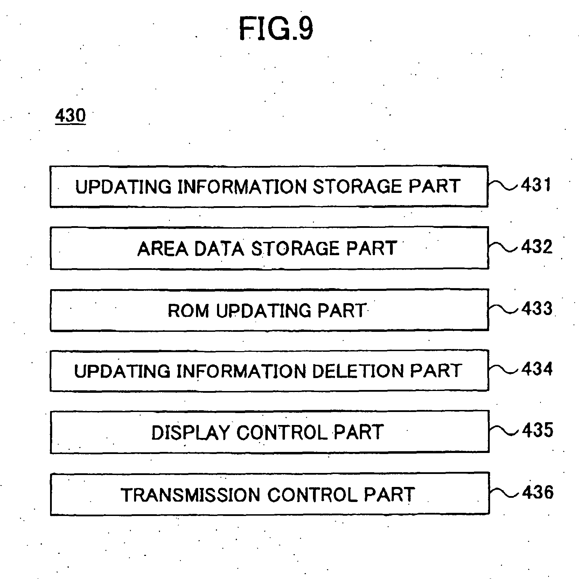

The process of the SCS 122 also includes a ROM updating mode thread. The ROM updating mode thread performs processing such as selection of updating data items corresponding to the configurations of the applications 130 and the platform 120 that operate in the multi-function apparatus 100 from the updating data loaded into, for instance, the SDRAM 203, and the starting of a below-described ROM updating part 430 (FIG. 9).

The process of the ECS 124 includes a normal mode thread that performs processing such as control of the engines of the plotter 101, the scanner 102, the FCU 103, and the other hardware resources 104; and a ROM updating mode thread that is merely started without performing such engine control.

Thus, the ROM updating mode thread of each of the SRM 123, the ECS 124, and the FCS 127 is merely started in order to indicate the presence of the control services operating inside the multi-function apparatus 100 at the time of updating a ROM. On the other hand, the ROM updating mode thread of each of the SCS 122, the MCS 125, the OCS 126, and the NCS 128 is started in order to perform processing necessary to update the ROM and indicate the presence of the control services operating inside the multi-function apparatus 100.

The applications 130 include the printer application 111, the copy application 112, the fax application 113, the scanner application 114, the network filing application 115, and the RRU application 117. The printer application 111, which is an application for a printer, is provided with PDLs (Page Description Languages) such as PCL (Printer Control Language) and PS (PostScript). The copy application 112 is an application for a copier. The fax application 113 is an application for a facsimile machine. The scanner application 114 is an application for a scanner. The network filing application is an application for network filing. The RRU application 117 performs processing such as expansion of an updating data packet received via the network by the NCS 128 into updating data, and storage of the updating data in an updating data area such as the SDRAM 203 reserved by the ROM updating mode thread of the MCS 125.

Like the platform 120, each of these applications is started as a process, and each of the applications except the RRU application 117 includes a normal mode thread that performs the above-described processing; and a ROM updating mode thread that is started in order to indicate the presence of the application.

Next, a description is given, with reference to FIG. 4, of the hardware configuration of the multi-function apparatus 100. FIG. 4 is a block diagram showing a hardware configuration of the multi-function apparatus 100.

Referring to FIG. 4, in the multi-function apparatus 100, the operations panel 1310, the FCU 103 an engine part 1350 (to which the scanner 102, etc., is connected), and the plotter 101 are connected to an ASIC 1301 of a controller 1300 with a PCI (Peripheral Component Interconnect) bus 1309.

In the controller 1300, an NVRAM 208, the SDRAM 203, the flash ROM 204 (a program storage part) and an HDD 1303 are connected to the ASIC 1301, and the ASIC 1301 and a CPU 1304 are connected via an NB (Northbridge) 1305 of a CPU chipset. The ASIC 1301 and the CPU 1304 are connected via the NB 1305 because the interface of the CPU 1304 itself is not open to the public.

The ASIC 1301 and the NB 1305 are connected not by a mere PCI bus but by an AGP 1308. This is because if the ASIC 1301 and the NB 1305 are connected with a low-speed PCI bus, the performance of the multi-function apparatus 100, in which multiple processes forming the platform 120 and the applications 130 are executed and controlled, is lowered.

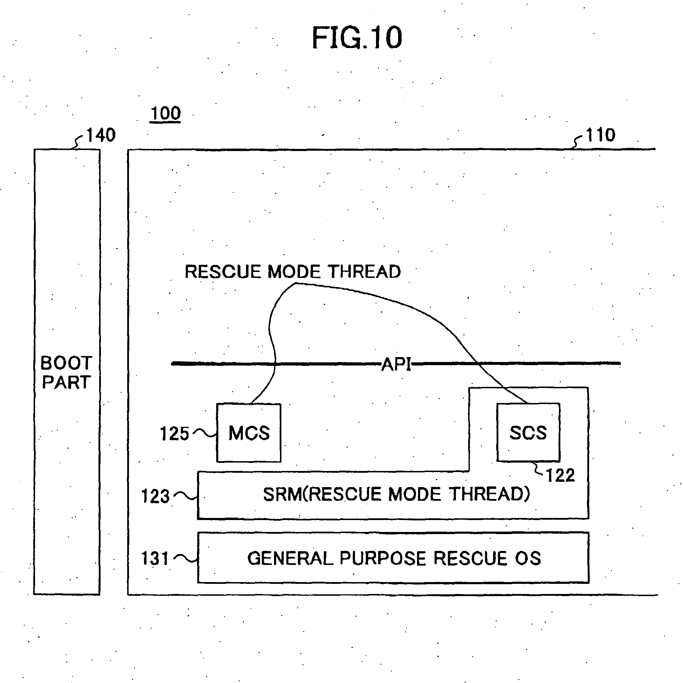

The CPU 1304 controls the entire multi-function apparatus 100. Specifically, the CPU 1304 starts the SRM 123, the SCS 122, the ECS 124, the MCS 125, the OCS 126, the FCS 127, and the NCS 128 of the platform 120 and has them executed as processes on the general purpose OS 121. Further, the CPU 1304 starts the printer application 111, the copy application 112, the fax application 113, the scanner application 114, the network filing application 115, and the RRU application 117 of the applications 130, and has them executed. For instance, when the multi-function apparatus 100 is configured as shown below in FIG. 10, the CPU 1304 starts the SRM 123, the SCS 122, and the MCS 125 of the platform 120 and has them executed as processes on a general purpose rescue OS 131 (FIG. 10).

The NB 1305 is a bridge for connecting the CPU 1304, a system memory 1306, an SB (Southbridge), an NIC (Network Interface Card) 1341, a USB (Universal Serial Bus) 1330, an IEEE 1394 device 1340 a Centronics device 1342, a driver I/F 1343, and the ASIC 1301.

The system memory 1306 is used as, for instance, the drawing memory of the multi-function apparatus 100. The SB 1307 is a bridge for connecting the NB 1305 and peripheral devices. The SB 1307 includes an RTC (Real Time Clock) that measures time in the controller 1300. Further, the SB 1307 includes an internal USB host so as to be able to capture image data by connecting thereto a USB connection camera or to receive data from another USB target.

The driver I/F 1343 is an interface used to read a program or application from an inserted recording medium storing the program or application and install the program or application in the multi-function apparatus 100. The recording medium may be an SD memory card, a smart medium, a multimedia card, or CompactFlash®.

The SDRAM 203 is a nonvolatile memory in which an updating data area for storing updating data expanded from an updating data packet is reserved when the updating data packet is received via the network. '

The NVRAM 208 is a nonvolatile memory for storing, for instance, the below-described updating interruption information.

The flash ROM 204 stores each of the above-described applications (programs) and each of the programs forming the control services and the SRM 123 of the platform 120. The multi-function apparatus 100 is shipped with each of these programs being prestored in the flash ROM 204. The programs of the flash ROM 204 are updated by receiving a ROM updating data packet (a remote ROM updating operation).

The HDD 1303 stores image data, programs, font data, forms, and documents. The operations panel 1310 receives input from an operator and displays information to the operator.

The ASIC 1301 is provided with a RAM interface for connecting the NVRAM 208, a ROM interface for connecting the flash ROM 204, and the SDRAM 203 and a hard disk interface for connecting the HDD 1303. In the case of inputting image data to and outputting image data from these storage parts, switching is performed among the RAM interface, the ROM interface, and the hard disk interface depending on which storage part is connected.

The AGP 1308 is a bus interface for a graphics accelerator card proposed to increase graphics processing speed. The AGP 1308 directly accesses the system memory 1306 with high throughput, thereby increasing the processing speed of the graphics accelerator card.

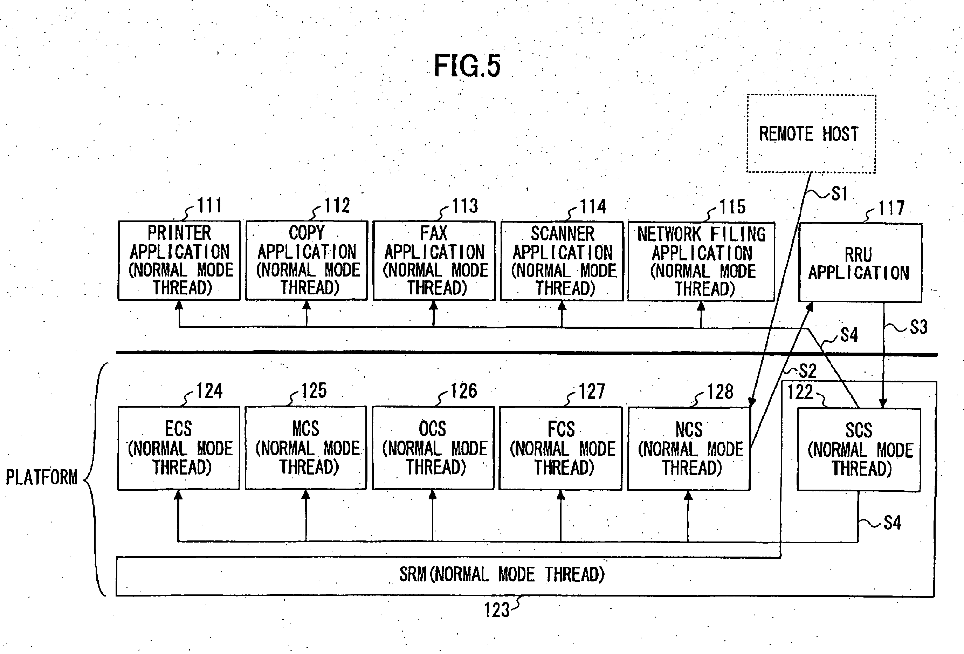

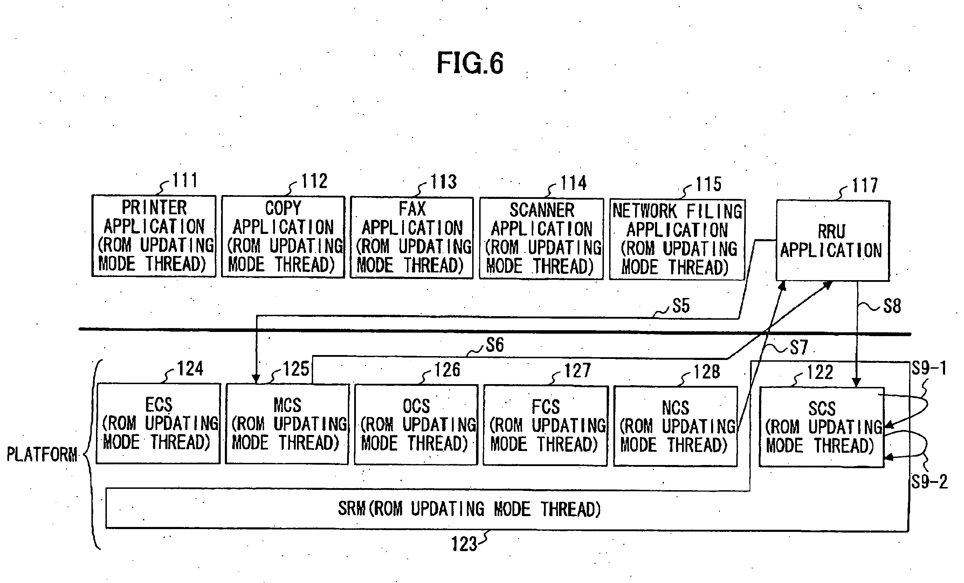

Next, a description is given, with reference to FIGS. 5 and 6, of an overall remote ROM updating operation. FIG. 5 is a diagram for illustrating the overall remote ROM updating operation.

As shown in FIG. 5, when the image forming apparatus 100 performs a normal combined service operation, each of the applications and control services having a normal mode thread and a ROM updating mode thread performs the normal mode thread.

In this state, when an updating data packet is transmitted via the network from a remote host such as the host computer of the manufacturer of the multi-function apparatus 100 or a third vendor that is an application developer, in step S1, the normal mode thread of the NCS 128 receives the updating data packet.

In step S2, the normal mode thread of the NCS 128 determines. the contents of the received updating data packet. If the normal mode thread of the NCS 128 determines that the received packet is updating data for updating the flash ROM 204, the normal mode thread of the NCS 128 notifies the RRU application 117 of the reception of the ROM updating data packet.

In step S3, being notified of the reception of the ROM updating data packet by the normal mode thread of the NCS 128, the RRU application 117 requests the normal mode thread of the SCS 122 to issue a request to enter the ROM updating mode thread

In step S4, being requested to issue a request to enter the ROM updating mode thread by the RRU application 117, the normal mode thread of the SCS 122 transmits the request to enter the ROM updating mode thread to the normal mode thread of each of the printer application 111, the copy application 112, the fax application 113, the scanner application 114, the network filing application 115, the ECS 124, the MCS 125, the OCS 126, the FCS 127, and the NCS 128.

FIG. 6 is another diagram for illustrating the overall remote ROM updating operation.

Receiving the request to enter the ROM updating mode thread transmitted from the normal mode thread of the SCS 122 in step S4 of FIG. 5, each of the printer application 111, the copy application 112, the fax application 113, the scanner application 114, the network filing application 115, the ECS 124, the MCS 125, the OCS 126, the FCS 127, and the NCS 128 switches from the normal mode thread to the ROM updating mode thread as shown in FIG. 6.

Further, in step S5 of FIG. 6, the RRU application 117 requests the ROM updating mode thread of the MCS 125 to reserve an updating data area in order to obtain an area necessary to expand the updating data packet.

In step S6, being requested to reserve an updating data area by the RRU application 117, the ROM updating mode thread of the MCS 125 reserves the updating data area on, for instance, the SDRAM 203, and returns the starting address and the area size of the updating data area to the RRU application 117.

Receiving the starting address and the area size of the updating data area from the ROM updating mode thread of the MCS 125, in step S7, the RRU application 117 receives the updating data packet from the ROM updating mode thread of the NCS 128. Then, the RRU application 117 removes network information from the updating data packet, decompresses the updating data packet in a compressed format, and loads the updating data packet into the updating data area from its starting address of which the RRU application has been notified by the ROM updating mode thread of the MCS 125.

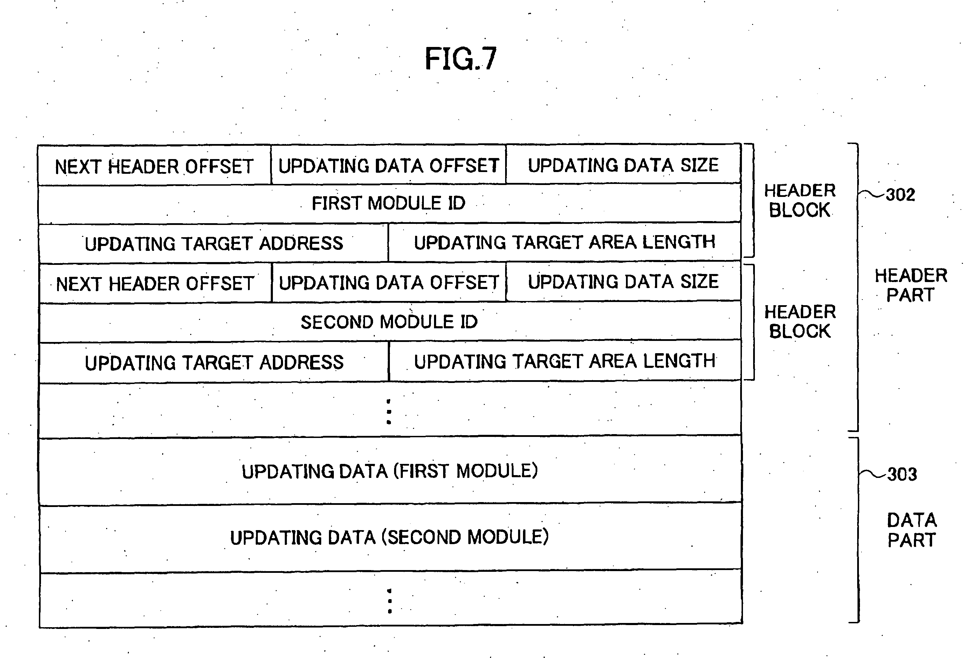

A description is given below, with reference to FIG. 7, of a configuration of the updating data packet loaded into the updating data area. FIG. 7 is a diagram showing a data structure of the loaded (expanded) updating data packet received by the multi-function apparatus 100.

As shown in FIG. 7, the loaded updating data packet includes a header part 302 and a data part 303

The header part 302 is divided into header blocks corresponding to modules to be updated. Each header block includes a subsequent header offset that is an offset to the next header block, an updating data offset that is an offset to the updating data of the corresponding module, the size of the updating data, a module ID that is the identification information of the module, an updating target address indicating the relative address of the module on the flash ROM 204, and an updating target area length that is the size of the module.

In the data part 303, the updating data are stored module by module. The head of the updating data of each module can. be referred to by the updating data offset of the header block corresponding to the module.

Referring back to FIG. 6, in step S8, the RRU application 117 notifies the normal mode thread of the SCS 122 of the starting address of the updating data area into which the updating data packet has been loaded, and requests the ROM updating mode thread of the SCS 122 to perform selection on the updating data.

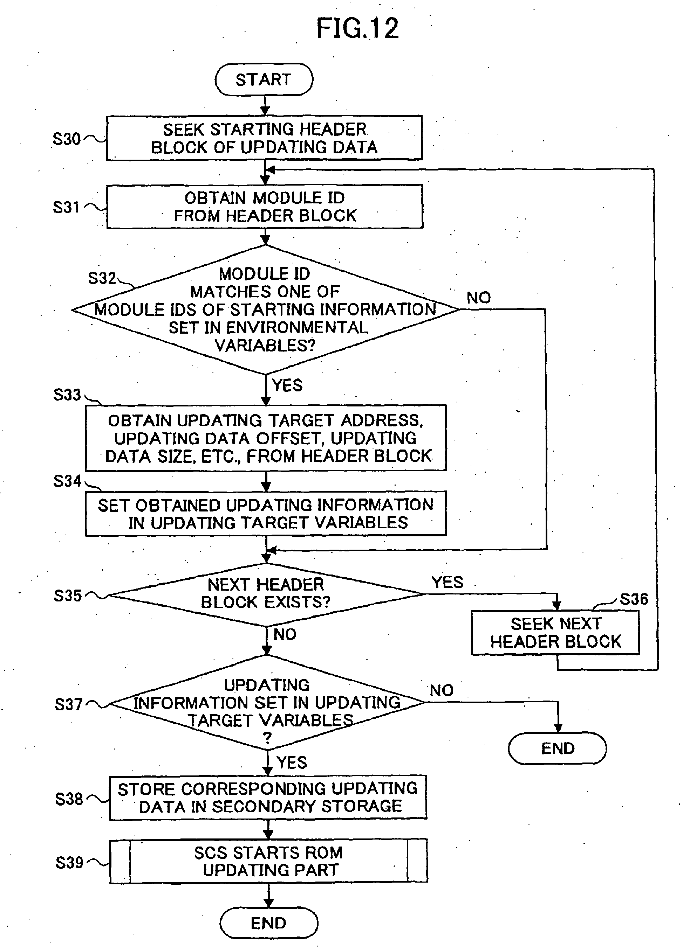

In step S9-1, receiving the request to perform selection on the updating data from the RRU application 117, the normal mode thread of the SCS 122 starts the ROM updating mode thread of the SCS 122, and performs a below-described operation as shown in FIG. 12, thereby selecting an updating data item.

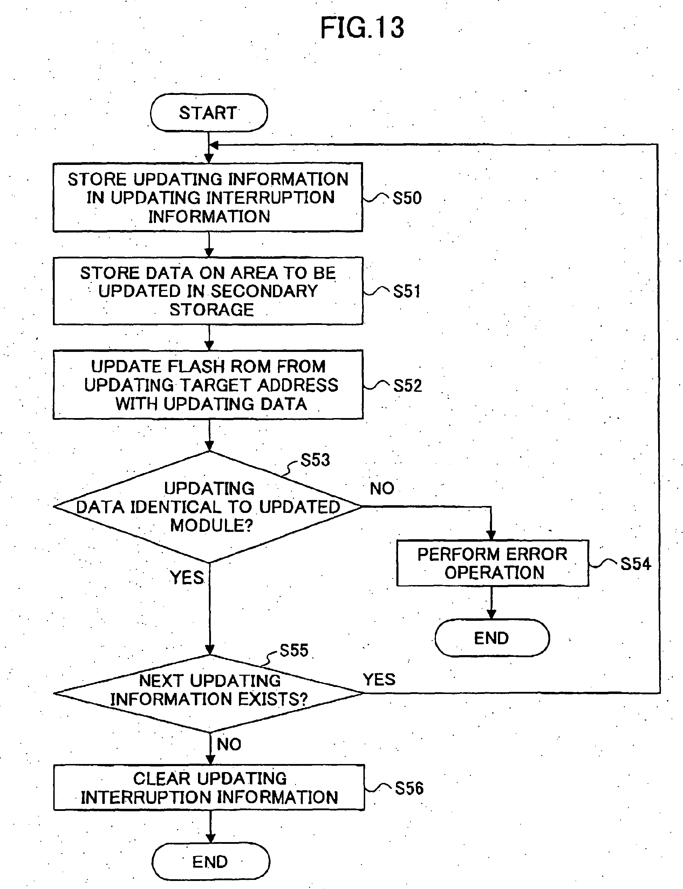

Further, in step S9-2, the ROM updating mode thread of the SCS 122 starts the below-described ROM updating part 430 shown in FIG. 9, and performs a below-described ROM updating operation as shown in FIG. 13.

Next, a description is given, with reference to FIG. 8, of the boot part 140. FIG. 8 is a block diagram showing a configuration of the boot part 140.

Referring to FIG. 8, the boot part 140 includes the ROM monitor 410 and a program starting part 420.

The ROM monitor 410 starts the general purpose OS 121 shown in FIG. 3 when no updating information is stored in the updating interruption information and/or when no maintenance flag is stored in the updating interruption information- The ROM monitor 410 starts the general purpose rescue OS 131 as described below in FIG. 10 when updating information is stored in the updating interruption information and/or when a maintenance flag is stored in the updating interruption information.

The program starting part 420 is called from the general purpose OS 121 or the general purpose rescue OS 131. The program starting part 420 includes a service layer starting part 422, an application starting part 423, and a starting information setting part 424.

When the program starting part 420 is called from the general purpose OS 121, the service starting part 422 obtains the starting information of the general purpose OS 121, and starts the platform 120. On the other hand, when the program starting part 420 is called from the general purpose rescue OS 131, the service starting part 422 obtains the starting information of the general purpose rescue OS 131, and starts the platform 120 including, for instance, the SRM 123, the MCS 125, and the SCS 122 as shown below in FIG. 10.

The application starting part 423 is put into operation when the program starting part 420 is called from the general purpose OS 121, and starts each application by obtaining the starting information thereof. As shown in a below-described fourth embodiment, the application starting part 423 may be put into operation to start the RRU application 117 by obtaining the starting information thereof even when the program starting part 420 is called from the general purpose rescue OS 131.

The starting information setting part 424 is started when the ROM updating mode thread of each of the control services.and the SRM 123 included in the platform 120 and the applications 130 is executed. Then, the starting information setting part 424 obtains the starting information of each of the control services, the SRM 123, and the applications 130, and sets the obtained starting information in environmental variables. Alternatively, the starting information setting part 424 may be started when the below-described rescue mode thread of each of the control services, the SRM 123, and the applications 130 is executed. Then, the starting information setting part 424 may obtain the starting information of each of the control services, the SRM 123, and the applications 130, and set the obtained starting information in environmental variables.

A description is given below, with reference to FIG. 9, of the ROM updating part 430 included in the SCS 122. FIG. 9 is a block diagram showing a configuration of the ROM updating part 430.

Referring to FIG. 9, the ROM updating part 430 includes an updating information storage part 431 an area data storage part 432, a ROM updating part 433, and an updating information deletion part 434. Further, in the case of the following second through seventh embodiments, the ROM updating part 430 may further include a display control part 435. Further, in the case of the fourth embodiment, the ROM updating part 430 may further include a transmission control part 436.

The updating information storage part 431 stores updating information such as a module ID and an updating target address as shown in FIG. 7 in the updating interruption information.

The area data storage part 432 stores data on an area to be updated in a secondary storage device such as the HDD 1303.

The ROM updating part 433 updates a program of the flash ROM 204 with a corresponding program included in updating data based on the updating data.

The updating information deletion part 434 deletes updating information stored by the updating information storage part 431 from the updating interruption information.

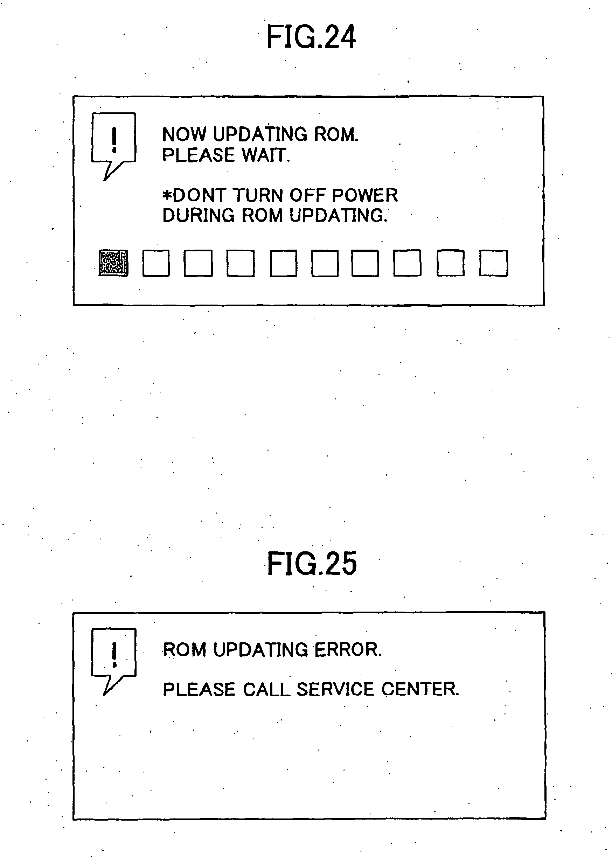

The display control part 435 determines whether the OCS 126 has been started, for instance. If the display control part 435 determines that the OCS 126 has been started, the display control part 435 creates a restoration screen (FIG. 24) indicating that the flash ROM 204 is being restored or an error screen, and displays the restoration or error screen on the operations panel 1310 via the OCS 126.

The transmission control part 436 determines whether the NCS 128 has been started, for instance. If the transmission control part 436 determines that the NCS 128 has been started, the transmission. control part 436 transmits information on the restoration of the flash ROM 204 to a remote host such as the host computer of the manufacturer of the multi-function apparatus 100 or a third vendor that is an application developer via the network through the NCS 128.

Next, a description is given, with reference to FIG. 10, of a configuration of the multi-function apparatus 100 in a case where the general purpose rescue OS 131 is started by the ROM monitor 410.

As shown in FIG. 10, when the general purpose rescue OS 131 is started, the rescue mode threads of the SRM 123, the MCS 125, and the SCS 122 are executed.

The rescue mode thread of the SCS 122 determines rescue method as described below. Then, based on the determination result, the rescue mode thread of the SCS 122 obtains information and data relating to program updating from a secondary storage device such as the HDD 1303 through the rescue mode thread of the MCS 125, and starts the ROM updating part 430.

The rescue mode thread of the MCS 125 obtains information and data relating to program updating from a secondary storage device such as the HDD 1303 based on a request from the rescue mode thread of the SCS 122, and provides the obtained information and data to the rescue mode thread of the SCS 122. Further, the rescue mode thread of the MCS 125 stores data on an area to be updated in a secondary storage device such as the HDD 1303 based on a request from the ROM updating part 430.

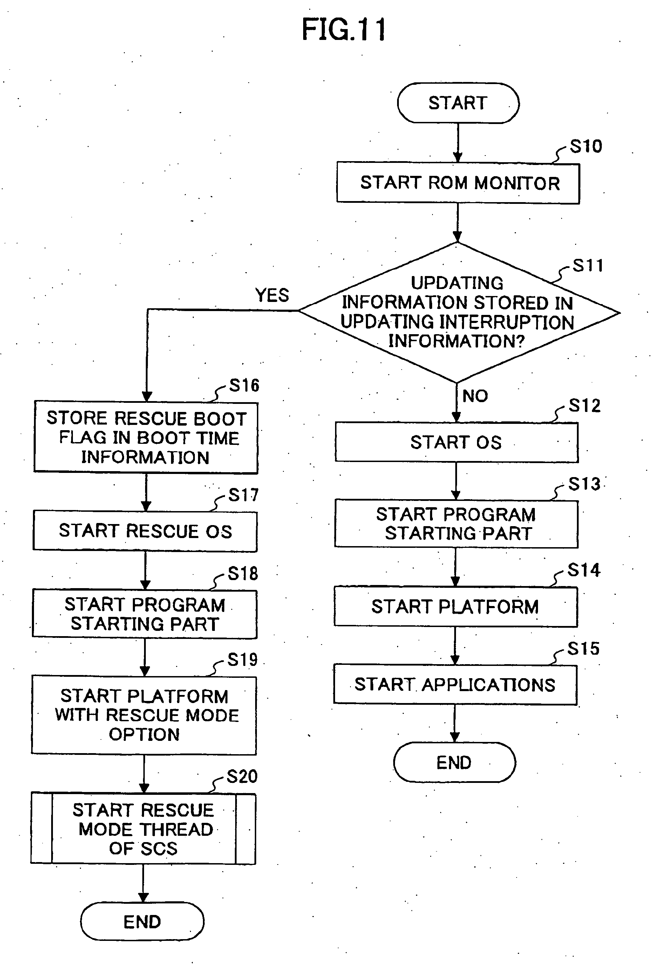

Next, a description is given, with reference to FIG. 11, of an OS switching operation at the time of booting. FIG. 11 is a flowchart for illustrating the OS switching operation at the time of booting.

When power is turned on, in step S10, the multi-function apparatus 100 starts the ROM monitor 410.

Then, in step S11, the ROM monitor 410 determines whether updating information is stored in the updating interruption information. If the ROM monitor 410 determines that updating information is stored in the updating interruption information (YES in step S11), the ROM monitor 410 proceeds to step S16. If the ROM monitor 410 determines that updating information is not stored in the updating interruption information (NO in step S11), the ROM monitor 410 proceeds to step S12.

In step S12, the ROM monitor 410 starts the general purpose OS 121.

In step S13, the general purpose OS 121 started in step S12 starts the program starting part 420.

In step S14, the service starting part 422 included in the program starting part 420 starts the platform 120.

In step S15, the application starting part 423 included in the program starting part 420 starts the applications 130.

On the other hand, in step S16, the ROM monitor 410 stores a rescue boot flag in boot time information.

Then, in step S17, the ROM monitor 410 starts the general purpose rescue OS 131.

In step S18, the general purpose rescue OS 131 started in step S17 starts the program starting part 420.

In step S19, the service starting part 422 included in the program starting part 420 refers to the boot time information, and when the rescue boot flag is stored, the service starting part 422 starts the platform 120 with a rescue mode option.

In step S20, the SCS 122 starts a rescue mode thread.

Next, a description is given, with reference to FIG. 12, of an example of the updating data selection operation performed in the ROM updating mode thread of the SCS 122 described in step S9 of FIG. 6.

In step S30 of the flowchart of FIG. 12, the ROM updating mode thread of the SCS 122, which has been notified by the RRU application 117 of the starting address of the updating data area into which the updating data packet has been loaded, seeks the starting header block of the updating data based on the starting address.

In step S31, the ROM updating mode thread of the SCS 122 obtains a module ID from the header block

In step S32, the ROM updating mode thread of the SCS 122 compares the module ID obtained in step S31 with the module IDs included in the starting information of the platform 120 or the applications 130 set in the environmental variables, and determines whether the module ID obtained in step S31 matches one of the module IDs included in the starting information set in the environmental variables.

If the ROM updating mode thread of the SCS 122 determines that the module ID obtained in step S31 matches one of the module IDs included in the starting information set as environmental variables (YES in step S32), the ROM updating mode thread of the SCS 122 proceeds to step S33. If the ROM updating mode thread of the SCS 122 determines that the module ID obtained in step S31 matches none of the module IDs included in the starting information set as environmental variables (NO in step S32), the ROM updating mode thread of the SCS 122 proceeds to step S35.

In step S33, the ROM updating mode thread of the SCS 122 obtains an updating target address, an updating data offset, an updating data size, etc., from the header block.

In step S34, the ROM updating mode thread of the SCS 122 sets a group of the module ID, the updating target address, the updating data offset, the updating data size, etc., in updating target variables as updating information.

In step S35, the ROM updating mode thread of the SCS 122 refers to the updating data area into which the updating data packet has been loaded, and determines whether the next header block exists. If the ROM updating mode thread of the SCS 122 determines that the next header block exists (YES in step S35), the ROM updating mode thread of the SCS 122 proceeds to step S36. If the ROM updating mode thread of the SCS 122 determines that the next header block does not exist (NO in step S35), the ROM updating mode thread of the SCS 122 proceeds to step S37.

In step S36, the ROM updating mode thread of the SCS 122 seeks the next header block, and repeats the operations in and after step S31.

On the other hand, in step S37, the ROM updating mode thread of the SCS 122 refers to the updating target variables, and determines whether the updating information is set in the updating target variables. If the ROM updating mode thread of the SCS 122 determines that the updating information is set in the updating target variables (YES in step S37), the ROM updating mode thread of the SCS 122 proceeds to step S38, If the ROM updating mode thread of the SCS 122 determines that the updating information is not set in the updating target variables (NO in step S37), the ROM updating mode thread of the SCS 122 ends the operation.

In step S38, the ROM updating mode thread of the SCS 122 stores the corresponding updating data stored in the updating data area into which the updating data packet has been loaded in a secondary storage device such as the HDD 1303.

Thus, by storing the updating data in a secondary storage device such as the HDD 1303, it is possible to retry the updating of a program and restore the program using the updating data stored in the secondary storage device even if power is turned off during the updating of the program.

Then, in step S39, the ROM updating mode thread of the SCS 122 starts the ROM updating part 430 of the SCS 122.

Next, a description is given, with reference to FIG. 13, of a ROM updating operation by the ROM updating part 430 of the SCS 122. FIG. 13 is a flowchart for illustrating the ROM updating operation by the ROM updating part 430 of the SCS 122.

In step S50 of the flowchart of FIG. 13, the ROM updating part 430 of the SCS 122 stores the corresponding updating information such as the module ID, the updating target address, the updating data offset, and the updating data size in the updating interruption information. That is, when step S50 is performed for the first time, the ROM updating part 430 of the SCS 122 stores the first updating information (for instance, *n* = 0) in the updating interruption information. Thereafter, every time step S50 is entered after YES in below-described step S55, the ROM updating part 430 of the SCS 122 increments the value of n by one. For instance, next the second updating information *(n* = 1) is stored in the updating interruption information to replace the first updating information.

In step S51, the ROM updating part 430 of the SCS 122 stores, in a secondary storage device such as the HDD 1303, data on a corresponding area of the flash ROM 204 to be updated (replaced) with the updating data.

Thus, by storing data on an area to be updated in a secondary storage device such as the HDD 1303, it is possible to restore the state before updating a program using the data on the area to be updated stored in the secondary storage device even if power is turned off during the updating of the program.

Then, in step S52, the ROM updating part 430 of the SCS 122 reads out the corresponding updating data from the updating data area into which the updating data packet has been loaded, and updates (rewrites) the flash ROM 204 from the updating target address with the updating data.

In step S53, the ROM updating part 430 of the SCS 122 compares the updating data read out in step S52 with data on the updated module of the flash ROM 204 after the updating of step S52, and determines whether the updating has been performed correctly. If the ROM updating part 430 of the SCS 122 determines that the updating has been performed correctly (YES in step S53), the ROM updating part 430 of the SCS 122 proceeds to step S55. If the ROM updating part 430 of the SCS 122 determines that the updating has not been performed correctly (NO in step S53), the ROM updating part 430 of the SCS 122 proceeds to step S54.

In step S54, the ROM updating part 430 of the SCS 122 performs an error operation. For instance, the ROM updating part 430 of the SCS 122 displays an error screen on the operations panel 1310 through the ROM updating mode thread of the OCS 126 when the ROM updating part 430 of the SCS 122 is called from the ROM updating mode thread of the SCS 122 as described in FIG. 12. Meanwhile, when the ROM updating part 430 of the SCS 122 is called from the rescue mode thread of the SCS 122 as described below, the ROM updating part 430 of the SCS 122 stores error information in a log file stored in, for instance, the HDD 1303.

On the other hand, in step S55, the ROM updating part 430 of the SCS 122 refers to the updating target variables, and determines whether the next updating information is set in the updating target variables. If the ROM updating part 430 of the SCS 122 determines that the next updating information is set in the updating target variables (YES in step S55), the ROM updating part 430 of the SCS 122 repeats the operations in and after step S50. If the ROM updating part 430 of the SCS 122 determines that the next updating information is not set in the updating target variables (NO in step S55) the ROM updating part 430 of the SCS 122 proceeds to step S56.

In step S56, the ROM updating part 430 of the SCS 122 deletes the updating information stored in the updating interruption information.

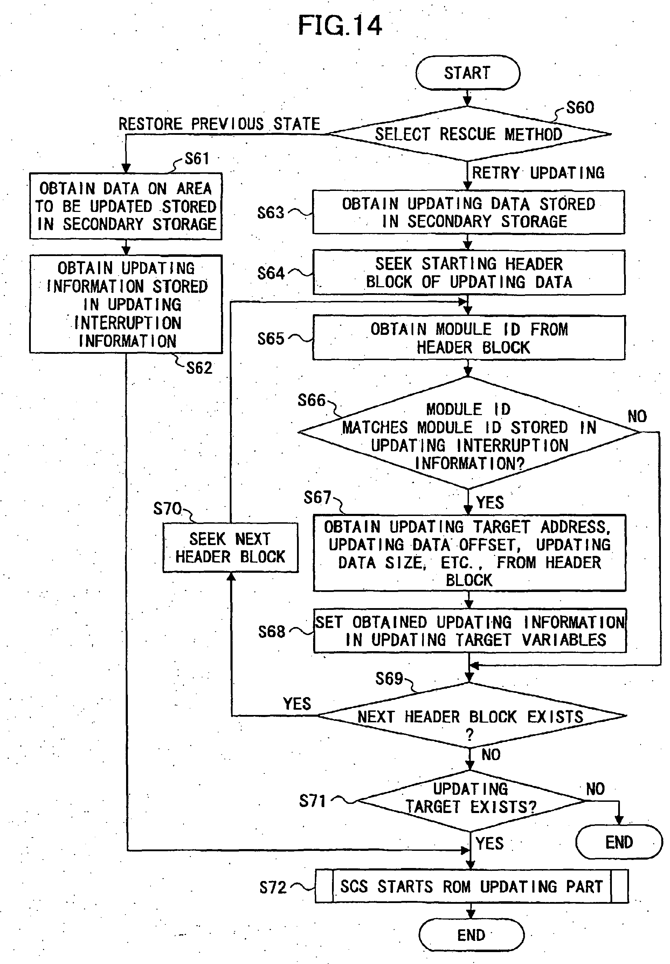

Next, a description is given, with reference to FIG. 14, of an updating data selection operation performed in the rescue mode thread of the SCS 122 started in step S20 of FIG. 11.

In step S60 of the flowchart of FIG. 14, the rescue mode thread of the SCS 122 refers to, for instance, the definition file of the multi-function apparatus 100 stored in the HDD 1303, and selects a preset rescue method. If the rescue mode thread of the SCS 122 selects RETRY INTERRUPTED UPDATING as a rescue method, the rescue mode thread of the SCS 122 proceeds to step S63. If the rescue mode thread of the SCS 122 selects RESTORE STATE PREVIOUS TO UPDATING as a rescue method, the rescue mode thread of the SCS 122 proceeds to step S61.

In step S61, the rescue mode thread of the SCS 122 obtains the data on the area of the flash ROM 204 to be updated, stored in, for instance, step S51 of FIG. 13, from the secondary storage device such as the HDD 1303.

In step S62, the rescue mode thread of the SCS 122 obtains the updating information stored in, for instance, step S50 of FIG. 13 from the updating interruption information.

On the other hand, in step S63, the rescue mode thread of the SCS 122 obtains the updating data stored in, for instance, step S38 of FIG. 12 from the secondary storage device such as the HDD 1303.

Then, in step S64, the rescue mode thread of the SCS 122 seeks the starting header block of the updating data obtained in step S63.

In step 565, the rescue mode thread of the SCS 122 obtains a module ID from the header block.

In step S66, the rescue mode thread of the SCS 122 determines whether the module ID obtained in step S65 matches the module ID included in the updating information stored in the updating interruption information in, for instance, step S50 of FIG. 13.

If the rescue mode thread of the SCS 122 determines that the module ID obtained in step S65 matches the module ID included in the updating information stored in, for instance, step S50 of FIG. 13 (YES in step S66), the rescue mode thread of the SCS 122 proceeds to step S67. If the rescue mode thread of the SCS 122 determines that the module ID obtained in step S65 does not match the module ID included in the updating information stored in, for instance, step S50 of FIG. 13 (NO in step S66), the rescue mode thread of the SCS 122 proceeds to step S69.

In step S67, the rescue mode thread of the SCS 122 obtains an updating target address, an updating data offset, an updating data size, etc., from the header block.

In step S68, the rescue mode thread of the SCS 122 sets a group of the module ID, the updating target address, the updating data offset, the updating data size, etc., in the updating target variables as updating information.

In step 569, the rescue mode thread of the SCS 122 determines whether the next header block exists. If the rescue mode thread of the SCS 122 determines that the next header block exists (YES in step S69), the rescue mode thread of the SCS 122 proceeds to step S70. If the rescue mode thread of the SCS 122 determines that the next header block does not exist (NO in step S69), the rescue mode thread of the SCS 122 proceeds to step S71.

In step S70, the rescue mode thread of the SCS 122 seeks the next header block, and repeats the operations in and after step S65.

On the other hand, in step S71, the rescue mode thread of the SCS 122 refers to the updating target variables, and determines whether the updating information is set in the updating target variables. If the rescue mode thread of the SCS 122 determines that the updating information is set in the updating target variables (YES in step S71), the rescue mode thread of the SCS 122 proceeds to step S72. If the rescue mode thread of the SCS 122 determines that the updating information is not set in the updating target variables (NO in step S71), the rescue mode thread of the SCS 122 ends the operation.

In step S72, the rescue mode thread of the SCS 122 starts the ROM updating part 430 of the SCS 122.

The ROM updating part 430 of the SCS 122 started by the rescue mode thread of the SCS 122 performs an operation as shown in FIG. 13, and updates the flash ROM 204.

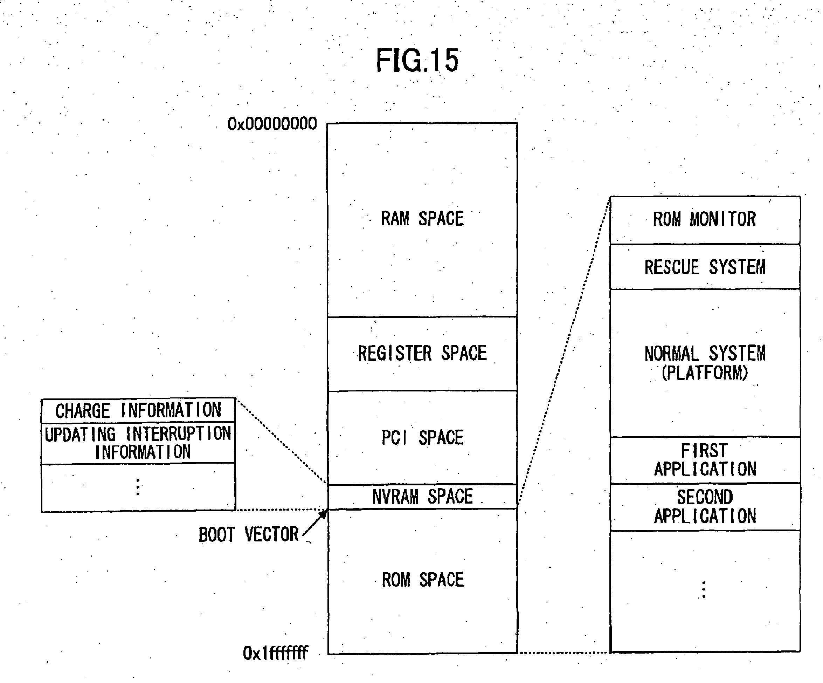

Next, a description is given, with reference to FIG. 15, of a memory structure of the multi-function apparatus 100. FIG. 15 is a diagram for illustrating the memory structure.

Referring to FIG. 15, for instance, the updating interruption information is included in an NVRAM space, and a program corresponding to the ROM monitor 410, a rescue system corresponding to the programs of the software group 110 shown in FIG. 10, a normal system corresponding to the programs of the platform 120 shown in FIG. 3, and applications (first second, etc.) corresponding to the programs of the applications 130 shown in FIG. 3 are included in a ROM space.

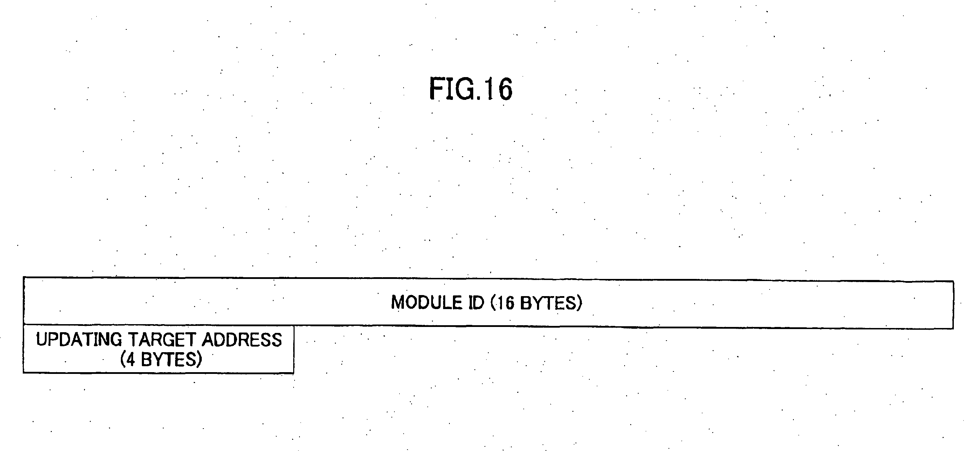

Next, a description is given, with reference to FIG. 16, of a layout of the updating interruption information in the case of storing the updating interruption information in the NVRAM space as shown in FIG. 15. FIG. 16 is a diagram for illustrating the layout of the updating interruption information in the case of storing the updating interruption information in the NVRAM space.

Referring to FIG. 16, the updating interruption information includes, for instance, a 16-byte module ID and a 4-byte updating target address.

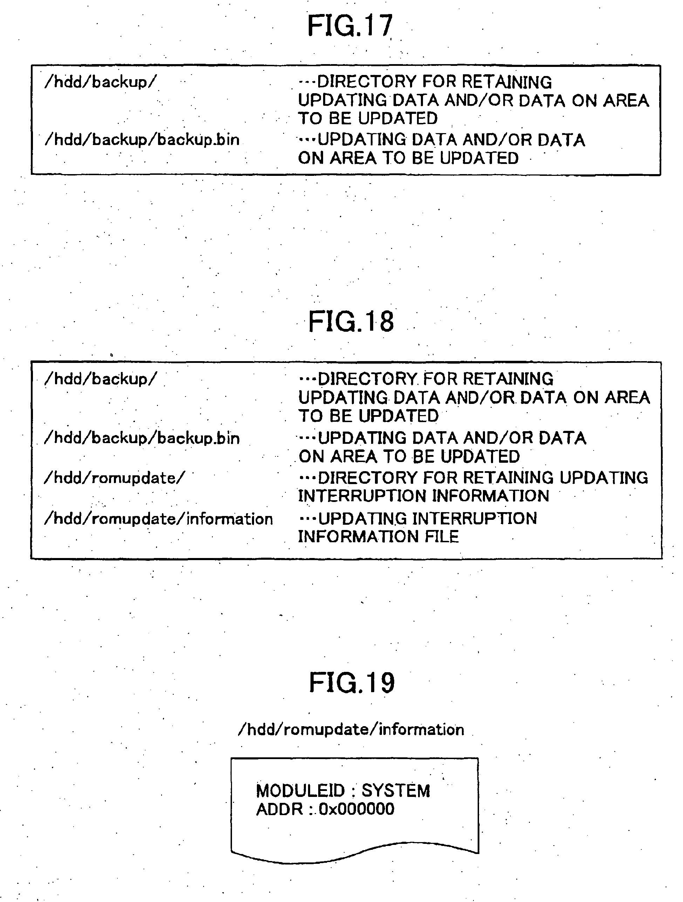

Next, a description is given, with reference to FIG. 17, of a directory and file configuration of the HDD 1303. FIG. 17 is a diagram for illustrating the directory and file configuration of the HDD 1303.

Referring to FIG. 17, the HDD 1303 has a "backup" directory as a directory for retaining updating data and/or data on an area to be updated, and a "backup bin" file is stored in the "backup" directory as the updating data and/or the data on the area to be updated.

Next, a description is given, with reference to FIG. 18, of another directory and file configuration of the HDD 1303. FIG. 18 is a diagram for illustrating the other directory and file configuration of the HDD 1303.

Instead of storing the updating interruption information in the NVRAM 208 (FIG. 4) as shown in FIGS. 15 and 16, a "romupdate" directory may be provided in the HDD 1303 as a directory for retaining the updating interruption information as shown in FIG 18, so that an updating interruption information file may be stored in the "romupdate" directory as a file including the updating interruption information.

Next, a description is given, with reference to FIG. 19, of the contents of the updating interruption information file. FIG. 19 is a diagram showing a configuration of the contents of the updating interruption information file.

Referring to FIG. 19, the updating interruption information file includes a module ID and an updating target address.

### [Second Embodiment]

In the above-described first embodiment, even if the multi-function apparatus 100 is turned off during the updating of the flash ROM 204 in, for instance, step'S52 of FIG. 13, the general purpose rescue OS 131 is started so that a program may be restored by restarting the updating of the flash ROM 204 or restoring the pre-updating state of the flash ROM 204 next time the multi-function apparatus 100 is turned on. However, no information is displayed on the operations panel 1310 of the multi-function apparatus 100. Accordingly, a user is prevented from knowing whether the general purpose rescue OS 131 has been started and program restoration (ROM updating) is being performed.

Accordingly, in the second embodiment, a screen related to the updating of the flash ROM 204 is displayed on the operations panel 1310 also in the case where the general purpose rescue OS 131 is started. In the following, a description is given of the differences from the first embodiment, and a description of the same configurations as those of the first embodiment is omitted.

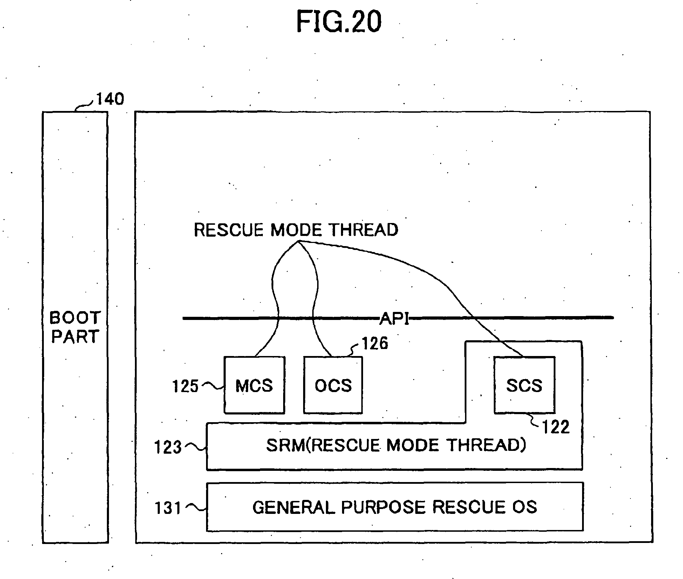

A description is given below, with reference to FIG. 20, of a configuration of the multi-function apparatus 100 in the case where the general purpose rescue OS 131 is started by the ROM monitor 410 according to the second embodiment of the present invention.

Compared with the configuration of the multi-function apparatus 100 of the first embodiment shown in FIG. 10, the configuration of the multi-function apparatus 100 shown in FIG. 20 includes the rescue mode thread of the OCS 126.

The rescue mode thread of the OCS 126 controls the operations panel 1310 serving as information transmission means between an operator and main body control, and displays, for instance, below-described screens on the operations panel 1310.

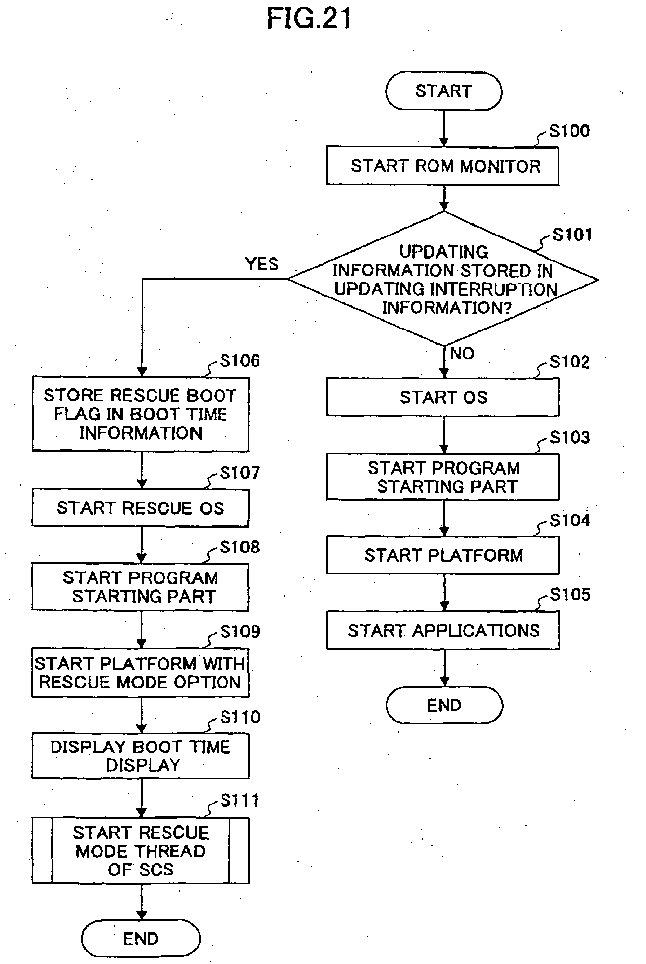

Next, a description is given, with reference to FIG. 21, of an OS switching operation at the time of booting according to the second embodiment. FIG. 21 is a flowchart for illustrating the OS switching operation at the time of booting.

The operations of steps S100 through S109 of FIG. 21 are equal to those of steps S10 through S19 of FIG. 11.

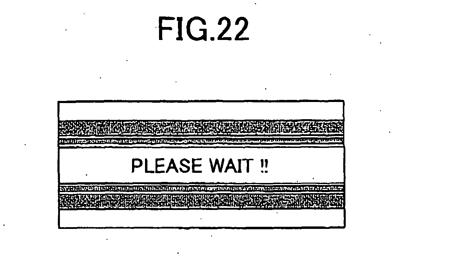

In step S110 after step S109, the rescue mode thread of the OCS 126 displays a boot time screen (FIG. 22) on the operations panel 1310.

By displaying the boot time screen on the operations panel 1310 as shown in FIG. 22, for instance, it is possible to inform a user that booting is performed in a rescue mode.

Then, in step S111, the SCS 122 starts a rescue mode thread.

The rescue mode thread of the SCS 122 performs an operation as shown in FIG. 14, and starts the ROM updating mode thread of the SCS 122.

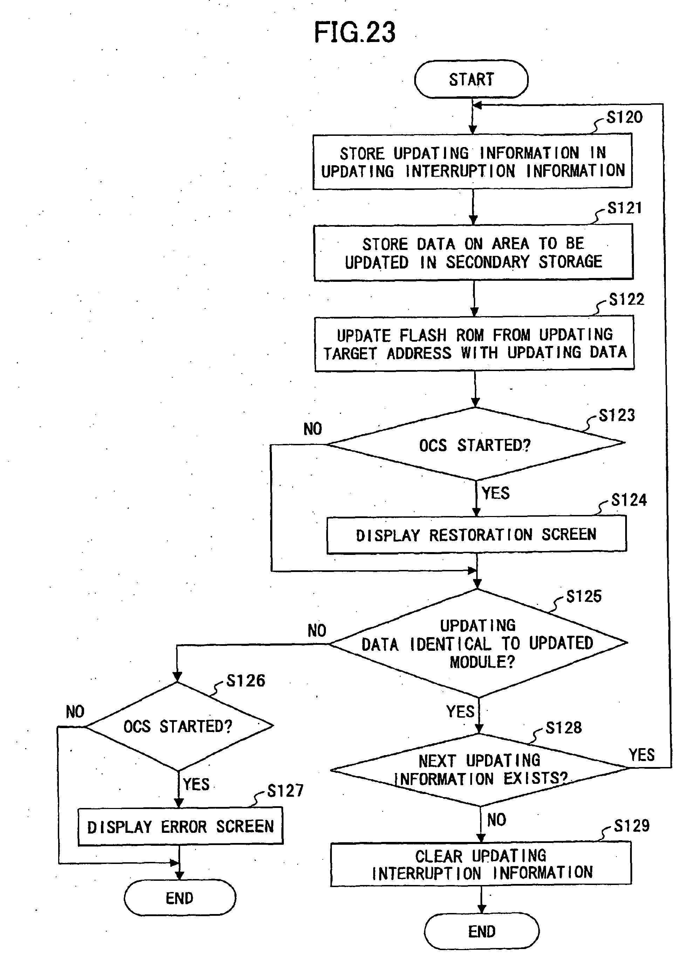

Next, a description is given, with reference to FIG. 23, of a ROM updating operation by the ROM updating part 430 of the SCS 122 according to the second embodiment. FIG. 23 is a flowchart for illustrating the ROM updating operation by the ROM updating part 430 of the SCS 122 according to the second embodiment.

In step S120, the ROM updating part 430 of the SCS 122 stores updating information such as a module ID, an updating target address, an updating data offset, an updating data size, etc., in the updating interruption information.

In step S121, the ROM updating part 430 of the SCS 122 stores, in a secondary storage device such as the HDD 1303,.data on a corresponding area of the flash ROM 204 to be updated (replaced) with the updating data.

Thus, by storing data on an area to be updated in a secondary storage device such as the HDD 1303, it is possible to restore the state of the flash ROM 204 before updating a program using the data on the area to be updated stored in the secondary storage device even if power is turned off during the updating of the program.

Then, in step S122, the ROM updating part 430 of the SCS 122 reads out the corresponding updating data from the updating data area into which the updating data packet has been loaded, and updates (rewrites) the flash ROM 204 from the updating target address with the updating data.

In step S123, the ROM updating part 430 of the SCS 122 determines whether the rescue mode thread of the OCS 126 has been started.

If the ROM updating part 430 of the SCS 122 determines that the rescue mode thread of the OCS 126 has been started (YES in step S123), the ROM updating part 430 of the SCS 122 proceeds to step S124. If the ROM updating part 430 of the SCS 122 determines that the rescue mode thread of the OCS 126 has not been started (NO in step S123), the ROM updating part 430 of the SCS 122 proceeds to step S125.

The ROM updating part 430 of the SCS 122 determines whether the rescue mode thread of the OCS 126 has been started by referring to, for instance, environmental variables.

In step S124, the ROM updating part 430 of the SCS 122 displays the restoration screen of the flash ROM 204 (FIG. 24) on the operations panel 1310 through the rescue mode thread of the OCS 126.

By displaying the restoration screen of the flash ROM 204 on the operations panel 1310 as shown in FIG. 24, it is possible to inform a user that the flash ROM 204 is being updated so that power should not be turned off.

In step S125, the ROM updating part 430 of the SCS 122 compares the updating data read out in step S122 with data on the updated module of the flash ROM 204 after the updating of step S122, and determines whether the updating has been performed correctly. If the ROM updating part 430 of the SCS 122 determines that the updating has been performed correctly (YES in step S125), the ROM updating part 430 of the SCS 122 proceeds to step S128. If the ROM updating part 430 of the SCS 122 determines that the updating has not been performed correctly (NO in step S125), the ROM updating part 430 of the SCS 122 proceeds to step S126.

In step S126, the ROM updating part 430 of the SCS 122 determines whether the rescue mode thread of the OCS 126 has been started.

If the ROM updating part 430 of the SCS 122 determines that the rescue mode thread of the OCS 126 has been started (YES in step S126), the ROM updating part 430 of the SCS 122 proceeds to step S127. If the ROM updating part 430 of the SCS 122 determines that the rescue mode thread of the OCS 126 has not been started (NO in step S126), the ROM updating part 430 of the SCS 122 ends the operation.

In step S127, the ROM updating part 430 of the SCS 122 displays an error screen (FIG. 25) on the operations panel 1310 through the rescue mode thread of the OCS 126.

By displaying the error screen on the operations panel 1310 as shown in FIG. 25, it is possible to inform a user that an error has occurred during the updating of the flash ROM 204 so that it is necessary to call a service center.

On the other hand, in step S128, the ROM updating part 430 of the SCS 122 refers to updating target variables, and determines whether the next updating information is set in the updating target variables. If the ROM updating part 430 of the SCS 122 determines that the next updating information is set in the updating target variables (YES in step S128), the ROM updating part 430 of the SCS 122 repeats the operations in and after step S120. If the ROM updating part 430 of the SCS 122 determines that the next updating information is not set in the updating target variables (NO in step S128), the ROM updating part 430 of the SCS 122 proceeds to step S129.

In step S129, the ROM updating part 430 of the SCS 122 deletes the updating information stored in the updating interruption information.

### [Third Embodiment]

In the above-described first and second embodiments, a description is given of restoration methods in the case where the updating of the flash ROM 204 is interrupted. In the following embodiments a description is given of restoration methods in the case where some or all of the functions of the multi-function apparatus 100 subjected to program updating have been disabled or the operation thereof has been destabilized because of the combination of the updated programs and those that have not been updated In the following, a description is given of the differences from the first and second embodiments, and a description of the same configurations as those of the first and second embodiments is omitted.

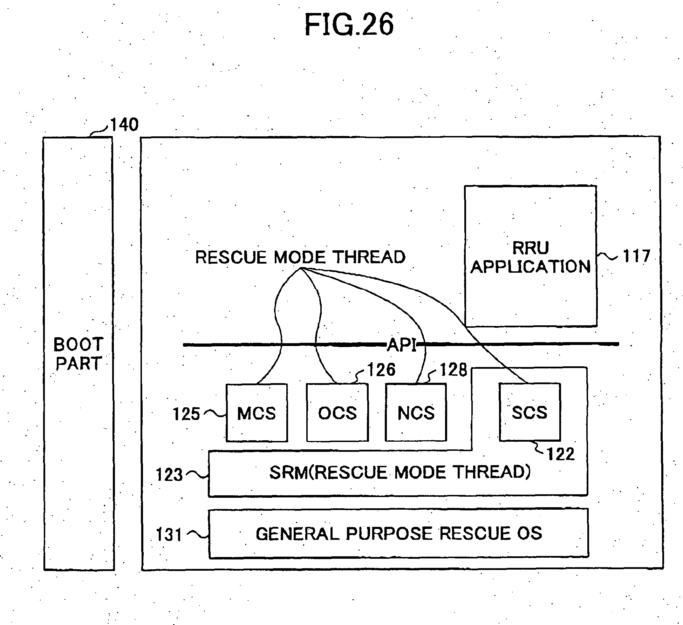

A description is given below, with reference to FIG. 26, of a configuration of the multi-function apparatus 100 in the case where the general purpose rescue OS 131 is started by the ROM monitor 410 according to a third embodiment of the present invention.

Compared with the configuration of the multi-function apparatus 100 of the second embodiment shown in FIG. 20, the configuration of the multi-function apparatus 100 shown in FIG. 26 includes the rescue mode thread of the NCS 128 and the RRU application 117.

The rescue mode thread of the NCS 128 receives a ROM updating data packet for the flash ROM 204 from, for instance, the host computer of the manufacturer of the multi-function apparatus 100 or a third vendor that is an application developer, the host computer being connected to the network.

As described above, the RRU application 117 expands the updating data packet received by the NCS 128 via the network into updating data, and stores the updating data in an updating data area in the SDRAM 203 reserved by the rescue mode thread of the MCS 125.

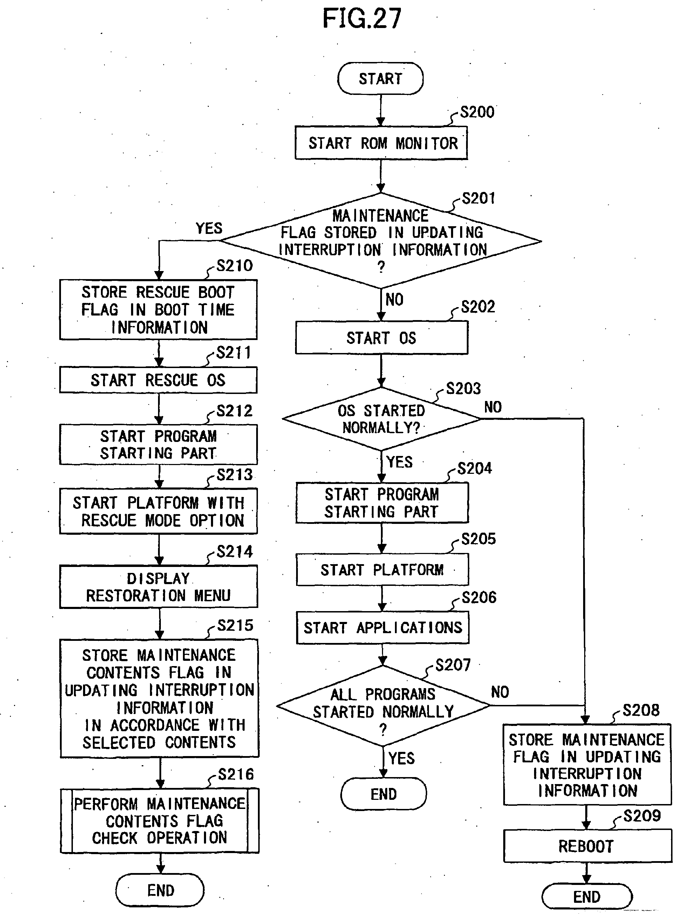

Next, a description is given, with reference to FIG. 27, of an OS switching operation at the time of booting according to the third embodiment. FIG. 27 is a flowchart for illustrating the OS switching operation at the time of booting according to the third embodiment.

When the multi-function apparatus 100 is turned on, in step S200, the multi-function apparatus 100 starts the ROM monitor 410.

Then, in step S201, the ROM monitor 410 determines whether a maintenance flag is stored in the updating interruption information. If the ROM monitor 410 determines that a maintenance flag is stored in the updating interruption information (YES in step S201), the ROM monitor 410 proceeds to step S210. If the ROM monitor 410 determines that a maintenance flag is not stored in the updating interruption information (NO in step S201), the ROM monitor 410 proceeds to step S202.

In step S202, the ROM monitor 410 starts the general purpose OS 121.

Then, in step S203, the ROM monitor 410 determines whether the general purpose OS 121 has been started normally in step S202. If the ROM monitor 410 determines that the general purpose OS 121 has been started normally (YES in step S203), the operation proceeds to step S204. If the ROM monitor 410 determines that the general purpose OS 121 has not been started normally (NO in step 5203), the ROM monitor 410 proceeds to step S208.

In step S204, the general purpose OS 121 starts the program starting part 420.

In step S205, the service starting part 422 included in the program starting part 420 starts the platform 120.

In step S206, the application starting part 423 included in the program starting part 420 starts the applications 130.

In step S207, the program starting part 420 determines whether all of the programs of the platform 120 started in step S205 and the applications 130 started in step S206 to be started have been started normally. If the program starting part 420 determines that all of the programs to be started have been started normally (YES in step S207) the program starting part 420 ends the operation. If the program starting part 420 determines that all of the programs to be started have not been started normally (NO in step S207), the program starting part 420 proceeds to step S208.

In step S208, the ROM monitor 410 or the program starting part 420 stores a maintenance flag in the updating interruption information.

Then, in step S209, the ROM monitor 410 or the program starting part 420 reboots the multi-function apparatus 100.

On the other hand, in step S210, the ROM monitor 410 stores a rescue boot flag in boot time information.

Then, in step S211, the ROM monitor 410 starts the general purpose rescue OS 131.

In step 5212, the general purpose rescue OS 131 started in step S211 starts the program starting part 420.

In step S213, the service starting part 422 included in the program starting part 420 refers to the boot time information, and when the rescue boot flag is stored, the service starting part 422 starts the platform 120 with a rescue mode option.

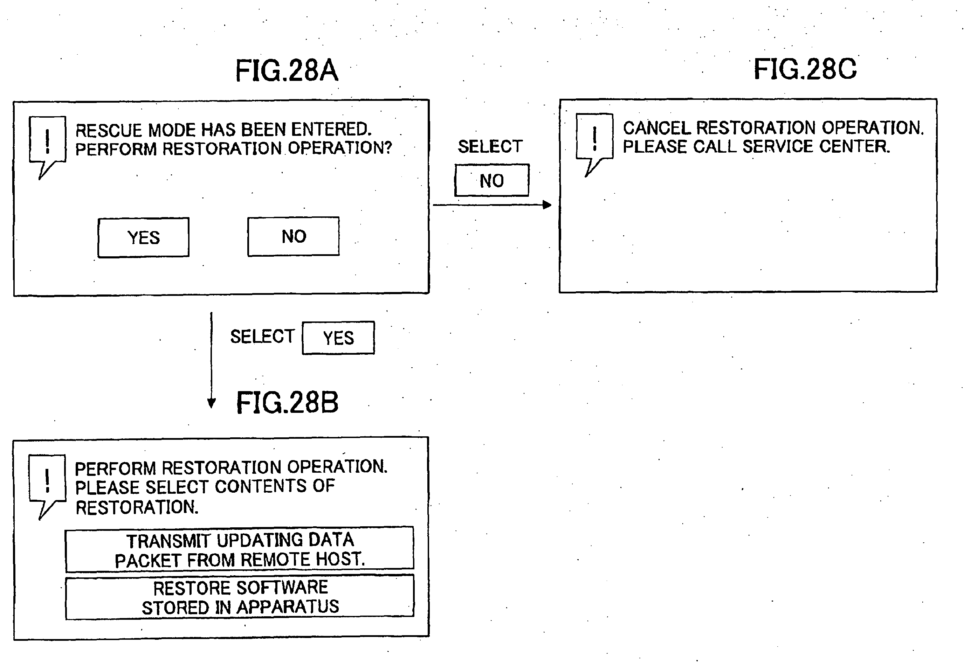

In step S214, the rescue mode thread of the OCS 126 displays below-described restoration menu screens shown in FIGS. 28A through 28C on the operations panel 1310. In the following description, it is assumed that a user selects YES on the screen of FIG. 28A.

In step S215, the rescue mode thread of the OCS 126 stores a maintenance contents flag in the updating interruption information in accordance with restoration contents (a restoration method) selected on the screen of FIG. 28B.

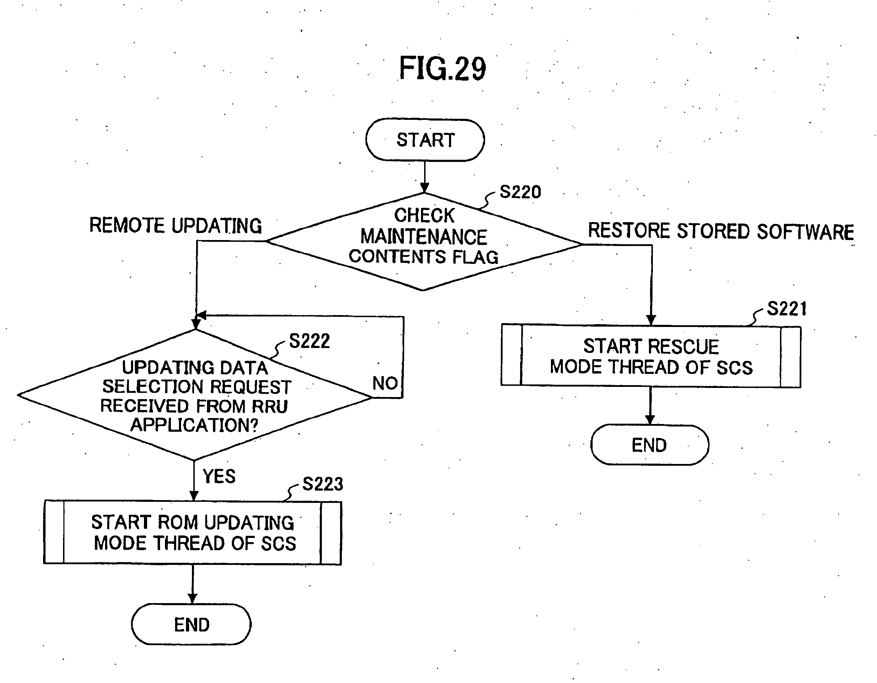

In step S216, the SCS 122 performs a below-described maintenance contents flag check operation as shown in FIG. 29.

Next, a description is given, with reference to FIGS. 28A through 28C, of restoration menu screens

As shown in FIG. 28A, the rescue mode thread of the OCS 126 first displays a screen for determining whether to perform a restoration operation on the operations panel 1310. If the rescue mode thread of the OCS 126 determines that a user has selected YES on the screen of FIG. 28A, the rescue mode thread of the OCS 126 displays a screen for selecting the contents of restoration on the operations panel 1310 as shown in FIG. 28B. If the rescue mode thread of the OCS 126 determines that the user has selected NO on the screen of FIG. 28A, the rescue mode thread of the OCS 126 displays a screen indicating cancellation of the restoration operation on the operations panel 1310 as shown in FIG. 28C.

Next, a description is given, with reference to FIG. 29, of a maintenance contents flag check operation by the SCS 122. FIG. 29 is a flowchart for illustrating the maintenance contents flag check operation by the SCS 122.

In step S220, the SCS 122 checks the maintenance contents flag stored in the updating interruption information in step S215 of FIG. 27. As a result of checking the maintenance contents flag, if the SCS 122-determines that the user has selected TRANSMIT UPDATING DATA PACKET FROM REMOTE HOST as the contents of restoration on the screen of FIG. 28B, the SCS 122 proceeds to step S222. If the SCS 122 determines that the user has selected RESTORE SOFTWARE STORED IN APPARATUS as the contents of restoration on the screen of FIG. 28B, the SCS 122 proceeds to step S221.

In step S221, the SCS 122 starts the rescue mode thread of the SCS 122.

On the other hand, in step S222, the SCS 122 determines whether the SCS 122 has received a request to select updating data from the RRU application 117. If the SCS 122 determines that the SCS 122 has received a request to select updating data from the RRU application 117 (YES in step S222), the SCS proceeds to step S223. If the SCS 122 determines that the SCS 122 has not received a request to select updating data from the RRU application 117 (NO in step S222), the SCS repeats the operation of step S222.

In step S223, the SCS 122 starts the ROM updating mode thread of the SCS 122.

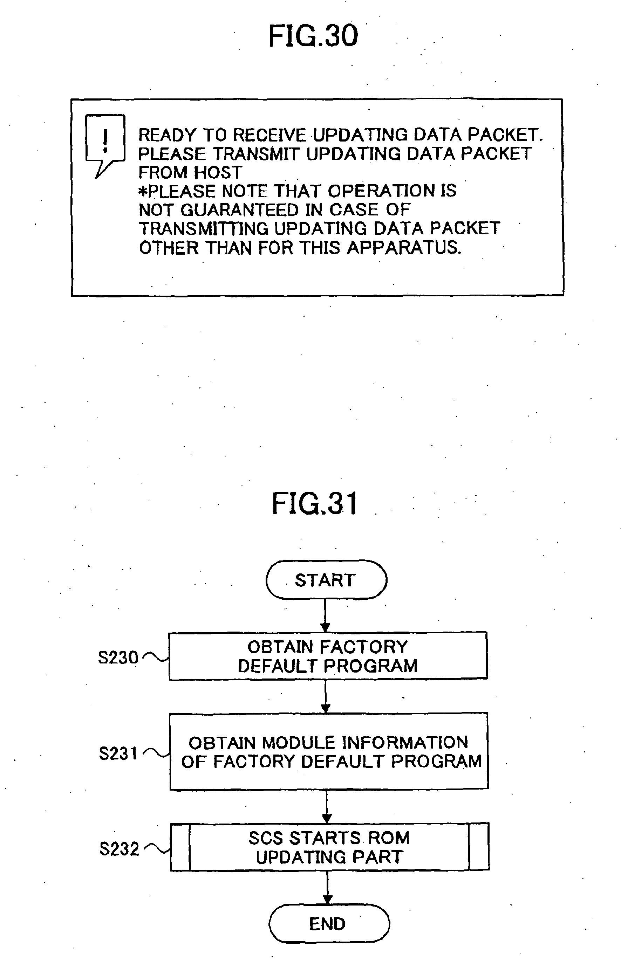

In the operation shown in FIG. 29, if the SCS 122 determines in step S220 that the user has selected TRANSMIT UPDATING DATA PACKET FROM REMOTE HOST as the contents of restoration on the screen of FIG. 28B, the rescue mode thread of the OCS 126 may display a reception standby screen on the operations panel 1310 as shown in FIG. 30.

Next, a description is given, with reference to FIG. 31, of an updating data selection operation performed in the rescue mode thread of the SCS 122 started in step S221 of FIG. 29 according to the third embodiment. FIG. 31 is a flowchart for illustrating the updating data selection operation performed in the rescue mode thread of the SCS 122 according to the third embodiment.

In step S230, the rescue mode thread of the SCS 122 obtains a factory default (original) program (a program before shipment) that operates normally from, for instance, the HDD 1303.

In step S231, the rescue mode thread of the SCS 122 obtains module information such as the module ID, the updating target address, and the updating data size of the normally operating factory default program from, for instance, HDD 1303.

In step S232, the rescue mode thread of the SCS 122 starts the ROM updating part 430 of the SCS 122.

By obtaining a factory default program and updating the flash ROM 204 by starting the ROM updating part 430 of the SCS 122 as shown in FIG. 31, the program can be restored to the normally operating state before shipment.

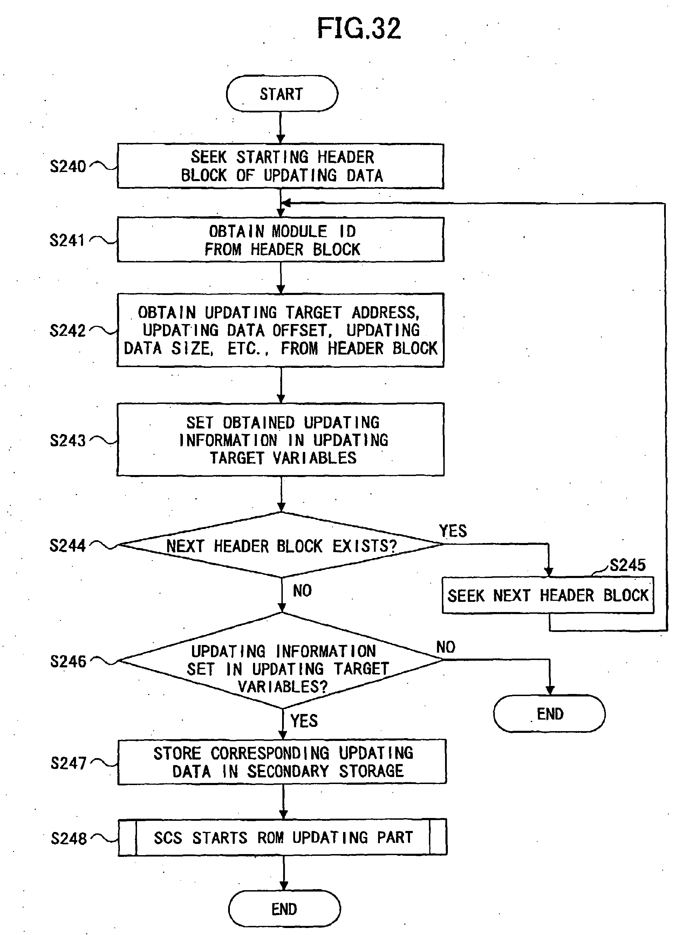

Next, a description is given, with reference to FIG. 32, of an updating data selection operation performed in the ROM updating mode thread of the SCS 122 started in step S223 of FIG. 29 according to the third embodiment. FIG. 32 is a flowchart for illustrating the updating data selection operation performed in the ROM updating mode thread of the SCS 122 according to the third embodiment.

In step S240, the ROM updating mode thread of the SCS 122, which has been notified by the RRU application 117 of the starting address of an ' updating data area into which an updating data packet has been loaded, seeks the starting header block of updating data based on the starting address.

In step S241, the ROM updating mode thread of the SCS 122 obtains a module ID from the header block.

In step S242, the ROM updating mode thread of the SCS 122 obtains an updating target address, an updating data offset, an updating data size, etc., from the header block.

In step S243, the ROM updating mode thread of the SCS 122 sets a group of the module ID, the updating target address, the updating data offset, the updating data size, etc., in updating target variables as updating information.

In step S244, the ROM updating mode thread of the SCS 122 determines whether the next header block exists. If the ROM updating mode thread of the SCS 122 determines that the next header block exists (YES in step S244), the ROM updating mode thread of the SCS 122 proceeds to step S245. If the ROM updating mode thread of the SCS 122 determines that the next header block does not exist (NO in step S244), the ROM updating mode thread of the SCS 122 proceeds to step S246.

In step S245, the ROM updating mode thread of the SCS 122 seeks the next header block, and repeats the operations in and after step S241.

On the other hand, in step S246, the ROM updating mode thread of the SCS 122 refers to the updating target variables, and determines whether the updating information is set in the updating target variables. If the ROM updating mode thread of the SCS 122 determines that the updating information is set in the updating target variables (YES in step S246), the ROM updating mode thread of the SCS 122 proceeds to step S247. If the ROM updating mode thread of the SCS 122 determines that the updating information is not set in the updating target variables (NO in step S246), the ROM updating mode thread of the SCS 122 ends the operation.

In step S247, the ROM updating mode thread of the SCS 122 stores the corresponding updating data stored in the updating data area into which the updating data packet has been loaded in a secondary storage device such as the HDD 1303.

Then, in step S248, the ROM updating mode thread of the SCS 122 starts the ROM updating part 430 of the SCS 122.

By obtaining updating data from a remote host and updating the flash ROM 204 by starting the ROM updating mode thread and the ROM updating part 430 of the SCS 122 as shown in FIGS. 29 and 32, a program (programs) can be corrected.

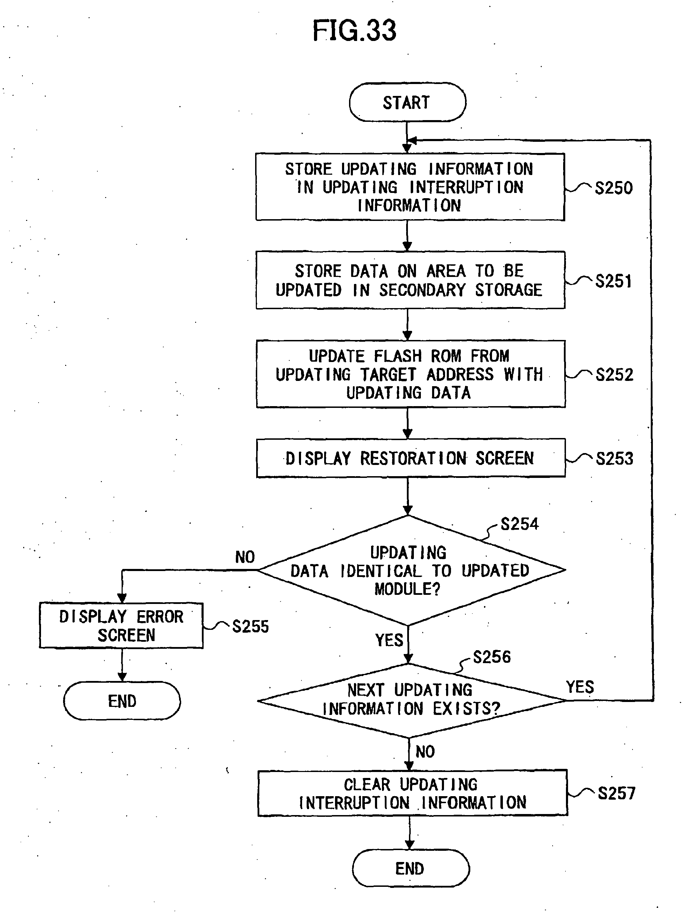

Next, a description is given, with reference to FIG. 33, of a ROM updating operation by the ROM updating part 430 of the SCS 122 according to the third embodiment. FIG. 33 is a flowchart for illustrating the ROM updating operation by the ROM updating part 430 of the SCS 122 according to the third embodiment.

In step S250, the ROM updating part 430 of the SCS 122 stores the corresponding updating information such as the module ID, the updating target address, the updating data offset, and the updating data size in the updating interruption information.

In step S251, the ROM updating part 430 of the SCS 122 stores, in a secondary storage device such as the HDD 1303, data on a corresponding area of the flash ROM 204 to be updated (replaced) with the updating data.

Then, in step S252, the ROM updating part 430 of the SCS 122 reads out the corresponding updating data from the updating data area into which the updating data packet has been loaded, and updates (rewrites) the flash ROM 204 from the updating target address with the updating data.

In step S253, the ROM updating part 430 of the SCS 122 displays the restoration screen (FIG. 24) on the operations panel 1310 through the rescue mode thread of the OCS 126.

In step S254, the ROM updating part 430 of the SCS 122 compares the updating data read out in step S252 with data on the updated module of the flash ROM 204 after the updating of step S252, and determines whether the updating has been performed correctly. If the ROM updating part 430 of the SCS 122 determines that the updating has been performed correctly (YES in step S254), the ROM updating part 430 of the SCS 122 proceeds to step S256. If the ROM updating part 430 of the SCS 122 determines that the updating has not been performed correctly (NO in step S254), the ROM updating part 430 of the SCS 122 proceeds to step S255.

In step S255, the ROM updating part 430 of the SCS 122 displays the error screen (FIG. 25) on the operations panel 1310 through the rescue mode thread of the OCS 126.

On the other hand, in step S256, the ROM updating part 430 of the SCS 122 refers to the updating target variables, and determines whether the next updating information is set in the updating target variables. If the ROM updating part 430 of the SCS 122 determines that the next updating information is set in the updating target variables (YES in step S256), the ROM updating part 430 of the SCS 122 repeats the operations in and after step S250 If the ROM updating part 430 of the SCS 122 determines that the next updating information is not set in the updating target variables (NO in step S256), the ROM updating part 430 of the SCS 122 proceeds to step S257.

In step S257, the ROM updating part 430 of the SCS 122 deletes the updating information stored in the updating interruption information.

The ROM updating part 430 of the SCS 122 may determine whether the rescue mode thread of the OCS 126 has been started as shown in FIG. 23 of the second embodiment. In this case, the ROM updating part 430 of the SCS 122 may perform the operations of steps S253 and S255 if the rescue mode thread of the OCS 126 has been started. In the description of FIG. 33, it is assumed for simplification that the rescue mode thread of the OCS 126 has been started.

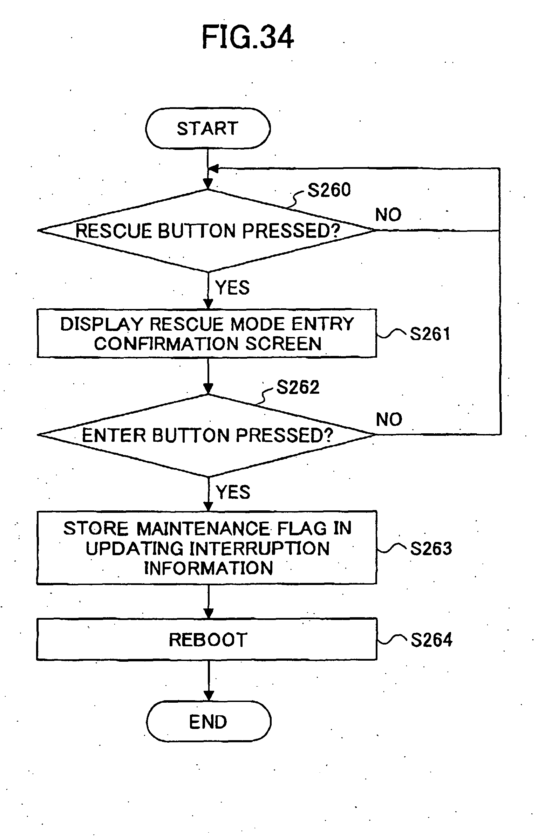

Next, a description is given, with reference to FIG. 34, of an operation in a case where a rescue mode is entered because of one or more of the applications 130 that do not operate normally after the multi-function apparatus 100 has been booted normally. FIG. 34 is a flowchart for illustrating the operation of entering the rescue mode after normal booting.

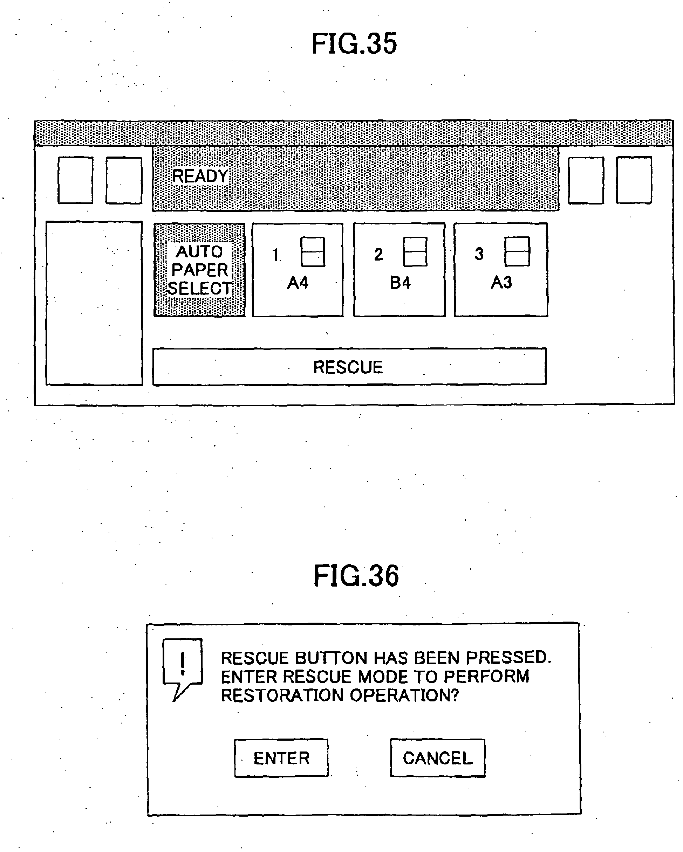

In step S260, the normal mode thread of the OCS 126 determines whether the RESCUE button of a screen (FIG. 35) displayed on the operations panel 1310 has been pressed. If the normal mode thread of the OCS 126 determines that the RESCUE button of the screen displayed on the operations panel 1310 has been pressed (YES in step S260), the normal mode thread of the OCS 126 proceeds to step S261. If the normal mode thread of the OCS 126 determines that the RESCUE button of the screen displayed on the operations panel 1310 has not been pressed (NO in step S260), the normal mode thread of the OCS 126 repeats the operation of step S260.

In step S261, the normal mode thread of the OCS 126 displays a screen for confirming whether to enter the rescue mode (FIG. 36) on the operations panel 1310.

In step S262, the normal mode thread of the OCS 126 determines whether the ENTER button of the rescue mode entry confirmation screen has been pressed. If the normal mode thread of the OCS 126 determines that the ENTER button of the rescue mode entry confirmation screen has been pressed (YES in step S262), the operation proceeds to step S263. If the normal mode thread of the OCS 126 determines that the CANCEL button of the rescue mode entry confirmation screen has been pressed (NO in step S262), the normal mode thread of the OCS 126 displays the screen shown in FIG. 35 on the operations panel 1310, and repeats the operations in and after step S260.

In step S263, for instance, the normal mode thread of the SCS 122, which has been notified by the normal mode thread of the OCS 126 that the ENTER button of the rescue mode entry confirmation screen has been pressed, stores a maintenance flag in the updating interruption information.

In step S264, for instance, the ROM monitor 410 or the program starting part 420, which has received a notification from the normal mode thread of the SCS 122, reboots the multi-function apparatus 100.

The multi-function apparatus 100 rebooted by the operation shown in FIG. 34 performs an operation as shown in FIG. 27.

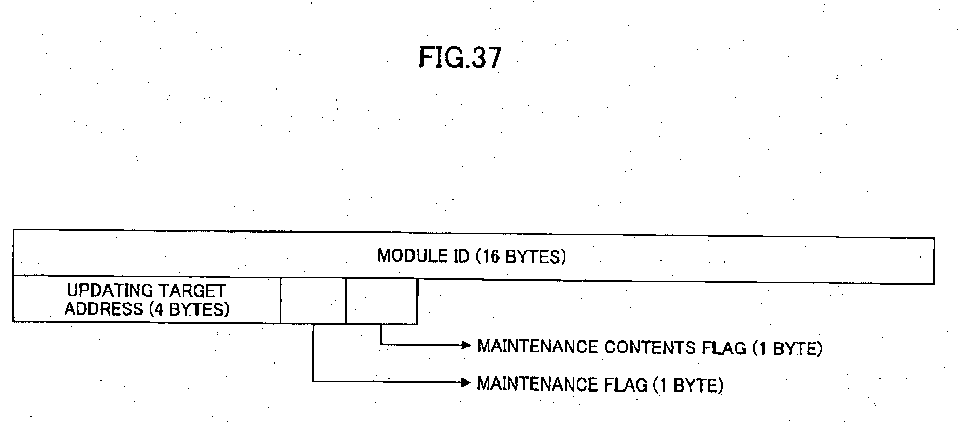

Next, a description is given, with reference to FIG. 37, of a layout of the updating interruption information in the case of storing the updating interruption information in the NVRAM space (FIG. 15) according to the third embodiment. FIG. 37 is a diagram for illustrating the layout of the updating interruption information in the case of storing the updating interruption information in the NVRAM space according to the third embodiment.

As shown in FIG. 37, the updating interruption information includes, for instance, a 16-byte module ID, a 4-byte updating target address, a 1-byte maintenance flag, and a 1-byte maintenance contents flag.

In the case of storing the updating interruption information in the HDD 1303 as shown in FIGS. 18 and 19, the maintenance flag and the maintenance contents flag may be contained in, for instance, the updating interruption information file.

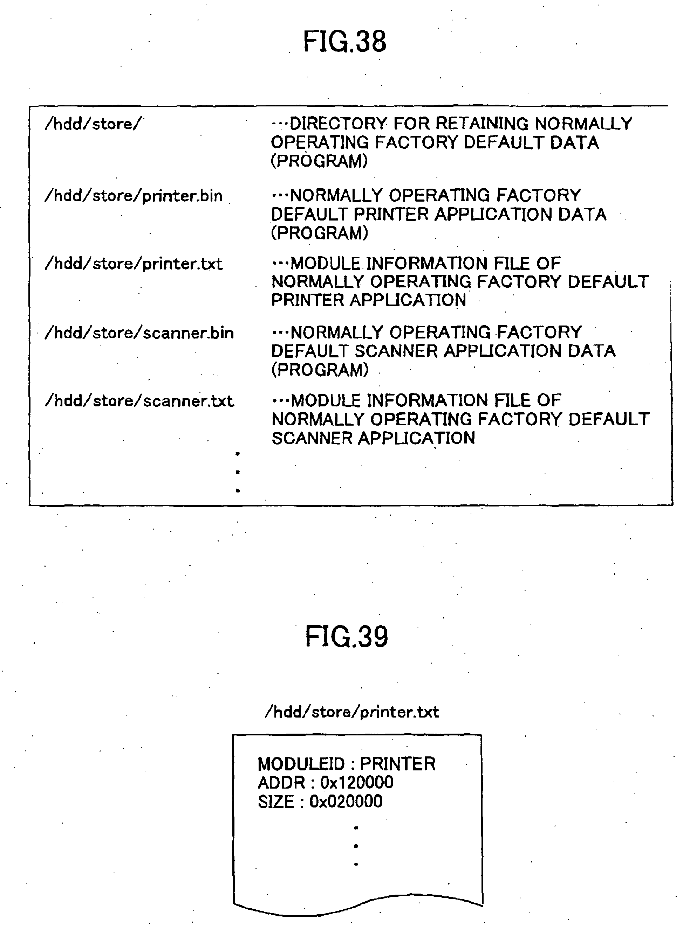

Next, a description is given, with reference to FIG. 38, of a directory and file configuration of the HDD 1303 according to the third embodiment. FIG. 38 is a diagram for illustrating the directory and file configuration of the HDD 1303 according to the third embodiment.

Referring to FIG. 38, the HDD 1303 has a "store" directory as a directory for retaining factory default data (program) that operates normally The "store" directory stores normally operating factory default data (program) corresponding to each module forming the applications 130 and the platform 120, and a module information file related to each module.

A description is given below, with reference to FIG. 39, of an example of the contents of the module information file of the normally operating factory default printer application 111 as an example module information file. FIG. 39 is a diagram for illustrating the contents of the module information file of the normally operating factory default printer application 111.

Referring to FIG. 39, the module information file includes a module ID, an updating target address and a module size.

If the screen of FIG. 28B is configured so that only RESTORE SOFTWARE STORED IN APPARATUS can be displayed or selected, the rescue mode thread of the NCS 128 and the RRU application 117 may not be included in the configuration of the multi-function apparatus 100 shown in FIG. 26.

### (Fourth Embodiment]

In the above-described third embodiment, the ROM updating part 430 of the SCS 122 displays restoration information as a restoration screen on the operations panel 1310 through the rescue mode thread of the OCS 126 as shown in FIG. 33. However, the ROM updating part 430 of the SCS 122 may not only display the restoration information on the operations panel 1310, but also transmit the restoration information to a remote host through the rescue mode thread of the NCS 128.

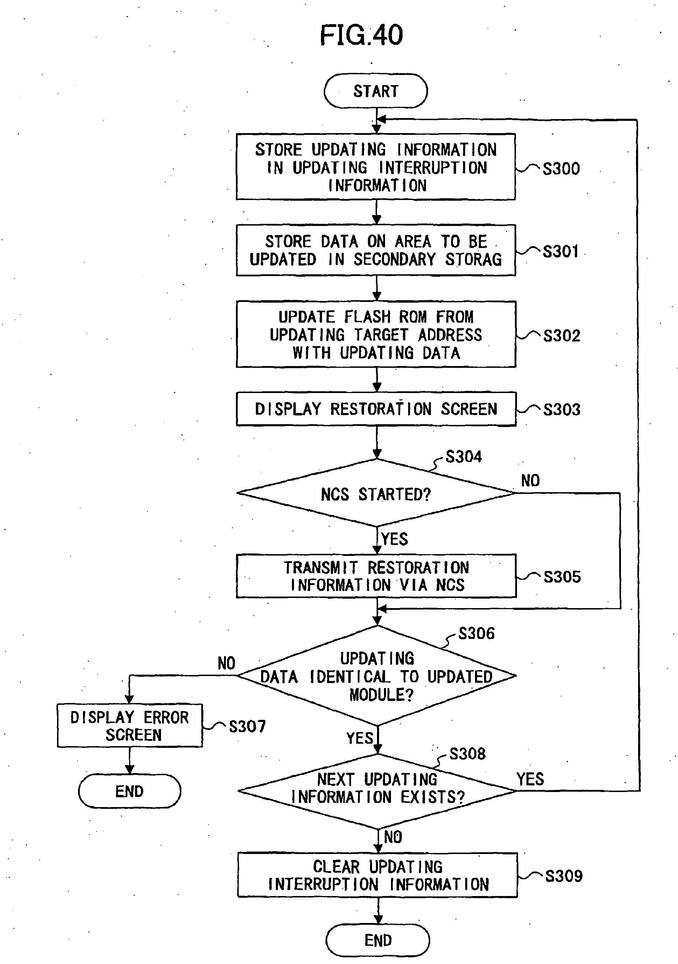

A description is given below, with reference to FIG. 40, of a ROM updating operation by the ROM updating part 430 of the SCS 122 according to a fourth embodiment of the present invention. FIG. 40 is a flowchart for illustrating the ROM updating operation by the ROM updating part 430 of the SCS 122 according to the fourth embodiment.

In step S300, the ROM updating part 430 of the SCS 122 stores the corresponding updating information such as the module ID, the updating target address, the updating data offset, and the updating data size in the updating interruption information.

In step S301, the ROM updating part 430 of the SCS 122 stores, in a secondary storage device such as the HDD 1303, data on a corresponding area of the flash ROM 204 to be updated (replaced) with the updating data.

Then, in step S302, the ROM updating part 430 of the SCS 122 reads out the corresponding updating data from the updating data area into which the updating data packet has been loaded, and updates (rewrites) the flash ROM 204 from the updating target address with the updating data.

In step S303, the ROM updating part 430 of the SCS 122 displays the restoration screen (FIG. 24). on the operations panel 1310 through the rescue mode thread of the OCS 126.

In step S304, the ROM updating part 430 of the SCS 122 determines whether the rescue mode thread of the NCS 128 has been started.

If the ROM updating part 430 of the SCS 122 determines that the rescue mode thread of the NCS 128 has been started (YES in step S304), the ROM updating part 430 of the SCS 122 proceeds to step S305. If the ROM updating part 430 of the SCS 122 determines that the rescue mode thread of the NCS 128 has not been started (NO in step S304), the ROM updating part 430 of the SCS 122 proceeds to step S306.

The ROM updating part 430 of the SCS 122 determines whether the rescue mode thread of the NCS 128 has been started by, for instance, referring to the environmental variables.

In step S305, the ROM updating part 430 of the SCS 122 transmits the restoration information to the remote host through the rescue mode thread of the NCS 128.

In step S306, the ROM updating part 430 of the SCS 122 compares the updating data read out in step S302 with data on the updated module of the flash ROM 204 after the updating of step S302, and determines whether the updating has been performed correctly. If the ROM updating part 430 of the SCS 122 determines that the updating has been performed correctly (YES in step S306), the ROM updating part 430 of the SCS 122 proceeds to step S308. If the ROM updating part 430 of the SCS 122 determines that the updating has not been performed correctly (NO in step S306), the ROM updating part 430 of the SCS 122 proceeds to step S307.

In step S307, the ROM updating part 430 of the SCS 122 displays the error screen (FIG. 25) on the operations panel 1310 through the rescue mode thread of the OCS 126.

On the other hand, in step S308, the ROM updating part 430 of the SCS 122 refers to the updating target variables, and determines whether the next updating information is set in the updating target variables. If the ROM updating part 430 of the SCS 122 determines that the next updating information is set in the updating target variables (YES in step S308), the ROM updating part 430 of the SCS 122 repeats the operations in and after step S300 If the ROM updating part 430 of the SCS 122 determines that the next updating information is not set in the updating target variables (NO in step S308), the ROM updating part 430 of the SCS 122 proceeds to step S309.

In step S309, the ROM updating part 430 of the SCS 122 deletes the updating information stored in the updating interruption information.

The ROM updating part 430 of the SCS 122 may determine whether the rescue mode thread of the OCS 126 has been started as shown in FIG. 23 of the second embodiment. In this case, the ROM updating part 430 of the SCS 122 may perform the operations of steps S303 and S307 if the rescue mode thread of the OCS 126 has been started. In the description of FIG. 40, it is assumed for simplification that the rescue mode thread of the OCS 126 has been started.

### [Fifth Embodiment]

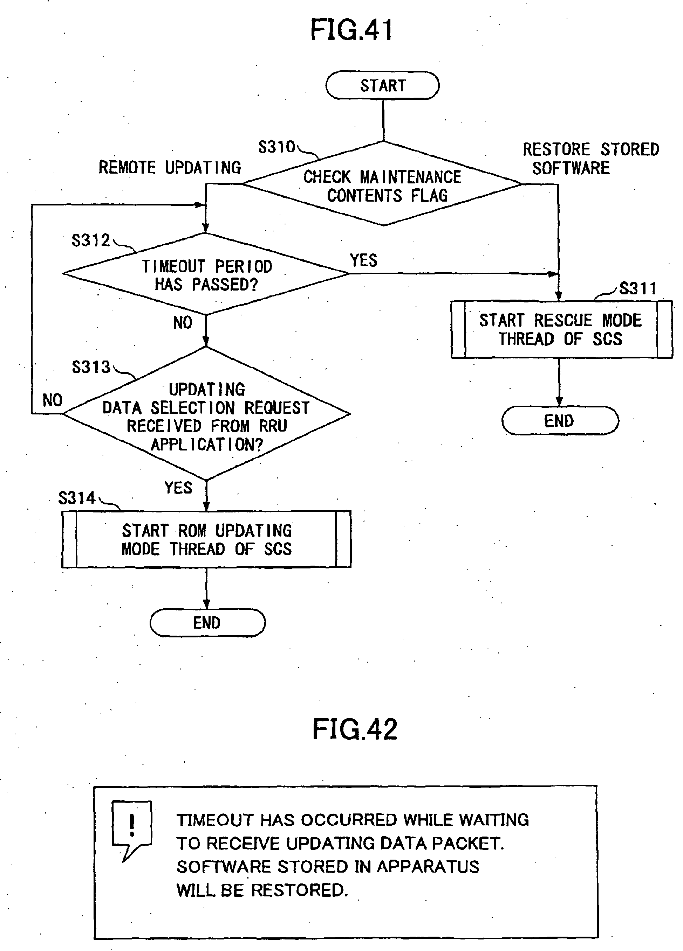

Next, a description is given, with reference to FIG. 41, of a maintenance contents flag check operation by the SCS 122 according to a fifth embodiment of the present invention. This operation is a variation of the maintenance contents flag check operation by the SCS 122 shown in FIG. 29 of the third embodiment. FIG. 41 is a flowchart for illustrating the maintenance contents flag check operation by the SCS 122 according to the fifth embodiment. In the following, a description is given of the differences from the third embodiment, and a description of the same configurations as those of the third embodiment is omitted.

In step S310 of FIG. 41, the SCS 122 checks the maintenance contents flag stored in the updating interruption information in, for instance, step S215 of FIG. 27 of the third embodiment. As a result of checking the maintenance contents flag, if the SCS 122 determines that the user has selected TRANSMIT UPDATING DATA PACKET FROM REMOTE HOST as the contents of restoration on the screen of FIG. 26B of the third embodiment, the SCS 122 proceeds to step S312. If the SCS 122 determines that the user has selected RESTORE SOFTWARE STORED IN APPARATUS as the.contents of restoration on the screen of FIG. 28B, the SCS 122 proceeds to step S311.

In step S311, the SCS 122 starts the rescue mode thread of the SCS 122.

On the other hand, in step S312, the SCS 122 determines whether a predetermined timeout period (for instance, 4 seconds) has passed. If the SCS 122 determines that the predetermined timeout period has passed (YES in step S312), the SCS 122 proceeds to step S311. If the SCS 122 determines that the predetermined timeout period has not passed (NO in step S312), the SCS 122 proceeds to step S313. When the SCS 122 determines in step S312 that the predetermined timeout period has passed, the rescue mode thread of the OCS 126 may display a forced restoration entry screen (FIG. 42) on the operations panel 1310 before the SCS 122 proceeds to step S313.

In step S313, the SCS 122 determines whether the SCS 122 has received a request to select updating data from the RRU application 117. If the SCS 122 determines that the SCS 122 has received a request to select updating data from the RRU application 117 (YES in step S313), the SCS proceeds to step S314. If the SCS 122 determines that the SCS 122 has not received a request to select updating data from the RRU application 117 (NO in step S313), the SCS repeats the operation of step S312.

In step S314, the SCS 122 starts the ROM updating mode thread of the SCS 122.

FIG. 42 is a diagram showing a forced restoration entry screen.

As shown in FIG. 42, information to the effect that a timeout has occurred while waiting to receive an updating data packet so that the software stored in the apparatus (the multi-function apparatus 100) is to be restored is displayed on the forced restoration entry screen.

By performing an operation as shown in the fifth embodiment and/or operations shown in below-described embodiments, all or user-selected programs may be restored to their respective factory-default or older (previous) versions.

### [Sixth Embodiment]

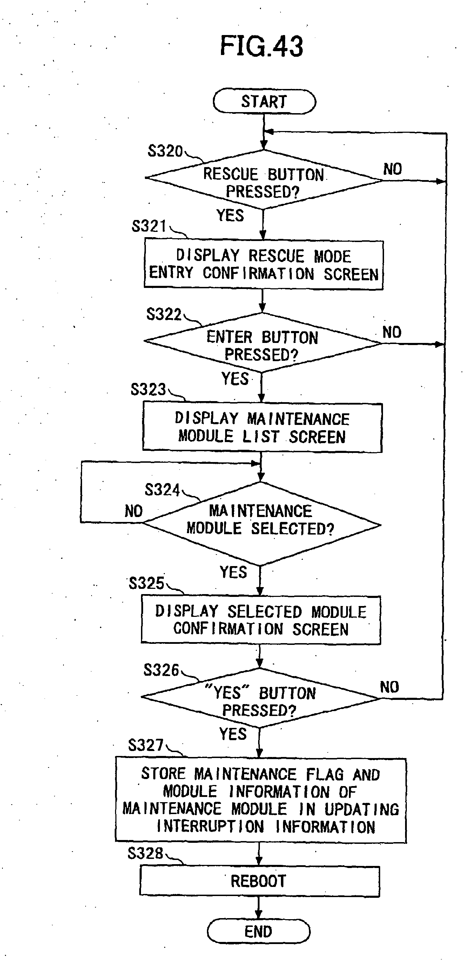

Next, a description is given, with reference to FIG. 43, of an operation in the case where the rescue mode is entered because of one or more of the applications 130 that do not operate normally after the multi-function apparatus 100 has been booted normally according to a sixth embodiment of the present invention. FIG. 43 is a flowchart for illustrating the operation of entering the rescue mode after normal booting according to the sixth embodiment. In the following, a description is given of the differences from the above-described third embodiment, and a description of the same configurations as those of the third embodiment is omitted.

In step S320, the normal mode thread of the OCS 126 determines whether the RESCUE button of the screen (FIG. 35 of the third embodiment) displayed on the operations panel 1310 has been pressed. If the normal mode thread of the OCS 126 determines that the RESCUE button of the screen displayed on the operations panel 1310 has been pressed (YES in step S320), the normal mode thread of the OCS 126 proceeds to step S321. If the normal mode thread of the OCS 126 determines that the RESCUE button of the screen displayed on the operations panel 1310 has not been pressed (NO in step S320), the normal mode thread of the OCS 126 repeats the operation of step S320.

In step S321, the normal mode thread of the OCS 126 displays the rescue mode entry confirmation screen (FIG. 36 of the third embodiment) on the operations panel 1310.

In step S322, the normal mode thread of the OCS 126 determines whether the ENTER button of the rescue mode entry confirmation screen has been pressed. If the normal mode thread of the OCS 126 determines that the ENTER button of the rescue mode entry confirmation screen has been pressed (YES in step S322), the operation proceeds to step S323. If the normal mode thread of the OCS 126 determines that the CANCEL button of the rescue mode entry confirmation screen has been pressed (NO in step S322), the normal mode thread of the OCS 126 displays the screen shown in FIG. 35 on the operations panel 1310, and repeats the operations in and after step S320.

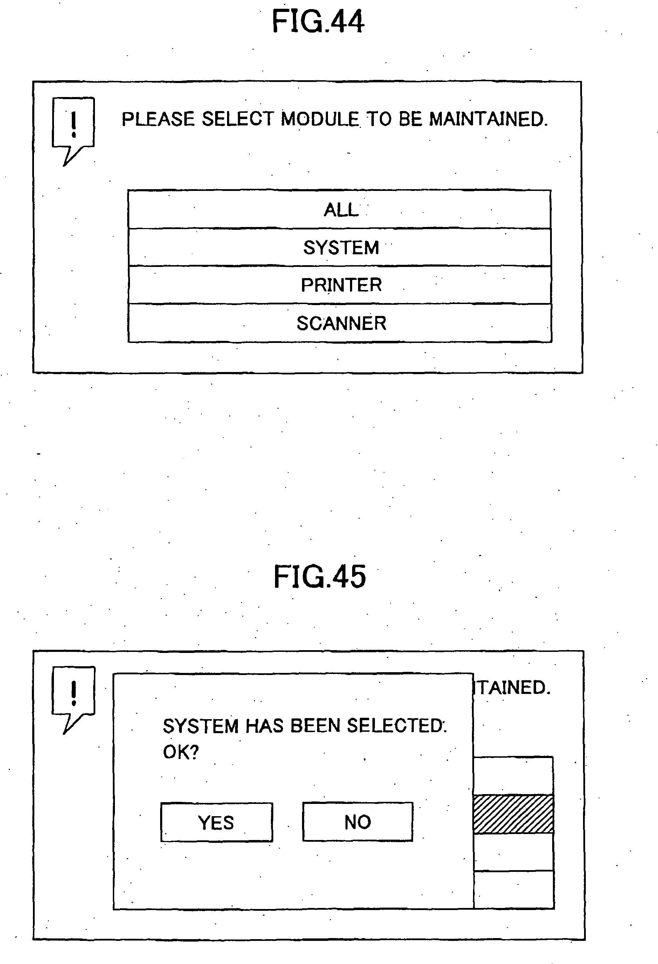

In step S323, the normal mode thread of the OCS 126 displays a maintenance module list screen for letting a user select a module to be maintained (FIG. 44) on the operations panel 1310.

In step S324, the normal mode thread of the OCS 126 determines whether a module to be maintained, or a maintenance module, has been selected on the maintenance module list screen of FIG. 44. If the normal mode thread of the OCS 126 determines that a maintenance module has been selected on the maintenance module list screen of FIG. 44 (YES in step S324), the normal mode thread of the OCS 126 proceeds to step S325. If the normal mode thread of the OCS 126 determines that a maintenance module has not been selected on the maintenance module list screen of FIG. 44 (NO in step S324), the normal mode thread of the OCS 126 repeats the operation of step S324.

In step S325, the normal mode thread of the OCS 126 displays a selected module confirmation screen for letting the user confirm the selected module (FIG. 45) on the operations panel 1310.

In step S326, the normal mode thread of the. OCS 126 determines whether a YES button has been pressed on the selected module confirmation screen of FIG. 45. If the normal mode thread of the OCS 126 determines that the YES button has been pressed on the selected module confirmation screen of FIG. 45 (YES in step S326), the operation proceeds to step S327. If the normal mode thread of the OCS 126 determines that a NO button has been pressed on the selected module confirmation screen of FIG. 45 (NO in step S326), the normal mode thread of the OCS 126 repeats the operations in and after step S320.

In step S327, for instance, the normal mode thread of the SCS 122, which has received an ID identifying the maintenance module from the normal mode thread of the OCS 126, stores a maintenance flag and the module information of the maintenance module in the updating interruption information.

In step S328, for instance, the ROM monitor 410 or the program starting part 420, which has received a notification from the normal mode thread of the SCS 122, reboots the multi-function apparatus 100.

FIG. 44 is a diagram showing a maintenance module list screen.

As shown in FIG. 44, a list of modules to be maintained is displayed on the maintenance module list screen. A user refers to a maintenance module list screen as shown in FIG. 44, and selects an object of maintenance, that is, one or more modules to be restored to their respective programs that operated normally.

FIG. 45 is a diagram showing a selected module confirmation screen.

As shown in FIG. 45, information to the effect that the user-selected module should be confirmed is displayed on the selected module confirmation screen.

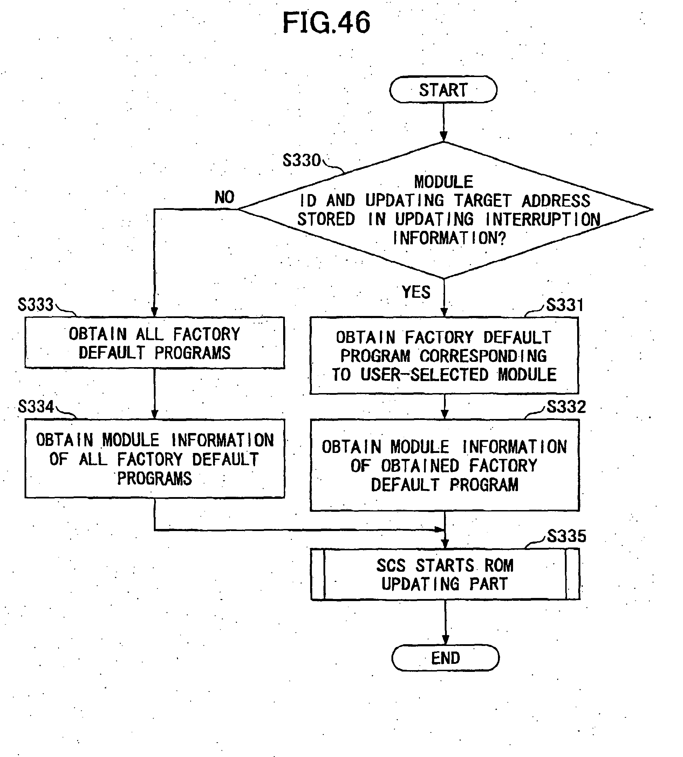

Next, a description is given, with reference to FIG. 46, of an updating data selection operation performed in the rescue mode thread of the SCS 122 according to the sixth embodiment. FIG. 46 is a flowchart for illustrating the updating data selection operation performed in the rescue mode thread of the SCS 122 according to the sixth embodiment.

In step S330, the rescue mode thread of the SCS 122 determines whether a module ID and an .updating target address are stored in the updating interruption information. If the rescue mode thread of the SCS 122 determines that a module ID and an updating target address are stored in the updating interruption information (YES in step S330), the rescue mode thread of the SCS 122 proceeds to step S331. If the rescue mode thread of the SCS 122 determines that a module ID and an updating target address are not stored in the updating interruption information (NO in step S330), the rescue mode thread of the SCS 122 proceeds to step S333.

In step S333, the rescue mode thread of the SCS 122 obtains all factory default programs (programs before shipment) that operate normally from for instance, the HDD 1303.

In step S334, the rescue mode thread of the SCS 122 obtains the module information (module ID, updating target address, updating data size, etc.) of all the factory default programs that operate normally from, for instance, the HDD 1303. Then, the rescue mode thread of the SCS 122 proceeds to step S335.

On the other hand, in step S331, the rescue mode thread of the SCS 122 obtains one or more programs corresponding to the module ID or module IDs stored in the updating interruption information, that is, one or more normally operating factory default programs corresponding to one or more user-selected modules, from, for instance, the HDD 1303.

In step S332, the rescue mode thread of the SCS 122 obtains the module information (module ID, updating target address, updating data size, etc.) of the programs corresponding to the module IDs stored in the updating interruption information, that is, the normally operating factory default programs corresponding to the user-selected modules, from, for instance, the HDD 1303. Then, the rescue mode thread of the SCS 122 proceeds to step S335.

In step S335, the rescue mode thread of the SCS 122 starts the ROM updating part 430 of the SCS 122.

By obtaining all factory default programs or a factory default program corresponding to a module selected by a user, and updating the flash ROM 204 by starting the ROM updating part 430 of the SCS 122 as shown in FIG. 46, all programs or a program/programs corresponding to the module/modules selected by the user can be restored to the normally operating state existing before shipment.

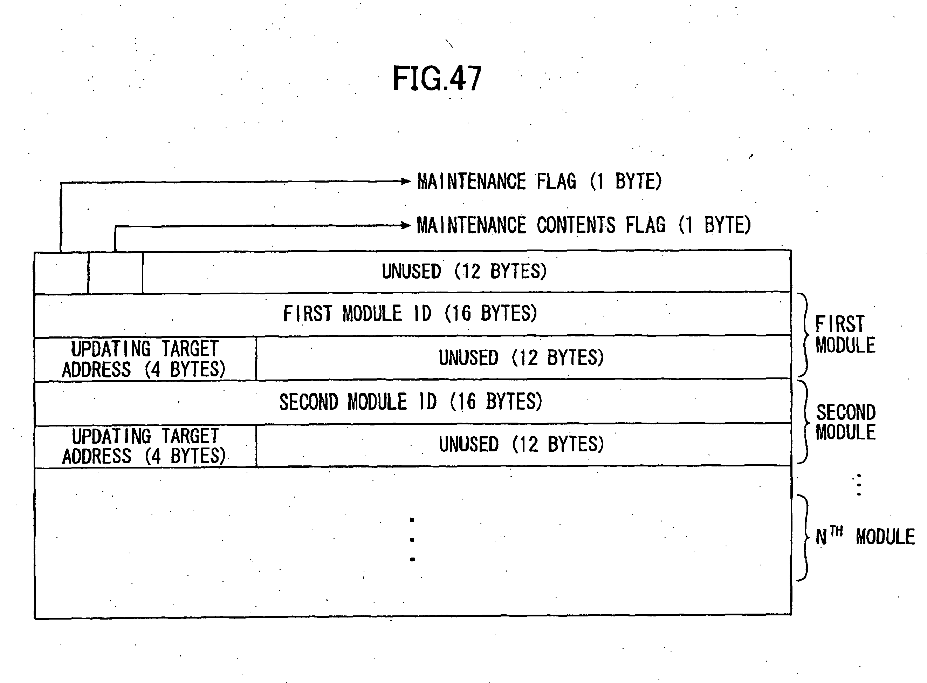

Next, a description is given, with reference to FIG. 47, of a layout of the updating interruption information in the case of storing the updating interruption information in the NVRAM space (FIG. 15) according to the sixth embodiment. FIG. 47 is a diagram for illustrating the layout of the updating interruption information in the case of storing the updating interruption information in the NVRAM space according to the sixth embodiment.

Referring to FIG. 47, the updating interruption information includes, for instance, a 1-byte maintenance flag, a 1-byte maintenance contents flag, at least one 16-byte module ID, and a 4-byte module-related updating target address corresponding to the module ID.

As described above, in the case of storing the updating interruption information in the HDD 1303 the contents of the updating interruption information shown in FIG. 47 may be included in the updating interruption information file, for instance.

By performing operations shown in.the sixth embodiment, all programs or one or more programs corresponding to one or more user-selected modules can be restored to the normally operating state before shipment.

### [Seventh Embodiment]

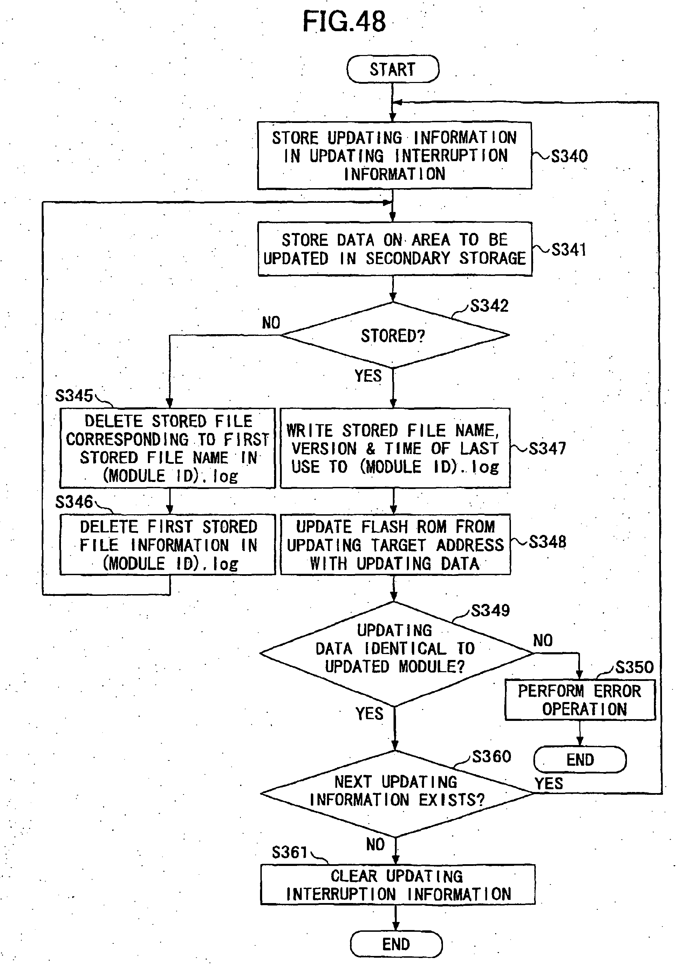

Next, a description is given, with reference to FIG. 48, of a ROM updating operation by the ROM updating part 430 of the SCS 122 according to a seventh embodiment of the present invention. FIG. 48 is a flowchart for illustrating the ROM updating operation by the ROM updating part 430 of the SCS 122 according to the seventh embodiment. In the following, a description is given of the differences from the above-described first through fourth embodiments, and a description of the same configurations as those of the above embodiments is omitted.

In step S340, the ROM updating part 430 of the SCS 122 stores the corresponding updating information such as the module ID, the updating target address, the updating data offset, and the updating data size in the updating interruption information.

In step S341, the ROM updating part 430 of the SCS 122 stores, in a secondary storage device such as the HDD 1303, data on a corresponding area of the flash ROM 204 to be updated (replaced) with the updating data.

In step S342, the ROM updating part 430 of the SCS 122 determines whether the data on the corresponding area of the flash ROM 204 to be updated (replaced) with the updating data has been stored in the secondary storage device such as the HDD 1303. If the ROM updating part 430 of the SCS 122 determines that the data on the corresponding area of the flash ROM 204 to be updated (replaced) with the updating data has been stored in the secondary storage device (YES in step S342), the ROM updating part 430 of the SCS 122 proceeds to step S347. If the ROM updating part 430 of the SCS 122 determines that the data on the corresponding area of the flash ROM 204 to be updated (replaced) with the updating data has not been stored in the secondary storage device (NO in step S342), the ROM updating part 430 of the SCS 122 proceeds to step S345.

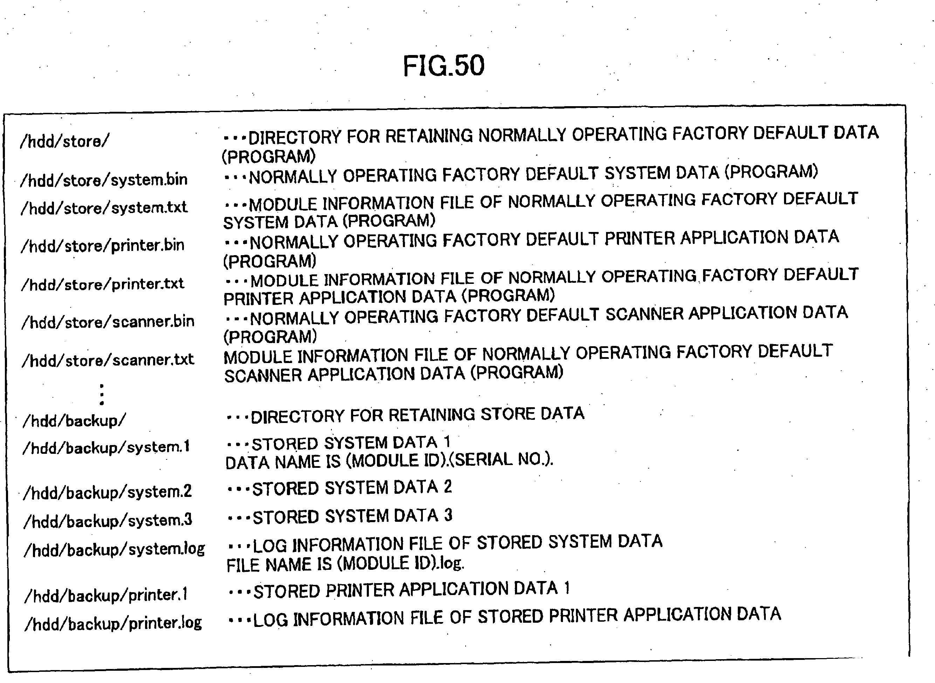

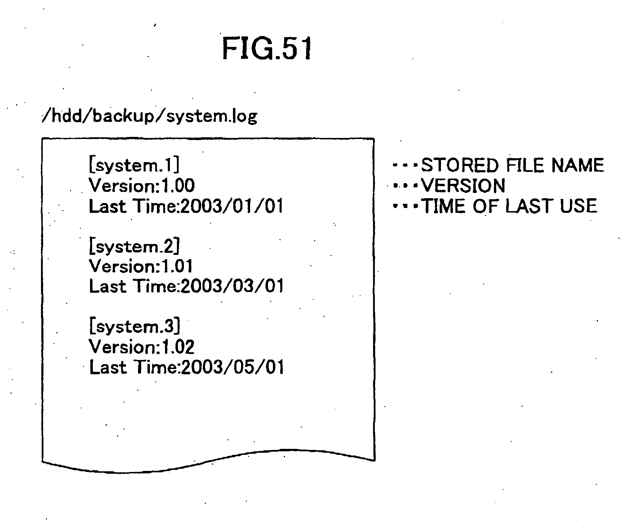

In step S345, the ROM updating part 430 of the SCS 122 deletes a stored file corresponding to a stored file name written first in (module ID).log as shown in FIGS. 50 and 51 in the secondary storage device.

In step S346, the ROM updating part 430 of the SCS 122 deletes stored file information written first in (module ID). log, and repeats the operations in and after step S341.

On the other hand, in step S347, the ROM updating part 430 of the SCS 122 writes a stored file name, a version, and time of last user (current time) to (module ID).log.

In step S348, the ROM updating part 430 of the SCS 122 reads out the corresponding updating data from the updating data area into which the updating data packet has been loaded, and updates (rewrites) the flash ROM 204 from the updating target address with the updating data.

In step S349, the ROM updating part 430 of the SCS 122 compares the updating data read out in step S348 with data on the updated module of the flash ROM 204 after the updating of step S348, and determines whether the updating has been performed correctly. If the ROM updating part 430 of the SCS 122 determines that the updating has been performed correctly (YES in step S349), the ROM updating part 430 of the SCS 122 proceeds to step S360. If the ROM updating part 430 of the SCS 122 determines that the updating has not been performed correctly (NO in step S349), the ROM updating part 430 of the SCS 122 proceeds to step S350.

In step 5350, the ROM updating part 430 of the SCS 122 performs an error operation. For instance, the ROM updating part 430 of the SCS 122 displays an error screen on the operations panel 1310 through the ROM updating mode thread of the OCS 126 when the ROM updating part 430 of the SCS 122 is called from the ROM updating mode thread of the SCS 122. Meanwhile, when the ROM updating part 430 of the SCS 122 is called from the rescue mode thread of the SCS 122, the ROM updating part 430 of the SCS 122 stores error information in a log file stored in, for instance, the HDD 1303.

On the other hand, in step S360, the ROM updating part 430 of the SCS 122 refers to the updating target variables, and determines whether the next updating information is set in the updating target variables. If the ROM updating part 430 of the SCS 122 determines that the next updating information is set in the updating target variables (YES in step S360), the ROM updating part 430 of the SCS 122 repeats the operations in and after step S340 If the ROM updating part 430 of the SCS 122 determines that the next updating information is not set in the updating target variables (NO in step S360), the ROM updating part 430 of the SCS 122 proceeds to step S361.

In step S361, the ROM updating part 430 of the SCS 122 deletes the updating information stored in the updating interruption information.

By performing an operation as shown in FIG. 48, data on an area to be updated can be stored in a secondary storage device as an old version, being correlated with a log information file (FIG. 51). According to this configuration, a user can restore one or more programs to a predetermined old version as described below.

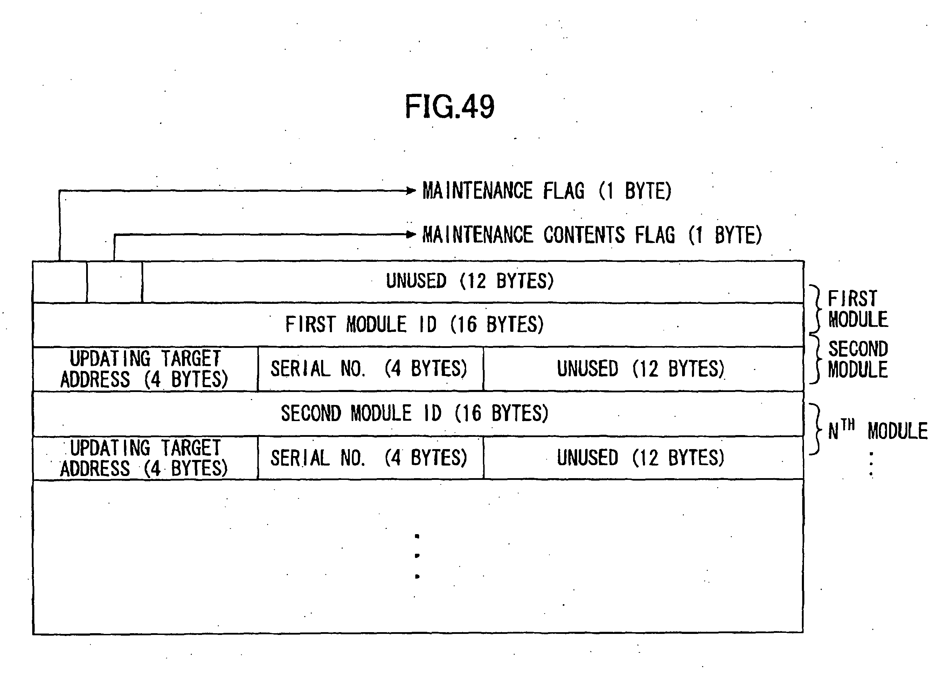

Next, a description is given, with reference to FIG. 49, of a layout of the updating interruption information in the case of storing the updating interruption information in the NVRAM space (FIG. 15) according to the seventh embodiment. FIG. 49 is a diagram for illustrating the layout of the updating -interruption information in the case of storing the updating interruption information in the NVRAM space according to the seventh embodiment.

Referring to FIG. 49, the updating interruption information includes, for instance, a 1-byte maintenance flag, a 1-byte maintenance contents flag, at least one 16-byte module ID, a 4-byte module-related updating target address corresponding to the module ID, and a below-described 4-byte serial number related to the version of the module as shown in FIG. 50.

As described above, in the case of storing the updating interruption information in the HDD 1303 the contents of the updating interruption information shown in FIG. 49 may be included in the updating interruption information file, for instance.

Next, a description is given, with reference to FIG. 50, of a directory and file configuration of the HDD 1303 according to the seventh embodiment. FIG. 50 is a diagram for illustrating the directory and file configuration of the HDD 1303 according to the seventh embodiment.

Referring to FIG. 50, the HDD 1303 has a "store" directory as a directory for retaining factory default data (program) that operates normally. The "store" directory stores normally operating factory default data (program) corresponding to each module forming the applications 130 and the platform 120, and a module information file related to each module.

Further, as shown in FIG. 50, in the HDD 1303, the data (programs) stored in, for instance, step S341 of FIG. 48 and the log information file to which the log information relating to the data is written (FIG. 51) are stored below a "backup" directory.

The data is stored below the "backup" .directory of the HDD 1303 with (module ID) . (serial number) as its name. The log information file is stored as (module ID).log below the "backup" directory of the HDD 1303.

A description is given below, with reference to FIG. 51, of an example of the contents of the log information file. FIG. 51 is a diagram for illustrating the contents of the log information file

Referring to FIG. 51, the log information file includes a stored file riame, a version, and time of last use (time of storage).

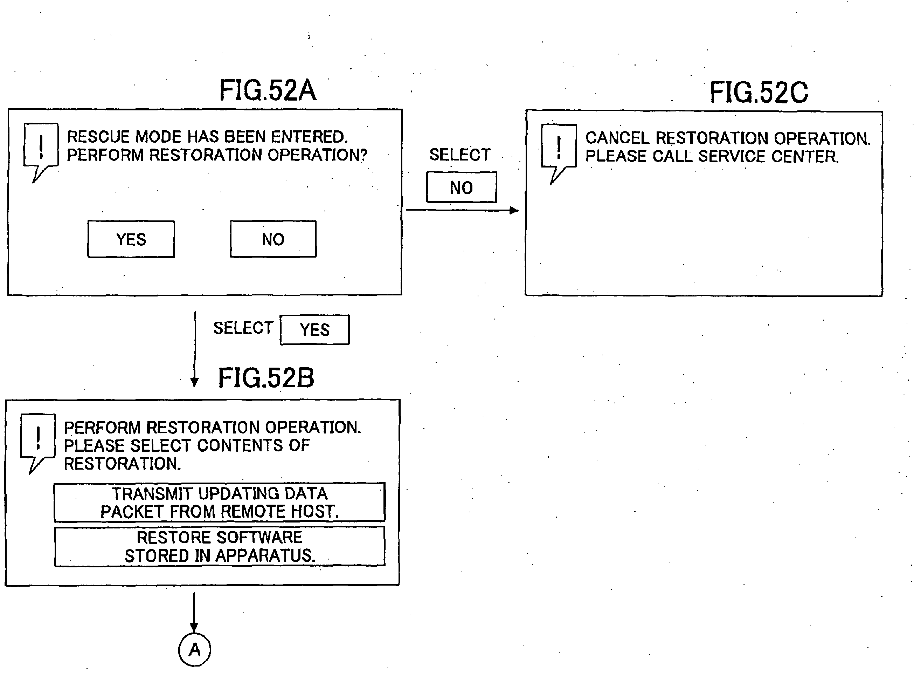

Next, a description is given, with reference to FIGS. 52A through 52G, of restoration menu screens related to the operation of restoring a program to an older (previous) version. FIGS. 52A through 52G show restoration menu screens.

As shown in FIG. 52A, the rescue mode thread of the OCS 126 first displays a screen for determining whether to perform a restoration operation on the operations panel 1310. If the rescue mode thread of the OCS 126 determines that a user has selected YES on the screen of FIG. 52A, the rescue mode thread of the OCS 126 displays a screen for selecting the contents of restoration on the operations panel 1310 as shown in FIG. 52B. If the rescue mode thread of the OCS 126 determines that the user has selected NO on the screen of FIG. 52A, the rescue mode thread of the OCS 126 displays a screen indicating cancellation of the restoration operation on the operations panel 1310 as shown in FIG. 52C.

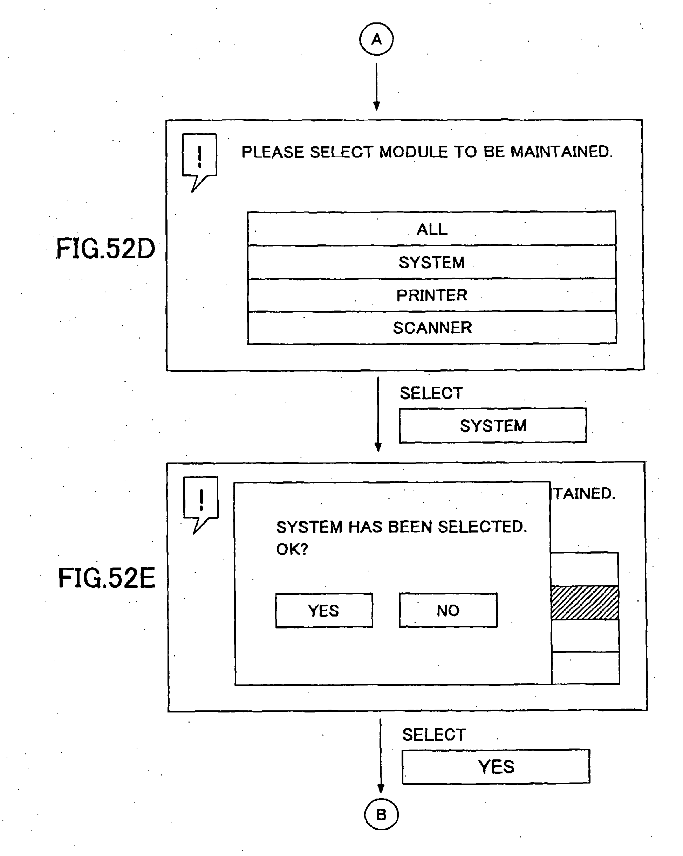

If the rescue mode thread of the OCS 126 determines that the user has selected RESTORE SOFTWARE STORED IN APPARATUS on the screen of FIG. 52B, the rescue mode thread of the OCS 126 displays a screen for selecting a module to be restored on the operations panel 1310 as shown in FIG. 52D. If the rescue mode thread of the OCS 126 determines that the user has selected at least one module on the screen of FIG. 52D, the rescue mode thread of the OCS 126 displays a selected module confirmation screen for determining whether to confirm the selected module on the operations panel 1310 as shown in FIG. 52E.

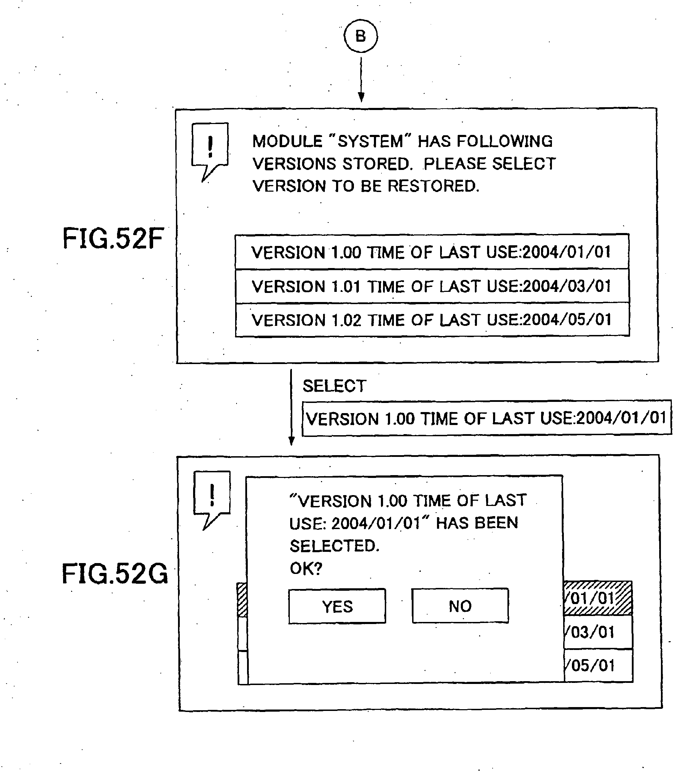

If the rescue mode thread of the OCS 126 determines that the user has selected a YES button on the selected module confirmation screen shown in FIG. 52E, the rescue mode thread of the OCS 126 displays a screen for selecting a version of the corresponding program stored in the multi-function apparatus 100 on the operations panel 1310 as shown in FIG. 52F. If the rescue mode thread of the OCS 126 determines that the user has selected one of the versions, the rescue mode thread of the OCS 126 displays a selected version confirmation screen for determining whether to confirm the selected version on the operations panel 1310 as shown in FIG. 52G.

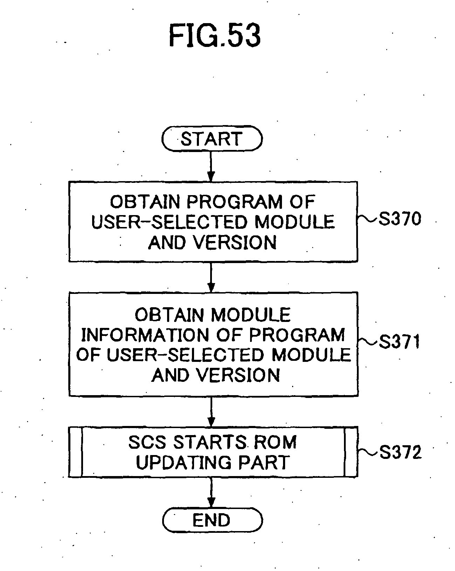

Next, a description is given, with reference to FIG. 53, of an updating data selection operation performed in the rescue mode thread of the SCS 122 according to the seventh embodiment. FIG. 53 is a flowchart for illustrating the updating data selection operation performed in the rescue mode thread of the SCS 122 according to the seventh embodiment.

In step S370, the rescue mode thread of the SCS 122 obtains a program of the user-selected module and version from, for instance, the HDD 1303.

In step S371, the rescue mode thread of the SCS 122 obtains the module information (module ID, updating target address, updating data size, etc.) of the program of the user-selected module and version from, for instance, the HDD 1303.

In step S372, the rescue mode thread of the SCS 122 starts the ROM updating part 430 of the SCS 122.

By obtaining a program of a user-selected module and version, and updating the flash ROM 204 by starting the ROM updating part 430 of the SCS 122 as shown in FIG. 53, the user-selected program can be restored to the state of the user-selected normally operating version.

By performing operations shown in the seventh embodiment, it is possible to restore one or more specified programs to a specified older version in response to a request from a user.

## Claims

1. An image processing apparatus (100) including a program storage part (204) configured to store a program; an updating data reception part (128) configured to receive updating data related to the program stored in the program storage part (204); and a program updating part (430) configured to update the program stored in the program storage part (204) based on the received updating data in a thread of a first mode, the image processing apparatus (100) further including:
an updating interruption determination part (S11, 410) configured to determine presence or absence of interruption of the updating of the program by the program updating part (430) in a previous operation of the information processing apparatus (100);
**characterized by**
an operating system starting part (S17, 410) configured to start (S12, S16) one of a general purpose operating system (121) and a rescue operating system (131) based on a result of the determination by the updating interruption determination part (S11, 410); and
a program restoration part (S20, 430) configured to restore the program stored in the program storage part (204), when said starting of the rescue operating system (131) has been performed,
the program restoration part (S20, 430) restoring the program by restarting the updating of the program or by restoring a pre-updating state of the program,
the program updating part (430) adapted to store the received updating data during the updating of the program;
when the rescue operating system (131) is started, a thread of a second mode is executed so as to determine whether to restore the program by restarting the updating of the program, and if the thread of the second mode determines that the program be restored by restarting the updating of the program, the thread of the second mode obtains the stored updating data and starts the program restoration part (S20, 430) so that the program restoration part (S20, 430) automatically restores the program based on the stored updating data; and
a restricted set of control services (122, 125, 126, 128) is executed when said starting of the rescue operating system (131) has been performed.

2. The apparatus (100) as claimed in claim 1, further **characterized by**:
a pre-updating program storage part (1303) configured to store the program before being updated by the program updating part (430).

3. The apparatus (100) as claimed in claim 1, **characterized in that** the program restoration part (430) replaces the program stored in the program storage part (204) with a program included in the updating data stored in the updating data storage part (1303).

4. The apparatus (100) as claimed in claim 2, **characterized in that** the program restoration part (430) replaces the program stored in the program storage part (204) with the program stored in the pre-updating program storage part (1303).

5. An apparatus (100) as claimed in claim 1, wherein
the updating interruption determination part (S201, 410) is configured to determine presence or absence of rebooting of the information processing apparatus (100);
the operating system starting part (S211, 410) is configured to start the corresponding operating system (131) based on a result of the determination by the updating interruption determination part (S211, 410);
the program restoration part (S250-S257, 430) is configured to restore the programs stored in the program storage part (204), when said starting of the operating system (131) has been performed and;
the program restoration part (S250-S257, 430) is configured to restore the programs by newly obtaining the updating data or by restoring a normally operating state before shipment of the programs.

6. The apparatus (100) as claimed in claim 5, further **characterized by**:
a default program storage part (1303) configured to store the programs before shipment of the information processing apparatus (100).

7. The apparatus (100) as claimed in claim 6, **characterized in that** the program restoration part (430) replaces the programs stored in the program storage part (204) with the programs stored in the default program storage part (1303).

8. The apparatus (100) as claimed in claim 6, **characterized in that** the program restoration part (430) replaces one or more of the programs stored in the program storage part (204) with a corresponding one or more of the programs stored in the default program storage part (1303).

9. The apparatus (100) as claimed in claim 5 or 6, **characterized in that** the program restoration part (430) replaces one or more of the programs stored in the program storage part (204) with corresponding one or more programs included in the updating data newly received by the updating data reception part (128).

10. The apparatus (100) as claimed in claim 5, further **characterized by**:
an updating data storage part (1303) configured to store the received updating data.

11. The apparatus (100) as claimed in claim 6 or 10, further **characterized by**:
a pre-updating program storage part (1303) configured to store the programs before being updated by the program updating part (430).

12. The apparatus (100) as claimed in claim 11, further **characterized by**:
a log information storage part (1303) configured to store log information related to the programs before being updated stored in the pre-updating program storage part (1303),
wherein the program restoration part (430) replaces one or more of the programs stored in the program storage part (204) with a corresponding one or more of the programs before being updated stored in the pre-updating program storage part (1303) based on the log information of the one or more of the programs before being updated.

13. The apparatus (100) as claimed in claim 11 or 12, further **characterized by**:
a timeout determination part (122) configured to determine whether a timeout of a standby state related to the updating data related to the programs stored in the program storage part (204) has occurred,
wherein when the timeout determination part (122) determines that the timeout has occurred, the program restoration part (430) replaces one or more of the programs stored in the program storage part (204) with a corresponding one or more of the programs before shipment of the information processing apparatus (100) stored in the default program storage part (1303) or with a corresponding one or more of the programs before being updated stored in the pre-updating program storage part (1303) based on the log information of the one or more of the programs before being updated.

14. The apparatus (100) as claimed in any of claims 1 to 13, **characterized in that** the information processing apparatus (100) is an image forming apparatus forming an image.

15. A program restoration method in an image processing apparatus (100) including an updating data reception part (128) receiving updating data related to a program stored in a program storage part (204); and a program updating part (430) updating the program stored in the program storage part (204) based on the received updating data, in a thread of a first mode, the method comprising the steps of:
(a) determining presence or absence of interruption of the updating of the program by the program updating part (430) in a previous operation of the information processing apparatus (100);
**characterized by**
(b) starting (S12, S16) one of a general purpose operating system (121) and a rescue operating system (131) based on a result of the determination by said step (a) ; and
(c) restoring the program stored in the program storage part (204), when said starting of the rescue operating system (131) has been performed,
wherein said step (c) restores the program by restarting the updating of the program or by restoring a pre-updating state of the program,
the program updating part (430) stores the received updating data during the updating of the program;
when the rescue operating system (131) is started, a thread of a second mode is executed so as to determine whether to restore the program by restarting the updating of the program, and if the thread of the second mode determines that the program be restored by restarting the updating of the program, the thread of the second mode obtains the stored updating data and starts the program restoration part (S20, 430) so that the program restoration part (S20, 430) automatically restores the program based on the stored updating data; and
a restricted set of control services (122, 125, 126, 128) is executed when said starting of the rescue operating system (131) has been performed.
said step (c) replaces the program stored in the program storage part (204) with the program stored in the pre-updating program storage part (1303).

16. The program restoration method as claimed in claim 15, **characterized in that**:
the image processing apparatus(100) further includes a pre-updating program storage part (1303) storing the program before being updated by the program updating part (430); and

17. A program restoration method according to claim 15, comprising the steps of:
(a) determining presence or absence of rebooting of the information processing apparatus (100);
(b) starting a corresponding operating system (131) based on a result of the determination by said step (a); and
(c) restoring the programs stored in the program storage part (204), when said starting of the operating system (131) has been performed,
wherein said step (c) restores the programs by newly obtaining the updating data or by restoring a normally operating state before shipment of the programs.

18. The program restoration method as claimed in claim 17, **characterized in that**:
the information processing apparatus (100) further includes a default program storage part (1303) storing the programs before shipment of the information processing apparatus (100); and
said step (c) replaces the one or more of the programs stored in the program storage part (204) with a corresponding one or more of the programs stored in the default program storage part (1303).

19. The program restoration method as claimed in claim 17, **characterized in that** said step (c) replaces one or more of the programs stored in the program storage part (204) with corresponding one or more programs included in the updating data newly received by the updating data reception part (128).

20. The program restoration method as claimed in claim 17, **characterized in that**:
the information processing apparatus (100) further includes a pre-updating program storage part (1303) storing the programs before being updated by the program updating part (430); and a log-information storage part (1303) storing log information related to the programs before being updated stored in the pre-updating program storage part (1303); and
said step (c) replaces the one or more of the programs stored in the program storage part (204) with a corresponding one or more of the programs before being updated stored in the pre-updating program storage part (1303) based on the log information of the one or more of the programs before being updated.

21. A computer-readable recording medium storing a program for causing a computer to execute a program restoration method as claimed in any of claims 15 to 20.

## Patentansprüche

1. Bildverarbeitungsvorrichtung (100), umfassend ein Programmspeicherteil (204), das konfiguriert ist zum Speichern eines Programms; ein Aktualisierungsdatenempfangsteil (128), das konfiguriert ist zum Empfangen von Aktualisierungsdaten, die sich auf das im Programmspeicherteil (204) gespeicherte Programm beziehen; und ein Programmaktualisierungsteil (430), das konfiguriert ist zum Aktualisieren des im Programmspeicherteil (204) gespeicherten Programms auf Grundlage der empfangenen Aktualisierungsdaten in einem Thread eines ersten Modus, wobei die Bildverarbeitungsvorrichtung (100) weiterhin umfasst:
ein Aktualisierungsunterbrechungsfeststellungsteil (S11, 410), das so konfiguriert ist, dass es das Vorhandensein oder Nichtvorhandensein einer Unterbrechung der Aktualisierung des Programms durch das Programmaktualisierungsteil (430) in einer vorherigen Operation der Informationsverarbeitungsvorrichtung (100) feststellt;
**gekennzeichnet durch**
ein Betriebssystemstartteil (S17, 410), das konfiguriert ist zum Starten (S12, S16) entweder eines Universalbetriebssystems (121) oder eines Rettungsbetriebssystems (131) auf Grundlage eines Ergebnisses der Feststellung **durch** das Aktualisierungsunterbrechungsfeststellungsteil (S11, 410); und
ein Programmwiederherstellungsteil (S20, 430), das konfiguriert ist zum Wiederherstellen des im Programmspeicherteil (204) gespeicherten Programms, wenn das Starten des Rettungsbetriebssystems (131) durchgeführt worden ist,
wobei
das Programmwiederherstellungsteil (S20, 430) das Programm **durch** Neustarten der Aktualisierung des Programms oder **durch** Wiederherstellen eines Prä-Aktualisierungszustands des Programms wiederherstellt;
das Programmaktualisierungsteil (430) so angepasst ist, dass es die empfangenen Aktualisierungsdaten während der Aktualisierung des Programms speichert;
wenn das Rettungsbetriebssystem (131) gestartet wird, ein Thread eines zweiten Modus ausgeführt wird, um festzustellen, ob das Programm **durch** Neustarten der Aktualisierung des Programms wiederhergestellt werden soll, und falls der Thread des zweiten Modus feststellt, dass das Programm **durch** Neustarten der Aktualisierung des Programms wiederhergestellt werden soll, der Thread des zweiten Modus die gespeicherten Aktualisierungsdaten erhält und das Programmwiederherstellungsteil (S20, 430) startet, so dass das Programmwiederherstellungsteil (S20, 430) das Programm auf Grundlage der gespeicherten Aktualisierungsdaten automatisch wiederherstellt; und
eine begrenzte Gruppe von Steuerungsservices (122, 125, 126, 128) ausgeführt wird, wenn das Starten des Rettungsbetriebssystems (131) durchgeführt worden ist.

2. Vorrichtung (100) nach Anspruch 1, weiterhin **gekennzeichnet durch**:
ein Prä-Aktualisierungsprogrammspeicherteil (1303), das konfiguriert ist zum Speichern des Programms, bevor dieses vom Programmaktualisierungsteil (430) aktualisiert wird.

3. Vorrichtung (100) nach Anspruch 1, **dadurch gekennzeichnet, dass** das Programmwiederherstellungsteil (430) das im Programmspeicherteil (204) gespeicherte Programm durch ein Programm ersetzt, das in den im Aktualisierungsdatenspeicherteil (1303) gespeicherten Aktualisierungsdaten enthalten ist.

4. Vorrichtung (100) nach Anspruch 2, **dadurch gekennzeichnet, dass** das Programmwiederherstellungssteil (430) das im Programmspeicherteil (204) gespeicherte Programm durch das im Prä-Aktualisierungsprogrammspeicherteil (1303) gespeicherte Programm ersetzt.

5. Vorrichtung (100) nach Anspruch 1, wobei
das Aktualisierungsunterbrechungsfeststellungsteil (S201, 410) konfiguriert ist zum Feststellen des Vorhandenseins oder Nichtvorhandenseins eines Reboots der Informationsverarbeitungsvorrichtung (100);
das Betriebssystemstartteil (S211, 410) konfiguriert ist zum Starten des entsprechenden Betriebssystems (131) auf Grundlage eines Ergebnisses der Feststellung durch das Aktualisierungsunterbrechungsfeststellungsteil (S211, 410);
das Programmwiederherstellungsteil (S250-S257, 430) konfiguriert ist zum Wiederherstellen der im Programmspeicherteil (204) gespeicherten Programme, wenn das Starten des Betriebssystems (131) durchgeführt worden ist; und
das Programmwiederherstellungsteil (S250-S257, 430) konfiguriert ist zum Wiederherstellen der Programme durch neues Erhalten der Aktualisierungsdaten oder durch Wiederherstellen eines normalen Betriebszustands vor Auslieferung der Programme.

6. Vorrichtung (100) nach Anspruch 5, weiterhin **gekennzeichnet durch**:
ein Defaultprogrammspeicherteil (1303), das konfiguriert ist zum Speichern der Programme vor Auslieferung der Informationsverarbeitungsvorrichtung (100).

7. Vorrichtung (100) nach Anspruch 6, **dadurch gekennzeichnet, dass** das Programmwiederherstellungsteil (430) die im Programmspeicherteil (204) gespeicherten Programme durch die im Defaultprogrammspeicherteil (1303) gespeicherten Programme ersetzt.

8. Vorrichtung (100) nach Anspruch 6, **dadurch gekennzeichnet, dass** das Programmwiederherstellungsteil (430) ein oder mehrere der im Programmspeicherteil (204) gespeicherten Programme durch ein oder mehrere entsprechende Programme ersetzt, die im Defaultprogrammspeicherteil (1303) gespeichert sind.

9. Vorrichtung (100) nach Anspruch 5 oder 6, **dadurch gekennzeichnet, dass** das Programmwiederherstellungsteil (430) ein oder mehrere der im Programmspeicherteil (204) gespeicherten Programme durch ein oder mehrere entsprechende Programme ersetzt, die in den vom Aktualisierungsdatenempfangsteil (128) neu empfangenen Aktualisierungsdaten enthalten sind.

10. Vorrichtung (100) nach Anspruch 5, weiterhin **gekennzeichnet durch**:
ein Aktualisierungsdatenspeicherteil (1303), das konfiguriert ist zum Speichern der empfangenen Aktualisierungsdaten.

11. Vorrichtung (100) nach Anspruch 6 oder 10, weiterhin **gekennzeichnet durch**:
ein Prä-Aktualisierungsprogrammspeicherteil (1303), das konfiguriert ist zum Speichern der Programme, bevor diese vom Programmaktualisierungsteil (430) aktualisiert werden.

12. Vorrichtung (100) nach Anspruch 11, weiterhin **gekennzeichnet durch**:
ein Loginformationenspeicherteil (1303), das konfiguriert ist zum Speichern von Loginformationen, die in Bezug stehen zu den Programmen, die vor ihrer Aktualisierung im Prä-Aktualisierungsprogrammspeicherteil (1303) gespeichert werden,
wobei das Programmwiederherstellungsteil (430) ein oder mehrere der im Programmspeicherteil (204) gespeicherten Programme **durch** ein oder mehrere entsprechende Programme, die vor ihrer Aktualisierung im Prä-Aktualisierungsprogrammspeicherteil (1303) gespeichert werden, auf Grundlage der Loginformationen des einen oder der mehreren Programme vor dessen bzw. deren Aktualisierung ersetzt.

13. Vorrichtung (100) nach Anspruch 11 oder 12, weiterhin **gekennzeichnet durch**:
ein Auszeitfeststellungsteil (122), das konfiguriert ist zum Feststellen, ob eine Auszeit eines Bereitschaftszustands, der in Bezug zu den Aktualisierungsdaten steht, die in Bezug zu den im Programmspeicherteil (204) gespeicherten Programmen stehen, eingetreten ist,
wobei, wenn das Auszeitfeststellungsteil (122) feststellt, dass die Auszeit eingetreten ist, das Programmwiederherstellungsteil (430) ein oder mehrere der im Programmspeicherteil (204) gespeicherten Programme **durch** ein oder mehrere entsprechende Programme, die vor Auslieferung der Informationsverarbeitungsvorrichtung (100) im Defaultprogrammspeicherteil (1303) gespeichert werden, oder **durch** ein oder mehrere entsprechende Programme, die vor ihrer Aktualisierung im Prä-Aktualisierungsprogrammspeicherteil (1303) gespeichert werden, auf Grundlage der Loginformationen des einen oder der mehreren Programme vor dessen bzw. deren Aktualisierung ersetzt.

14. Vorrichtung (100) nach einem der Ansprüche 1 bis 13, **dadurch gekennzeichnet, dass** die Informationsverarbeitungsvorrichtung (100) eine Bilderzeugungsvorrichtung ist, die ein Bild erzeugt.

15. Programmwiederherstellungsverfahren in einer Bildverarbeitungsvorrichtung (100), umfassend ein Aktualisierungsdatenempfangsteil (128), welches Aktualisierungsdaten empfängt, die in Bezug zu einem in einem Programmspeicherteil (204) gespeicherten Programm stehen; und ein Programmaktualisierungsteil (430), welches das im Programmspeicherteil (204) gespeicherte Programm auf Grundlage der empfangenen Aktualisierungsdaten aktualisiert, in einem Thread eines ersten Modus, wobei das Verfahren die folgenden Schritte umfasst:
(a) Feststellen des Vorhandenseins oder Nichtvorhandenseins einer Unterbrechung der Aktualisierung des Programms durch das Programmaktualisierungsteil (430) in einer vorherigen Operation der Informationsverarbeitungsvorrichtung (100);
**gekennzeichnet durch**
(b) Starten (S12, S16) entweder eines Universalbetriebssystems (121) oder eines Rettungsbetriebssystems (131) auf Grundlage eines Ergebnisses der Feststellung **durch** Schritt (a); und
(c) Wiederherstellen des im Programmspeicherteil (204) gespeicherten Programms, wenn das Starten des Rettungsbetriebssystems (131) durchgeführt worden ist,
wobei Schritt (c) das Programm wiederherstellt **durch** Neustarten der Aktualisierung des Programms oder **durch** Wiederherstellen eines Prä-Aktualisierungszustands des Programms,
das Programmaktualisierungsteil (430) die empfangenen Aktualisierungsdaten während der Aktualisierung des Programms speichert;
wenn das Rettungsbetriebssystem (131) gestartet wird, ein Thread eines zweiten Modus ausgeführt wird, um festzustellen, ob das Programm **durch** Neustarten der Aktualisierung des Programms wiederhergestellt werden soll, und falls der Thread des zweiten Modus feststellt, dass das Programm **durch** Neustarten der Aktualisierung des Programms wiederhergestellt werden soll, der Thread des zweiten Modus die gespeicherten Aktualisierungsdaten erhält und das Programmwiederherstellungsteil (S20, 430) startet, so dass das Programmwiederherstellungssteil (S20, 430) das Programm auf Grundlage der gespeicherten Aktualisierungsdaten automatisch wiederherstellt; und
eine begrenzte Gruppe von Steuerungsservices (122, 125, 126, 128) ausgeführt wird, wenn das Starten des Rettungsbetriebssystems (131) durchgeführt worden ist.

16. Programmwiederherstellungsverfahren nach Anspruch 15, **dadurch gekennzeichnet, dass**:
die Bildverarbeitungsvorrichtung (100) weiterhin ein Prä-Aktualisierungsprogrammspeicherteil (1303) umfasst, welches das Programm speichert, bevor dieses vom Programmaktualisierungsteil (430) aktualisiert wird;
Schritt (c) das im Programmspeicherteil (204) gespeicherte Programm durch das im Prä-Aktualisierungsprogrammspeicherteil (1303) gespeicherte Programm ersetzt.

17. Programmwiederherstellungsverfahren nach Anspruch 15, umfassend die folgenden Schritte:
(a) Feststellen des Vorhandenseins oder Nichtvorhandenseins eines Reboots der Informationsverarbeitungsvorrichtung (100);
(b) Starten eines entsprechenden Betriebssystems (131) auf Grundlage eines Ergebnisses der Feststellung durch Schritt (a); und
(c) Wiederherstellen der im Programmspeicherteil (204) gespeicherten Programme, wenn das Starten des Betriebssystems (131) durchgeführt worden ist,
wobei Schritt (c) die Programme wiederherstellt durch neues Erhalten der Aktualisierungsdaten oder durch Wiederherstellen eines normalen Betriebszustandes vor Auslieferung der Programme.

18. Programmwiederherstellungsverfahren nach Anspruch 17, **dadurch gekennzeichnet, dass**:
die Informationsverarbeitungsvorrichtung (100) weiterhin ein Defaultprogrammspeicherteil (1303) umfasst, das die Programme vor Auslieferung der Informationsverarbeitungsvorrichtung (100) speichert; und
Schritt (c) das eine oder die mehreren der im Programmspeicherteil (204) gespeicherten Programme durch ein oder mehrere der im Defaultprogrammspeicherteil (1303) gespeicherten Programme ersetzt.

19. Programmwiederherstellungsverfahren nach Anspruch 17, **dadurch gekennzeichnet, dass** Schritt (c) ein oder mehrere der im Programmspeicherteil (204) gespeicherten Programme durch ein oder mehrere Programme ersetzt, die in den vom Aktualisierungsdatenempfangsteil (128) neu empfangenen Aktualisierungsdaten enthalten sind.

20. Programmwiederherstellungsverfahren nach Anspruch 17, **dadurch gekennzeichnet, dass**:
die Informationsverarbeitungsvorrichtung (100) weiterhin ein Prä-Aktualisierungsprogrammspeicherteil (1303) umfasst, das die Programme vor deren Aktualisierung durch das Programmaktualisierungsteil (430) speichert; und ein Loginformationenspeicherteil (1303), welches Loginformationen speichert, die zu den Programmen in Bezug stehen, die vor ihrer Aktualisierung im Prä-Aktualisierungsprogrammspeicherteil (1303) gespeichert werden; und
Schritt (c) das eine oder die mehreren der im Programmspeicherteil (204) gespeicherten Programme durch ein oder mehrere entsprechende Programme, die vor ihrer Aktualisierung im Prä-Aktualisierungsprogrammspeicherteil (1303) gespeichert werden, auf Grundlage der Loginformationen des einen oder der mehreren der Programme vor dessen bzw. deren Aktualisierung ersetzt.

21. Computerlesbares Aufzeichnungsmedium, das ein Programm speichert, das einen Computer zur Ausführung eines Programmwiederherstellungsverfahrens nach einem der Ansprüche 15 bis 20 veranlasst.

## Revendications

1. Appareil de traitement d'image (100) comprenant une partie de stockage de programme (204) configurée pour stocker un programme, une partie de réception de données de mise à jour (128) configurée pour recevoir des données de mise à jour liées au programme stocké dans la partie de stockage de programme (204) et une partie de mise à jour de programme (430) configurée pour mettre à jour le programme stocké dans la partie de stockage de programme (204) sur la base des données de mise à jour reçues dans un fil d'un premier mode, l'appareil de traitement d'image (100) comprenant en outre :
une partie de détermination d'interruption de mise à jour (S11, 410) configurée pour déterminer la présence ou l'absence d'interruption de la mise à jour du programme par la partie de mise à jour de programme (430) dans une opération précédente de l'appareil de traitement d'informations (100) ;
**caractérisé par**
une partie de démarrage de système d'exploitation (S17, 410) configurée pour démarrer (S12, S16) l'un d'un système d'exploitation à applications multiples (121) et d'un système d'exploitation de sauvegarde (131) sur la base d'un résultat de la détermination par la partie de détermination d'interruption de mise à jour (S11, 410) ; et
une partie de restauration de programme (S20, 430) configurée pour restaurer le programme stocké dans la partie de stockage de programme (204) lorsque ledit démarrage du système d'exploitation de sauvegarde (131) a été effectué,
la partie de restauration de programme (S20, 430) restaurant le programme en redémarrant la mise à jour du programme ou en restaurant un état de pré-mise à jour du programme,
la partie de mise à jour de programme (430) étant adaptée pour stocker les données de mise à jour reçues pendant la mise à jour du programme ;
lorsque le système d'exploitation de sauvegarde (131) est démarré, un fil d'un second mode est exécuté de façon à déterminer s'il faut restaurer le programme en redémarrant la mise à jour du programme, et si le fil du second mode détermine que le programme doit être restauré en redémarrant la mise à jour du programme, le fil du second mode obtient les données de mise à jour stockées et démarre la partie de restauration de programme (S20, 430) de façon à ce que la partie de restauration de programme (520, 430) restaure automatiquement le programme sur la base des données de mise à jour stockées ; et
un ensemble restreint de services de contrôle (122, 125, 126, 128) sont exécutés lorsque ledit démarrage du système d'exploitation de sauvegarde (131) a été effectué.

2. Appareil (100) selon la revendication 1, **caractérisé en outre par** :
une partie de stockage de programme de pré-mise à jour (1303) configurée pour stocker le programme avant qu'il soit mis à jour par la partie de mise à jour de programme (430).

3. Appareil (100) selon la revendication 1, **caractérisé en ce que** la partie de restauration de programme (430) remplace le programme stocké dans la partie de stockage de programme (204) par un programme compris dans les données de mise à jour stockées dans la partie de stockage de données de mise à jour (1303).

4. Appareil (100) selon la revendication 2, **caractérisé en ce que** la partie de restauration de programme (430) remplace le programme stocké dans la partie de stockage de programme (204) par le programme stocké dans la partie de stockage de programme de pré-mise à jour (1303).

5. Appareil (100) selon la revendication 1, dans lequel
la partie de détermination d'interruption de mise à jour (S201, 410) est configurée pour déterminer la présence ou l'absence d'un réamorçage de l'appareil de traitement d'informations (100) ;
la partie de démarrage de système d'exploitation (S211, 410) est configurée pour démarrer le système d'exploitation correspondant (131) sur la base d'un résultat de la détermination par la partie de détermination d'interruption de mise à jour (S211, 410) ;
la partie de restauration de programmes (S250-S257, 430) est configurée pour restaurer les programmes stockés dans la partie de stockage de programmes (204), lorsque ledit démarrage du système d'exploitation (131) a été effectué, et ;
la partie de restauration de programmes (S250-257, 430) est configurée pour restaurer les programmes en obtenant nouvellement les données de mise à jour ou en restaurant un état de fonctionnement normal avant l'envoi des programmes.

6. Appareil (100) selon la revendication 5, **caractérisé en outre par** :
une partie de stockage de programmes par défaut (1303) configurée pour stocker les programmes avant l'envoi de l'appareil de traitement d'informations (100).

7. Appareil (100) selon la revendication 6, **caractérisé en ce que** la partie de restauration de programmes (430) remplace les programmes stockés dans la partie de stockage de programmes (204) par les programmes stockés dans la partie de stockage de programmes par défaut (1303).

8. Appareil (100) selon la revendication 6, **caractérisé en ce que** la partie de restauration de programmes (430) remplace un ou plusieurs des programmes stockés dans la partie de stockage de programmes (204) par un ou plusieurs des programmes stockés dans la partie de stockage de programmes par défaut (1303).

9. Appareil (100) selon la revendication 5 ou 6, **caractérisé en ce que** la partie de restauration de programmes (430) remplace un ou plusieurs des programmes stockés dans la partie de stockage de programmes (204) par un ou plusieurs programmes compris dans les données de mise à jour nouvellement reçues par la partie de réception de données de mise à jour (128).

10. Appareil (100) selon la revendication 5, **caractérisé en outre par** :
une partie de stockage de données de mise à jour (1303) configurée pour stocker les données de mise à jour reçues.

11. Appareil (100) selon la revendication 6 ou 10, **caractérisé en outre par** :
une partie de stockage de programmes de pré-mise à jour (1303) configurée pour stocker les programmes avant qu'ils soient mis à jour par la partie de mise à jour de programmes (430).

12. Appareil (100) selon la revendication 11, **caractérisé en outre par** :
une partie de stockage d'informations de journal (1303) configurée pour stocker des informations de journal liées aux programmes avant qu'ils soient mis à jour stockés dans la partie de stockage de programmes de pré-mise à jour (1303),
dans lequel la partie de restauration de programmes (430) remplace un ou plusieurs des programmes stockés dans la partie de stockage de programmes (204) par un ou plusieurs des programmes correspondants avant qu'ils soient mis à jour stockés dans la partie de stockage de programmes de pré-mise à jour (1303) sur la base des informations de journal des un ou plusieurs des programmes avant qu'ils soient mis à jour.

13. Appareil (100) selon la revendication 11 ou 12, **caractérisé en outre par** :
une partie de détermination de dépassement de temps (122) configurée pour déterminer si un dépassement de temps d'un état de veille lié aux données de mise à jour liées aux programmes stockés dans la partie de stockage de programmes (204) a eu lieu,
dans lequel lorsque la partie de détermination de dépassement de temps (122) détermine que le dépassement de temps a eu lieu, la partie de restauration de programmes (430) remplace un ou plusieurs des programmes stockés dans la partie de stockage de programmes (204) par un ou plusieurs des programmes correspondants avant l'envoi de l'appareil de traitement d'informations (100) stockés dans la partie de stockage de programmes par défaut (1303) ou par un ou plusieurs des programmes correspondants avant qu'ils soient mis à jour stockés dans la partie de stockage de programmes de pré-mise à jour (1303) sur la base des informations de journal des un ou plusieurs des programmes avant qu'ils soient mis à jour.

14. Appareil (100) selon l'une quelconque des revendications 1 à 13, **caractérisé en ce que** l'appareil de traitement d'informations (100) est un appareil de formation d'image formant une image.

15. Procédé de restauration de programme dans un appareil de traitement d'image (100) comprenant une partie de réception de données de mise à jour (128) recevant des données de mise à jour liées à un programme stocké dans une partie de stockage de programme (204), et une partie de mise à jour de programme (430) mettant à jour le programme stocké dans la partie de stockage de programme (204) sur la base des données de mise à jour reçues, dans un fil d'un premier mode, le procédé comprenant les étapes consistant à :
(a) déterminer la présence ou l'absence d'interruption de la mise à jour du programme par la partie de mise à jour de programme (430) dans une opération précédente de l'appareil de traitement d'informations (100) ;
**caractérisé par** le fait de
(b) démarrer (S12, S16) l'un d'un système d'exploitation à applications multiples (121) et d'un système d'exploitation de sauvegarde (131) sur la base d'un résultat de la détermination par ladite étape (a) ; et de
(c) restaurer le programme stocké dans la partie de stockage de programme (204) lorsque ledit démarrage du système d'exploitation de sauvegarde (131) a été effectué,
dans lequel ladite étape (c) restaure le programme en redémarrant la mise à jour du programme ou en restaurant un état de pré-mise à jour du programme,
la partie de mise à jour de programme (430) stocke les données de mise à jour reçues pendant la mise à jour du programme ;
lorsque le système d'exploitation de sauvegarde (131) est démarré, un fil d'un second mode est exécuté de façon à déterminer s'il faut restaurer le programme en redémarrant la mise à jour du programme, et si le fil du second mode détermine que le programme doit être restauré en redémarrant la mise à jour du programme, le fil du second mode obtient les données de mise à jour stockées et démarre la partie de restauration de programme (S20, 430) de façon à ce que la partie de restauration de programme (S20, 430) restaure automatiquement le programme sur la base des données de mise à jour stockées ; et
un ensemble restreint de services de contrôle (122, 125, 126, 128) sont exécutés lorsque ledit démarrage du système d'exploitation de sauvegarde (131) a été effectué.

16. Procédé de restauration de programme selon la revendication 15, **caractérisé en ce que** :
l'appareil de traitement d'image (100) comprend en outre une partie de stockage de programme de pré-mise à jour (1303) stockant le programme avant qu'il soit mis à jour par la partie de mise à jour de programme (430) ; et
ladite étape (c) remplace le programme stocké dans la partie de stockage de programme (204) par le programme stocké dans la partie de stockage de programme de pré-mise à jour (1303).

17. Procédé de restauration de programmes selon la revendication 15, comprenant les étapes consistant à :
(a) déterminer la présence ou l'absence d'un réamorçage de l'appareil de traitement d'informations (100) ;
(b) démarrer un système d'exploitation correspondant (131) sur la base d'un résultat de la détermination par ladite étape (a) ; et
(c) restaurer les programmes stockés dans la partie de stockage de programmes (204), lorsque ledit démarrage du système d'exploitation (131) a été effectué,
dans lequel ladite étape (c) restaure les programmes en obtenant nouvellement les données de mise à jour ou en restaurant un état de fonctionnement normal avant l'envoi des programmes.

18. Procédé de restauration de programmes selon la revendication 17, **caractérisé en ce que** :
l'appareil de traitement d'informations (100) comprend en outre une partie de stockage de programmes par défaut (1303) stockant les programmes avant l'envoi de l'appareil de traitement d'informations (100) ; et
ladite étape (c) remplace les un ou plusieurs des programmes stockés dans la partie de stockage de programmes (204) par un ou plusieurs des programmes correspondants stockés dans la partie de stockage de programmes par défaut (1303).

19. Procédé de restauration de programmes selon la revendication 17, **caractérisé en ce que** ladite étape (c) remplace un ou plusieurs des programmes stockés dans la partie de stockage de programmes (204) par un ou plusieurs programmes correspondants compris dans les données de mise à jour nouvellement reçues par la partie de réception de données de mise à jour (128).

20. Procédé de restauration de programmes selon la revendication 17, **caractérisé en ce que** :
l'appareil de traitement d'informations (100) comprend en outre une partie de stockage de programmes de pré-mise à jour (1303) stockant les programmes avant qu'ils soient mis à jour par la partie de mise à jour de programmes (430), et une partie de stockage d'informations de journal (1303) stockant des informations de journal liées aux programmes avant qu'ils soient mis à jour stockés dans la partie de stockage de programmes de pré-mise à jour (1303) ; et
ladite étape (c) remplace les un ou plusieurs des programmes stockés dans la partie de stockage de programmes (204) par un ou plusieurs des programmes correspondants avant qu'ils soient mis à jour stockés dans la partie de stockage de programmes de pré-mise à jour (1303) sur la base des informations de journal des un ou plusieurs des programmes avant qu'ils soient mis à jour.

21. Support d'enregistrement lisible par ordinateur stockant un programme pour amener un ordinateur à exécuter un procédé de restauration de programmes selon l'une quelconque des revendications 15 à 20.
